# EUROPÄISCHE PATENTSCHRIFT

(11) **EP 2 417 425 B1**
(45) Veröffentlichungstag und Bekanntmachung des Hinweises auf die Patenterteilung: **14.08.2019**
(21) Anmeldenummer: 10709478.1
(22) Anmeldetag: 11.03.2010
(51) Int. Cl.: G01N 11/16, G01F 15/02, G01F 1/84

(54) **MESSSYSTEM FÜR IN EINER ROHRLEITUNG STRÖMENDE MEDIEN**
MEASURING SYSTEM FOR MEDIA WHICH FLOW IN A TUBE CONDUIT
SYSTÈME DE MESURE POUR DES FLUIDES S'ÉCOULANT DANS UNE CONDUITE

(30) Priorität: 11.03.2009 DE 102009001472; 09.07.2009 DE 102009027580
(43) Veröffentlichungstag der Anmeldung: 15.02.2012
(73) Patentinhaber: Endress+Hauser Flowtec AG, 4153 Reinach (BL) (CH)
(72) Erfinder: ANKLIN-IMHOF, Martin, 4143 Dornach (CH); BITTO, Ennio, 4147 Aesch (CH); HUBER, Christof, 3012 Bern (CH); KIRST, Michael, 79539 Lörrach (DE); RIEDER, Alfred, 84032 Landshut (DE)
(74) Vertreter: Andres, Angelika Maria
(86) Internationale Anmeldenummer: PCT/EP2010/053127
(87) Internationale Veröffentlichungsnummer: WO 2010/103080

(56) Entgegenhaltungen:
- EP-A1- 0 119 638
- EP-A1- 2 159 552
- DE-A1-102004 030 392
- US-A- 5 661 232
- US-A1- 2002 174 730

## Beschreibung

Die Erfindung betrifft ein Meßsystem zum Messen einer Viskosität und/oder einer Reynoldszahl eines in einer Rohrleitung strömenden Mediums, insb. eine wäßrige Flüssigkeit, einem Schlamm, einer Paste oder einem anderen strömungsfähigen Stoff, mit einem Meßwandler vom Vibrationstyp sowie einer daran angeschlossenen Umformer-Elektronik.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien oftmals solche als In-Line-Meßgeräte in Kompaktbauweise ausgebildeten Meßsysteme verwendet, die mittels eines vom Medium durchströmten Meßwandlers vom Vibrationstyp und einer daran angeschlossenen Umformer-Elektronik, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, z.T. auch als multivariabler Coriolis-Massedurchfluß-/Viskositätmesser oder Coriolis-Massedurchfluß-/ Dichte-/Viskositätmesser ausgebildete, Meßwandler sind z.B. in der EP-A 1 001 254, der EP-A 553 939, der US-A 47 93 191, der US-A 2002/0157479, der US-A 2006/0150750, der US-A 2007/0151368, US-A 2010/0050783, der US-A 53 70 002, der US-A 56 02 345, der US-A 57 96 011, der US-B 63 08 580, der US-B 64 15 668, der US-B 67 11 958, der US-B 69 20 798, der US-B 71 34 347, der US-B 73 92 709, der WO-A 96/08697, der WO-A 03/027616, der WO-A 2008/059262, der WO-A 2009/120222 oder der WO-A 2009/120223 ausführlich und detailliert beschrieben.

Jeder der Meßwandler weist ein Aufnehmer-Gehäuse auf, von dem ein einlaßseitiges erstes Gehäuseende zumindest anteilig mittels eines zwei oder vier jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines zwei oder vier jeweils voneinander beabstandeten Strömungsöffnungen aufweisenden zweiten Strömungsteilers gebildet sind. Bei zumindest einigen der in der US-A 56 02 345, der US-A 57 96 011, der US-B 73 50 421, oder der US-A 2007/0151368 gezeigten Meßwandlern umfaßt das Aufnehmer-Gehäuse ein eher dickwandiges kreiszylindrisches Rohrsegment, das zumindest ein Mittelsegment des Aufnehmer-Gehäuses bildet.

Zum Führen des zumindest zeitweise strömenden Mediums umfassen die Meßwandler desweiteren jeweils wenigstens zwei strömungstechnisch parallel geschaltete - jeweils gerade oder jeweils gleichermaßen gekrümmte - Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßwandlers an ein dem Zuführen von Medium zum bzw. dem Abführen von Medium vom Meßwandler dienendes Rohrsegment der Rohrleitung auf.

Die Meßrohre bekannter Meßsystem der vorgenannten Art werden zum Erzeugen oben genannter Reaktionskräfte, angetrieben von einer dem Erzeugen bzw. Aufrechterhalten von mechanischen Schwingungen der Meßrohre - hier von Biegeschwingungen um eine das jeweilige erste und zweite Meßrohrende imaginär verbindende gedachte Schwingungsachse - im sogenannten Antriebs- oder Nutzmode dienenden Erregeranordnung, im Betrieb vibrieren gelassen. Die Schwingungen im Nutzmode sind, nicht zuletzt auch bei Verwendung des Meßwandlers in als Coriolis-Massedurchfluß- und/oder Dichte-Meßgeräten ausgebildeten Meßsystemen, als laterale BiegeSchwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung im Falle gerader Meßrohre derart ausgebildet, daß damit die beiden Meßrohre im Nutzmode zumindest anteilig - zumeist aber überwiegend - zu gegenphasigen Biegeschwingungen in einer gemeinsamen Schwingungsebene differentiell - also durch Eintrag gleichzeitig entlang einer gemeinsamen Wirkungslinie, jedoch in entgegengesetzter Richtung wirkender Erregerkräfte mittels wenigstens eines lediglich an den beiden Meßrohren angelenkten Schwingungserregers - anregbar sind. Wie u.a. aus der erwähnten US-A 2006/0150750 ersichtlich kann basierend auf gegenphasigen Biegeschwingungen zweier Meßrohre neben Massendurchfluß und Dichte auch die Viskosität des im Meßwandler geführten Mediums ermittelt werden, etwa basierend auf einer von der Umformer-Elektronik aus in die Erregeranordnung eingespeisten, der Überwindung der nicht zuletzt auch vom in den Meßrohren befindlichen Medium verursachten Dämpfung der Meßrohrschwingungen dienenden elektrischen Erregerleistung..

Zum Erfassen von Vibrationen, insb. von mittels der Erregeranordnung angeregten Schwingungen, der Meßrohre und zum Erzeugen von als Vibrationen repräsentierende Primärsignale des Meßwandlers dienenden Schwingungsmeßsignalen weisen die Meßwandler ferner jeweils eine auf relative Bewegungen der Meßrohre reagierende, zumeist ebenfalls elektrodynamische Sensoranordnung auf. Typischerweise ist die Sensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird die vorbeschriebene, mittels der wenigstens zwei Meßrohre gebildete Rohranordnung mit der daran jeweils anteilig gehalterten Erreger- sowie Sensoranordnung des Meßwandlers mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine momentane natürliche Eigen- bzw. Resonanzfrequenz der Rohranordnung gewählt, die wiederum im wesentlichen sowohl von Größe, Form und Material der Meßrohre als auch von einer momentanen Dichte des Mediums abhängig ist. Infolge schwankender Dichte des zu messenden Mediums und/oder infolge von im Betrieb vorgenommen Mediumswechseln ist die Nutz-Schwingungsfrequenz im Betrieb des Meßwandlers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer freie Schwinglänge der Meßrohre und damit einhergehend zum Justieren des Nutzfrequenzbandes umfassen Meßwandler der vorbeschriebenen Art ferner zumeist wenigstens ein einlaßseitiges Kopplerelement zum Bilden von einlaßseitigen Schwingungsknoten für gegenphasige Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegenphasige Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gerader Meßrohre entspricht dabei ein minimaler Abstand zwischen einlaßseitigem und auslaßseitigem - insoweit mit zur Rohranordnung gehörigen - Kopplerelementen der freien Schwinglänge der Meßrohre. Mittels der Kopplerelementen kann zudem auch eine Schwingungsgüte der Rohranordnung wie auch die Empfindlichkeit des Meßwandlers insgesamt beeinflußt werden, in der Weise, daß für eine minimal geforderte Empfindlichkeit des Meßwandlers zumindest eine minimale freie Schwinglänge bereitzustellen ist.

Die Entwicklung auf dem Gebiet der Meßwandler vom Vibrationstyp hat inzwischen einen Stand erreicht, daß moderne Meßwandler der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßwandler in der Praxis für Anwendungen mit Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Aufgrund der hohen Bandbreite ihrer Einsatzmöglichkeiten werden industrietaugliche Meßwandler vom Vibrationstyp mit nominellen Nennweiten (entspricht dem Kaliber der an den Meßwandler anzuschließenden Rohrleitung bzw. dem Kaliber des Meßwandlers gemessen am Anschlußflansch) angeboten, die in einem Nennweitenbereich zwischen 1 mm und 250 mm liegen und bei maximaler nomineller Massendurchflußrate 2200 t/h jeweils für Druckverluste von weniger als 1 bar spezifiziert sind. Ein Kaliber der Meßrohre liegt hierbei etwa in einem Bereich zwischen 80 mm und 100 mm.

Wie bereits erwähnt, kann mit Meßsystemen mit Biegeschwingungen ausführenden Meßrohren auch die Viskosität bzw. auch davon abhängige Meßgrößen, wie etwa die Reynoldszahl, ermittelt werden. basierend auf der Viskosität zwar auch mit Biegeschwingungen meßbar, vgl. auch US-A 2006/0150750, allerdings kann bei dieser Methode, nicht zuletzt auch infolge der zumeist sehr geringen Amplitude der Nutz-Schwingungen, die Empfindlichkeit des Meßwandlers eine gewisse Abhängigkeit von nomineller Nennweite aufweisen, und zwar derart, daß die Empfindlichkeit mit zunehmender nomineller Nennweite abnimmt. Infolgedessen kann auch die Meßgenauigkeit mit zunehmender nomineller Nennweite geringer werden bzw. ist die jeweilige Umformer-Elektronik hinsichtlich Signalverarbeitungstechnik und Rechenleistung vor erhöhte Anforderungen gestellt. Trotzdem inzwischen Meßwandler auch zum Zwecke der Messung der Viskosität für den Einsatz in Rohrleitungen mit sehr hohen Massendurchflußraten und damit einhergehend sehr großem Kaliber von über 50 mm angeboten werden, besteht durchaus ein erhebliches Interesse daran, Meßwandler von hoher Präzision und niedrigem Druckverlust auch für Viskositätsmessungen bei noch größeren Rohrleitungskaliber, etwa 100 mm oder mehr, bzw. Massendurchflußraten, von 1200 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßwandlerkonzepte dazu, daß die, insb. den gewünschten Schwingungseigenschaften, der erforderlichen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßwandlers, exorbitant hohe Ausmaße annehmen würde. Damit einhergehend nimmt zwangsläufig auch die Leermasse des Meßwandlers zu, wobei konventionelle Meßwandler großer Nennweite bereits mit einer Leermasse von etwa 400 kg realisiert werden. Untersuchungen, die für Meßwandler mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßwandlers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßwandler herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

Ausgehend vom oben genannten Stand der Technik besteht daher eine Aufgabe der Erfindung darin, einen für die präzise Messung von Viskosität bzw. Reynoldszahl geeigneten der Meßwandler anzugeben, der auch bei großen Massendurchflußraten von mehr als 1200 t/h und der damit einhergehend großen nominellen Nennweite von über 100 mm eine hohe Meßgenauigkeit bei möglichst kompakter Bauweise aufweist.

Zur Lösung der Aufgabe besteht die Erfindung in einem Meßsystem für ein in einer Rohrleitung strömendes Medium, beispielsweise eine wäßrige Flüssigkeit, einem Schlamm, einer Paste oder einem anderen strömungsfähigen Stoff. Das, etwa als Kompakt-Meßgerät und/oder als Coriolis-Massendurchfluß-/Viskosität-Meßgerät ausgebildete Meßsystem umfaßt dafür einen im Betrieb vom Medium durchströmten Meßwandler vom Vibrationstyp zum Erzeugen von von einer Viskosität des strömenden Mediums und/oder von einer Reynoldszahl des strömenden Mediums abhängigen Schwingungssignalen sowie eine mit dem Meßwandler elektrisch gekoppelte Umformer-Elektronik zum Ansteuern des Meßwandlers und zum Auswerten von vom Meßwandler gelieferten Schwingungssignalen. Der Meßwandler umfaßt ein, beispielsweise im wesentlichen rohrförmiges und/oder außen kreiszylindrisches, Aufnehmer-Gehäuse, von dem ein einlaßseitiges erstes Gehäuseende mittels eines genau vier jeweils voneinander beabstandeten, beispielsweise kreiszylindrische, kegelförmige oder konusförmige, Strömungsöffnungen aufweisenden einlaßseitigen ersten Strömungsteiler und ein auslaßseitiges zweites Gehäuseende mittels eines genau vier jeweils voneinander beabstandeten, beispielsweise kreiszylindrische, kegelförmige oder konusförmige, Strömungsöffnungen aufweisenden auslaßseitigen zweiten Strömungsteilers (20₂) gebildet sind, genau vier unter Bildung strömungstechnisch parallel geschalteter Strömungspfade an die, beispielsweise baugleichen, Strömungsteiler angeschlossene, beispielsweise lediglich mittels nämlicher Strömungsteiler im Aufnehmer-Gehäuse schwingfähig gehalterte und/oder baugleiche und/oder zueinander zumindest paarweise parallelen, gerade Meßrohre zum Führen von strömendem Medium, sowie eine, beispielsweise mittels elektro-dynamischer Schwingungserreger gebildete, elektro-mechanische Erregeranordnung zum Anregen und Aufrechterhalten von mechanischen Schwingungen, beispielsweise von Torsions-/ Biegeschwingungen, der vier Meßrohre. Von den vier, insb. hinsichtlich Form, Größe und Material baugleichen, Meßrohren münden ein, beispielsweise kreiszylindrisches, erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers, ein, beispielsweise kreiszylindrisches, zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein, beispielsweise kreiszylindrisches, drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers mündet und ein, beispielsweise kreiszylindrisches, viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. Darüberhinaus speist die Umformer-Elektronik mittels eines, beispielsweise mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten ersten elektrischen Treibersignals, beispielsweise mit einer veränderlichen maximalen Spannungshöhe und/oder einer veränderlichen maximalen Stromstärke, elektrische Erregerleistung in die Erregeranordnung ein, während die Erregeranordnung die, nicht zuletzt auch von einer Spannungshöhe und einer Stromstärke des ersten Treibersignals abhängige, elektrische Erregerleistung zumindest zeitweise zumindest anteilig sowohl in Torsionsschwingungen des ersten Meßrohrs und zu den Torsionsschwingungen des ersten Meßrohrs gegengleiche Torsionsschwingungen des zweiten Meßrohrs als auch in Torsionsschwingungen des dritten Meßrohrs und zu den Torsionsschwingungen des dritten Meßrohrs gegengleiche Torsionsschwingungen des vierten Meßrohrs wandelt.

Nach einer ersten Ausgestaltung der Erfindung ist ferner vorgesehen, daß die Erregeranordnung elektrische Erregerleistung in der Weise in Torsionsschwingungen des ersten Meßrohrs und zu den Torsionsschwingungen des ersten Meßrohrs gegengleiche Torsionsschwingungen des zweiten Meßrohrs als auch in Torsionsschwingungen des dritten Meßrohrs und zu den Torsionsschwingungen des dritten Meßrohrs gegengleiche Torsionsschwingungen des vierten Meßrohrs wandelt, daß gleichzeitig sowohl ein mittiges Rohrsegment des ersten Meßrohrs Drehschwingungen um eine zu einem Querschnitt nämlichen Rohrsegments senkrechte gedachte Torsionsschwingungsachse und ein mittiges Rohrsegment des zweiten Meßrohrs Drehschwingungen um eine zu einem Querschnitt nämlichen Rohrsegments senkrechte gedachte Torsionsschwingungsachse als auch ein mittiges Rohrsegment des dritten Meßrohrs Drehschwingungen um eine zu einem Querschnitt nämlichen Rohrsegments senkrechte gedachte Torsionsschwingungsachse und ein mittiges Rohrsegment des vierten Meßrohrs Drehschwingungen um eine zu einem Querschnitt nämlichen Rohrsegments senkrechte gedachte Torsionsschwingungsachse ausführen, und/oder daß gleichzeitig jedes der Meßrohre Torsionsschwingungen in einem einen einzigen Schwingungsbauch aufweisenden Torsionsschwingungsgrundmode ausführt.

Nach einer zweiten Ausgestaltung der Erfindung ist ferner vorgesehen, daß die Rohranordnung so ausgebildet ist, daß sie eine erste gedachte Längsschnittebene, in der sowohl eine Meßrohr-Längsachse des ersten Meßrohrs, die dessen erstes und zweites Meßrohrende imaginär verbindet, als auch eine Meßrohr-Längsachse des zweiten Meßrohrs, die dessen erstes und zweites Meßrohrende imaginär verbindet und parallel zur Meßrohr-Längsachse des ersten Meßrohrs ist, verlaufen, und eine von der ersten gedachte Längsschnittebene beabstandete und dazu parallele zweite gedachte Längsschnittebene, in der sowohl eine Meßrohr-Längsachse des dritten Meßrohrs, die dessen erstes und zweites Meßrohrende imaginär verbindet, als auch eine Meßrohr-Längsachse des vierten Meßrohrs, die dessen erstes und zweites Meßrohrende imaginär verbindet und parallel zur Meßrohr-Längsachse des ersten Meßrohrs ist, verlaufen, aufweist.

Nach einer dritten Ausgestaltung der Erfindung ist ferner vorgesehen, daß das erste Meßrohr ein Kaliber aufweist, das gleich ein einem Kaliber des zweiten Meßrohrs, beispielsweise auch gleich einem Kaliber des dritten Meßrohrs sowie gleich einem Kaliber des vierten Meßrohrs ist.

Nach einer vierten Ausgestaltung der Erfindung ist ferner vorgesehen, daß der erste Schwingungserreger so ausgebildet und im Meßwandler angeordnet ist, daß die Wirkungslinie, mit der die vom ersten Schwingungserreger erzeugten Erregerkräfte in Rohranordnung eingeleitet sind, einen senkrechten Abstand zur dritten gedachte Längsschnittebene der Rohranordnung aufweist, der größer als ein Viertel des Kalibers des ersten Meßrohrs, insb. größer als 35% des Kalibers des ersten Meßrohrs, und/oder kleiner als 200% des Kalibers des ersten Meßrohrs, insb. kleiner als 100% des Kalibers des ersten Meßrohrs, ist.

Nach einer fünften Ausgestaltung der Erfindung ist ferner vorgesehen, daß die Erregeranordnung Schwingungen der Meßrohre, beispielsweise gegengleiche Torsionsschwingungen des ersten und zweiten Meßrohrs oder gegengleiche Biege-/ Torsionsschwingungen des ersten und zweiten Meßrohrs, dadurch bewirkt, daß eine mittels des ersten Schwingungserregers generierte, auf das erste Meßrohr wirkende Erregerkraft zu einer mittels des ersten Schwingungserregers zeitgleich generierten, auf das zweite Meßrohr wirkenden Erregerkraft entgegengerichtet, beispielsweise gegengleich, ist.

Nach einer sechsten Ausgestaltung der Erfindung ist ferner vorgesehen, die Erregeranordnung, beispielsweise simultan zu den Torsionsschwingungen der Meßrohre, sowohl Biegeschwingungen des ersten Meßrohrs um dessen Meßrohr-Längsachse und zu den Biegeschwingungen des ersten Meßrohrs gegengleiche Biegeschwingungen des zweiten Meßrohrs um dessen Meßrohr-Längsachse als auch Biegeschwingungen des dritten Meßrohrs um dessen Meßrohr-Längsachse und zu den Biegeschwingungen des dritten Meßrohrs gegengleiche Biegeschwingungen des vierten Meßrohrs um dessen Meßrohr-Längsachse bewirkt.

Nach einer siebenten Ausgestaltung der Erfindung ist ferner vorgesehen, daß die Rohranordnung so ausgebildet ist, daß wenigstens eine Eigenfrequenz von natürlichen Biegeschwingungen des ersten Meßrohrs, beispielsweise solchen in einem einen einzigen Schwingungsbauch aufweisenden Biegeschwingungsgrundmode, gleich einer Eigenfrequenz von natürlichen Torsionsschwingungen des ersten Meßrohrs, beispielsweise solchen in einem einen einzigen Schwingungsbauch aufweisenden Torsionsschwingungsgrundmode, und daß wenigstens eine Eigenfrequenz von natürlichen Biegeschwingungen des zweiten Meßrohrs, beispielsweise solchen in einem einen einzigen Schwingungsbauch aufweisenden Biegeschwingungsgrundmode, gleich einer Eigenfrequenz von natürlichen Torsionsschwingungen des zweiten Meßrohrs, beispielsweise solchen in einem einen einzigen Schwingungsbauch aufweisenden Torsionsschwingungsgrundmode, sind.

Nach einer achten Ausgestaltung der Erfindung ist ferner vorgesehen, daß jedes der vier Meßrohre, angeregt von der Erregeranordnung, Biegeschwingungen, beispielsweise Biegeschwingungen in einem einen einzigen Schwingungsbauch aufweisenden Biegeschwingungsgrundmode, ausführt, gekoppelt mit dazu jeweils gleichfrequenten Torsionsschwingungen, beispielsweise Torsionsschwingungen in einem einen einzigen Schwingungsbauch aufweisenden Torsionsschwingungsgrundmode.

Nach einer neunten Ausgestaltung der Erfindung ist ferner vorgesehen, daß das erste Treibersignal eine Vielzahl von Signalkomponenten mit voneinander verschiedener Signalfrequenz aufweist, und wobei wenigstens eine der Signalkomponenten, beispielsweise eine hinsichtlich einer Signalleistung dominierende Signalkomponente, des ersten Treibersignals eine einer Eigenfrequenz eines natürlichen Schwingungsmodes der Rohranordnung, beispielsweise eines natürlichen Torsionsschwingungsmodes der Rohranordnung, in dem jedes der vier Meßrohre Torsionsschwingungen ausführt, entsprechende Signalfrequenz aufweist.

Nach einer zehnten Ausgestaltung der Erfindung ist ferner vorgesehen, daß die Umformer-Elektronik anhand von in der Erregeranordnung, insb. zumindest anteilig in Torsionsschwingungen der Meßrohre oder zumindest anteilig in Torsions-/ Biegeschwingungen der Meßrohre, umgesetzter, beispielsweise von einer Spannungshöhe und einer Stromstärke des ersten Treibersignals abhängiger, elektrischer Erregerleistung einen die Viskosität des strömenden Mediums repräsentierenden Meßwert und/oder einen die Reynoldszahl des strömenden Mediums repräsentierenden Meßwert generiert.

Nach einer elften Ausgestaltung der Erfindung ist ferner vorgesehen, daß der Meßwandler außer den vier Meßrohren kein weiteres dem Führen von strömendem Medium dienendes und im Betrieb vibrieren gelassenes Meßrohr aufweist.

Nach einer ersten Weiterbildung der Erfindung ist ferner vorgesehen, daß die Erregeranordnung wenigstens einen, beispielsweise differentiell, auf das erste und zweite Meßrohre wirkenden, beispielsweise elektro-dynamischen, ersten Schwingungserreger zum Konvertieren von in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, die Torsionsschwingungen des ersten Meßrohrs und die zu den Torsionsschwingungen des ersten Meßrohrs gegengleichen Torsionsschwingungen des zweiten Meßrohrs bewirkende mechanische Erregerkräfte aufweist.

Nach einer ersten Ausgestaltung der ersten Weiterbildung der Erfindung ist ferner vorgesehen, daß der erste Schwingungserreger einen, beispielsweise mittels eines zumindest am ersten Meßrohr fixierten und als Hebelarm dienenden Kopplerelements zum Bewirken von auf das erste Meßrohr wirkenden Torsionsmomenten, zumindest am ersten Meßrohr gehalterten Permanentmagneten und eine von dessen Magnetfeld durchfluteten, zumindest am zweiten Meßrohr, etwa mittels eines zumindest am zweiten Meßrohr fixierten und als Hebelarm dienenden Kopplerelements zum Bewirken von auf das zweite Meßrohr wirkenden Torsionsmomenten, gehalterte Zylinderspule aufweist.

Nach einer zweiten Ausgestaltung der ersten Weiterbildung der Erfindung ist ferner vorgesehen, daß das erste Treibersignal dem ersten Schwingungserreger zugeführt ist, insb. derart, daß dessen Zylinderspule von einem von einer mittels des ersten Treibersignals bereitgestellten veränderlichen ersten Erregerspannung getriebenen ersten Erregerstrom durchflossen ist.

Nach einer dritten Ausgestaltung der ersten Weiterbildung der Erfindung ist ferner vorgesehen, daß die Rohranordnung so ausgebildet ist, daß sie eine erste gedachte Längsschnittebene, in der sowohl eine Meßrohr-Längsachse des ersten Meßrohrs, die dessen erstes und zweites Meßrohrende imaginär verbindet, als auch eine Meßrohr-Längsachse des zweiten Meßrohrs, die dessen erstes und zweites Meßrohrende imaginär verbindet und parallel zur Meßrohr-Längsachse des ersten Meßrohrs ist, verlaufen, eine von der ersten gedachte Längsschnittebene beabstandete und dazu parallele zweite gedachte Längsschnittebene, in der sowohl eine Meßrohr-Längsachse des dritten Meßrohrs, die dessen erstes und zweites Meßrohrende imaginär verbindet, als auch eine Meßrohr-Längsachse des vierten Meßrohrs, die dessen erstes und zweites Meßrohrende imaginär verbindet und parallel zur Meßrohr-Längsachse des ersten Meßrohrs ist, verlaufen, sowie eine zwischen der ersten Längsschnittebene und zweiten Längsschnittebene liegende, nämlich jeweils von der ersten gedachten Längsschnittebene und von der zweiten gedachten Längsschnittebene beabstandete und zur ersten und zweiten Längsschnittebene jeweils parallele, dritte gedachte Längsschnittebene aufweist, und daß der erste Schwingungserreger eine darin umgesetzte, etwa mittels des ersten Treibersignals eingespeiste, elektrische Erregerleistung in dem Anregen von Schwingungen der Meßrohre, etwa von gegengleichen Torsionsschwingungen der wenigstens zwei Meßohre oder von gegengleichen Biege-/Torsionsschwingungen der wenigstens zwei Meßohre, dienende, beispielsweise periodische, Erregerkräfte konvertiert, die entlang einer von der dritten gedachten Längsschnittebene, etwa auch von der ersten gedachten Längsschnittebene, beabstandeten und zumindest näherungsweise parallel dazu, beispielsweise auch im wesentlichen quer zur Meßrohr-Längsachse des ersten Meßrohrs und zur Meßrohr-Längsachse des zweiten Meßrohrs, verlaufenden Wirkungslinie in Rohranordnung eingeleitet sind.

Nach einer zweiten Weiterbildung der Erfindung ist ferner vorgesehen, daß die Umformer-Elektronik elektrische Erregerleistung auch mittels eines, beispielsweise mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten, beispielsweise zum ersten Treibersignal hinsichtlich wenigstens einer Signalfrequenz gleichen und/oder zum ersten Treibersignal phasenverschobenen, zweiten elektrischen Treibersignals, beispielsweise auch mit einer veränderlichen maximalen Spannungshöhe und/oder einer veränderlichen maximalen Stromstärke, in die Erregeranordnung einspeist.

Nach einer ersten Ausgestaltung der zweiten Weiterbildung der Erfindung ist ferner vorgesehen, daß die Erregeranordnung mittels des zweiten Treibersignals eingespeiste, insb. von einer Spannungshöhe und einer Stromstärke auch des zweiten Treibersignals abhängige, elektrische Erregerleistung zumindest zeitweise in, etwa zu den Torsionsschwingungen des ersten Meßrohrs gegengleiche, Torsionsschwingungen des dritten Meßrohrs und zu den Torsionsschwingungen des dritten Meßrohrs, etwa auch zu den Torsionsschwingungen des zweiten Meßrohrs, gegengleiche Torsionsschwingungen des vierten Meßrohrs wandelt, beispielsweise derart, daß ein mittiges Rohrsegment des dritten Meßrohrs Drehschwingungen um eine zu einem Querschnitt nämlichen Rohrsegments senkrechte gedachte Torsionsschwingungsachse und ein mittiges Rohrsegment des vierten Meßrohrs Drehschwingungen um eine zu einem Querschnitt nämlichen Rohrsegments senkrechte gedachte Torsionsschwingungsachse ausführen, und/oder daß jedes der vier Meßrohre Torsionsschwingungen in einem einen einzigen Schwingungsbauch aufweisenden Torsionsschwingungsgrundmode ausführen.

Nach einer zweiten Ausgestaltung der zweiten Weiterbildung der Erfindung ist ferner vorgesehen, daß das zweite Treibersignal eine Vielzahl von Signalkomponenten mit voneinander verschiedener Signalfrequenz aufweist, und daß wenigstens eine der Signalkomponenten, beispielsweise eine hinsichtlich einer Signalleistung dominierende Signalkomponente, des zweiten Treibersignals eine einer Eigenfrequenz eines natürlichen Schwingungsmodes der Rohranordnung, beispielsweise eines natürlichen Torsionsschwingungsmodes der Rohranordnung, in dem jedes der Meßrohre gegengleiche Torsionsschwingungen ausführen, entsprechende Signalfrequenz aufweist.

Nach einer dritten Ausgestaltung der zweiten Weiterbildung der Erfindung ist ferner vorgesehen, daß das zweite Treibersignal einem Schwingungserreger der Erregeranordnung zugeführt ist, beispielsweise derart, daß eine Zylinderspule nämlichen Schwingungserregers von einem von einer mittels des zweiten Treibersignals bereitgestellten veränderlichen zweiten Erregerspannung getrieben zweiten Erregerstrom durchflossen ist.

Nach einer dritten Weiterbildung der Erfindung ist ferner vorgesehen, daß die Erregeranordnung weiters einen, beispielsweise differentiell, auf das dritte und vierte Meßrohr wirkenden, beispielsweise elektro-dynamischen und/oder zum ersten Schwingungserreger baugleichen, zweiten Schwingungserreger zum Konvertieren von in die Erregeranordnung eingespeister elektrischer Erregerleistung in, beispielsweise mit wenigstens einer mit einer einer Eigenfrequenz eines natürlichen Schwingungsmodes der Rohranordnung entsprechenden Signalfrequenz veränderliche und/oder periodische, die Torsionsschwingungen des dritten Meßrohrs und die zu den Torsionsschwingungen des dritten Meßrohrs gegengleichen Torsionsschwingungen des vierten Meßrohrs bewirkende mechanische Erregerkräfte aufweist.

Nach einer ersten Ausgestaltung der dritten Weiterbildung der Erfindung ist ferner vorgesehen, daß der zweite Schwingungserreger einen zumindest am dritten Meßrohr, beispielsweise mittels eines zumindest am dritten Meßrohr fixierten und als Hebelarm dienenden Kopplerelements zum Bewirken von auf das dritte Meßrohr wirkenden Torsionsmomenten, gehalterten Permanentmagneten und eine von dessen Magnetfeld durchfluteten, am vierten Meßrohr, beispielsweise mittels eines am vierten Meßrohr fixierten und als Hebelarm dienenden Kopplerelements zum Bewirken von auf das vierte Meßrohr wirkenden Torsionsmomenten, gehalterten Zylinderspule gebildet ist.

Nach einer zweiten Ausgestaltung der dritten Weiterbildung der Erfindung ist ferner vorgesehen, daß die Erregeranordnung Schwingungen der Meßrohre, beispielsweise auch gegengleiche Torsionsschwingungen des dritten und vierten Meßohrs oder gegengleiche Biege-/ Torsionsschwingungen des dritten und vierten Meßohrs, dadurch bewirkt, daß eine mittels zweiten Schwingungserregers generierte, auf das dritte Meßrohr wirkende Erregerkraft zu einer mittels des zweiten Schwingungserregers zeitgleich generierten, auf das vierte Meßrohr wirkenden Erregerkraft entgegengerichtet, beispielsweise auch gegengleich, ist.

Nach einer dritten Ausgestaltung der dritten Weiterbildung der Erfindung ist ferner vorgesehen, daß die Erregeranordnung gegengleiche Torsionsschwingungen, beispielsweise auch gegengleiche Biege-/ Torsionsschwingungen, der Meßohre dadurch bewirkt,
- daß die mittels ersten Schwingungserregers generierte, auf das erste Meßrohr wirkende Erregerkraft zu der mittels des zweiten Schwingungserregers zeitgleich generierten, auf das dritte Meßrohr wirkenden Erregerkraft entgegengerichtet ist, und
- daß die mittels ersten Schwingungserregers generierte, auf das zweite Meßrohr wirkende Erregerkraft zu der mittels des zweiten Schwingungserregers zeitgleich generierten, auf das vierte Meßrohr wirkende Erregerkraft entgegengerichtet ist.

Nach einer vierten Weiterbildung der Erfindung umfaß der Meßwandler weiters eine, beispielsweise mittels eines ersten Schwingungssensors und mittels eines dazu baugleichen zweiten Schwingungssensors gebildete, Sensoranordnung zum, beispielsweise differentiellen, Erfassen von mechanischen Schwingungen, beispielsweise von Torsionsschwingungen oder Torsions-/ Biegeschwingungen, der Meßrohre und zum Erzeugen wenigstens eines mechanische Schwingungen, beispielsweise Torsionsschwingungen oder Torsions-/ Biegeschwingungen, der Meßrohre repräsentierenden ersten Schwingungssignals aufweist.

Nach einer ersten Ausgestaltung der vierten Weiterbildung der Erfindung ist vorgesehen, daß das von der Sensoranordnung gelieferte erste Schwingungssignal zumindest anteilig Torsionsschwingungen des ersten Meßrohrs, beispielsweise Torsionsschwingungen des ersten Meßrohrs relativ zu gegengleichen Torsionsschwingungen des zweiten Meßrohrs, repräsentiert.

Nach einer zweiten Ausgestaltung der vierten Weiterbildung der Erfindung ist vorgesehen, daß die Umformer-Elektronik den die Viskosität des strömenden Mediums repräsentierenden Meßwert und/oder einen die Reynoldszahl des strömenden Mediums repräsentierenden Meßwert mittels des ersten Schwingungssignals, beispielsweise anhand einer Signalspannung und/oder einer Signalfrequenz des ersten Schwingungssignals, generiert.

Nach einer dritten Ausgestaltung der vierten Weiterbildung der Erfindung weist die Sensoranordnung wenigstens einen, insb. elektrodynamischen und/oder einlaßseitig im Meßwandler plazierten, ersten Schwingungsensor zum, beispielsweise differentiellen, Erfassen von, beispielsweise einlaßseitigen, mechanischen Schwingungen, insb. von Torsionsschwingungen oder Torsions-/ Biegeschwingungen, der Meßrohre und zum Erzeugen des ersten Schwingungssignals auf. Diese Ausgestaltung weiterbildend ist ferner vorgesehen, daß der erste Schwingungssensor einen am ersten Meßrohr, insb. mittels eines Kopplerelements, gehalterten Permanentmagneten und eine von dessen Magnetfeld durchfluteten, am zweiten Meßrohr, beispielsweise mittels eines Kopplerelements, gehalterten Zylinderspule zum Erzeugen einer der Bildung des ersten Schwingungssignals der Sensoranordnung dienenden elektrischen Spannung aufweist.

Nach einer vierten Ausgestaltung der vierten Weiterbildung der Erfindung weist die Sensoranordnung weiters vier, beispielsweise elektro-dynamische und/oder baugleichen und/oder jeweils gleichweit vom ersten Schwingungserreger entfernten, Schwingungssensoren zum, beispielsweise differentiellen, Erfassen von mechanischen Schwingungen, insb. von Torsionsschwingungen oder Torsions-/Biegeschwingungen, der Meßrohre und zum Erzeugen wenigstens eines mechanische Schwingungen, insb. Torsionsschwingungen oder Torsions-/Biegeschwingungen, der Meßrohre repräsentierenden Schwingungssignals auf. Diese Ausgestaltung weiterbildend ist ferner vorgesehen, daß jeder der vier Schwingungssensoren einen an wenigstens einem der Meßrohre, beispielsweise mittels eines Kopplerelements, gehalterten Permanentmagneten und eine von dessen Magnetfeld durchfluteten, an jeweils wenigstens einem der anderen Meßrohre, beispielsweise mittels eines Kopplerelements, gehalterten Zylinderspule zum Erzeugen einer der Bildung eines Schwingungssignals der Sensoranordnung dienenden elektrischen Spannung aufweist.

Nach einer fünften Weiterbildung der Erfindung umfaß der Meßwandler weiters ein sowohl am ersten Meßrohr als auch am dritten Meßrohr, ansonsten aber an keinem weiteren der Meßrohre fixiertes, insb. plattenförmiges, erstes Kopplerelement erster Art zum Haltern von Komponenten des ersten Schwingungserregers, insb. einer Zylinderspule oder einem Permanentmagneten, und zum Einleiten einer mittels des ersten Schwingungserregers generierten Erregerkraft in das erste Meßrohr und/oder zum Wandeln einer mittels des ersten Schwingungserregers generierten Erregerkraft in ein auf das erste Meßrohr wirkendes Torsionsmoment und ein auf das dritte Meßrohr wirkendes Torsionsmoment, sowie ein sowohl am zweiten Meßrohr als auch am dritten Meßrohr, ansonsten aber an keinem weiteren der Meßrohre fixiertes, insb. plattenförmiges und/oder zum ersten Kopplerelement erster Art baugleiches und/oder diesem gegenüberliegendes, zweites Kopplerelement erster Art zum Haltern von Komponenten des ersten Schwingungserregers, insb. einer Zylinderspule oder einem Permanentmagneten, und zum Einleiten einer mittels des ersten Schwingungserregers generierten Erregerkraft in das zweite Meßrohr und/oder zum Wandeln einer mittels des ersten Schwingungserregers generierten Erregerkraft in ein auf das zweite Meßrohr wirkendes Torsionsmoment und ein auf das vierte Meßrohr wirkendes Torsionsmoment.

Nach einer fünften Ausgestaltung der fünften Weiterbildung der Erfindung ist vorgesehen, daß die Schwingungserreger der Erregeranordnung jeweils an zwei einander gegenüberliegenden Kopplerelementen erster Art gehaltert ist, insb. in der Weise, daß ein minimaler Abstand zwischen zwei am selben Kopplerelementen gehalterten Schwingungserregern mehr als doppelt so groß ist, wie ein Rohr-Außendurchmessers des ersten Meßrohrs.

Nach einer sechsten Ausgestaltung der fünften Weiterbildung der Erfindung ist vorgesehen, daß ein Permanentmagnet des ersten Schwingungserregers am ersten Kopplerelement erster Art, insb. an einem vom ersten Meßrohr abgelegenen, distalen ersten Ende des ersten Kopplerelements erster Art, und eine Zylinderspule des ersten Schwingungserregers am zweiten Kopplerelement erster Art, etwa an einem vom zweiten Meßrohr abgelegenen, distalen ersten Ende des zweiten Kopplerelements erster Art, fixiert sind, insb. derart, daß das erste Kopplerelement erster Art als ein Hebelarm wirkt, der eine vom ersten Schwingungserreger generierte Erregerkraft zumindest anteilig in ein die Torsionsschwingungen des ersten Meßrohr bewirkendes Torsionsmoment wandelt, und daß das zweite Kopplerelement erster Art als ein Hebelarm wirkt, der eine vom ersten Schwingungserreger generierte Erregerkraft zumindest anteilig in ein die Torsionsschwingungen des zweiten Meßrohr bewirkendes Torsionsmoment wandelt.

Nach einer siebenten Ausgestaltung der fünften Weiterbildung der Erfindung ist vorgesehen, daß das erste und zweite Kopplerelement erster Art einander gegenüberliegend im Meßwandler plaziert sind.

Nach einer achten Ausgestaltung der fünften Weiterbildung der Erfindung ist vorgesehen, daß das erste und zweite Kopplerelement erster Art so im Meßwandler plaziert sind, daß sowohl ein Massenschwerpunkt des ersten Kopplerelements erster Art als auch ein Massenschwerpunkt des zweiten Kopplerelements erster Art innerhalb der Querschnittebene liegen, in der sowohl die Wirkungslinie der vom ersten Schwingungserreger erzeugten Erregerkräfte, als auch die Wirkungslinie der vom zweiten Schwingungserreger erzeugten Erregerkräfte verlaufen.

Nach einer sechsten Weiterbildung der Erfindung umfaß der Meßwandler weiters ein, beispielsweise im wesentlichen rohrförmiges und/oder außen kreiszylindrisches, Aufnehmer-Gehäuse, von dem ein einlaßseitiges erstes Gehäuseende mittels des ersten Strömungsteilers und ein auslaßseitiges zweites Gehäuseende mittels des zweiten Strömungsteilers gebildet sind.

Ein Grundgedanke der Erfindung besteht darin, anstelle der herkömmlicherweise zur Messung der Viskosität verwendeten konventionellen Meßsystemen mit einem einzigen geraden Meßrohr oder zwei parallel durchströmten gebogenen Meßrohre vier parallel durchströmte gerade, im Betrieb zummindest anteilig bzw. zumindest paarweise gegengleiche Torsionsschwingungen ausführende Meßrohre zu verwenden, und so eine hohe Meßgenauigkeit für die Viskosität zu ermöglichen, bei einerseits platzsparender Bauweise des Meßsystems insgesamt, anderseits auch akzeptablem Druckverlust über einen weiten Meßbereich, insb. auch bei sehr hohen Massendurchflußraten von weit über 1200 t/h.

Ein Vorteil des erfindungsgemäßen Meßwandlers besteht ferner u.a. darin, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßwandler sind. Insofern ist ein weiterer Vorteil der Erfindung darin zu sehen, daß dadurch nicht nur eine Möglichkeit geschaffen wird, vergleichsweise kompakte Meßsysteme für Viskosität auch mit großer nomineller Nennweite von über 100 mm, insb. mit einer Nennweite von größer 120 mm, mit handhabbaren geometrischen Abmessungen und Leermassen anbieten, sondern zudem auch ökonomisch sinnvoll realisieren zu können. Der erfindungsgemäße Meßwandler ist daher besonders zum Messen von strömungsfähigen Medien geeignet, die in einer Rohrleitung mit einem Kaliber von größer 100 mm, insb. von 150 mm oder darüber, geführt sind. Zu dem ist der Meßwandler auch zum Messen auch solcher Massendurchflüsse geeignet, die zumindest zeitweise größer als 1200 t/h sind, insb. zumindest zeitweise mehr als 1400 t/h betragen, wie sie z.B. bei Anwendungen zur Messung von Erdöl, Erdgas oder anderen petrochemischen Stoffen auftreten können.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, nicht zuletzt auch Kombinationen zunächst nur einzeln erläuterter Teilaspekte der Erfindung, ergeben sich ferner aus den Figuren der Zeichnung wie auch den abhängigen Ansprüchen an sich.

Im einzelnen zeigen:
- Fig. 1a, b, c: ein, beispielsweise als Coriolis-Massedurchfluss/Dichte/Viskositäts-Meßgerät in Kompaktbauweise ausgebildetes, Meßsystem in teilweise transparenten, verschiedenen Seitenansichten mit einem Meßwandler vom Vibrationstyp und daran angeschlossener Umformer-Elektronik;
- Fig. 2: schematisch nach Art eines Blockschaltbildes eine Umformer-Elektronik an die unter Bildung eines Meßsystems gemäß Fig. 1 ein Meßwandler vom Vibrationstyp angeschlossen ist;
- Fig. 3: in, teilweise geschnittener bzw. perspektivischer, Seitenansicht ein Ausführungsbeispiel eines, insb. für ein Meßsystem gemäß den Fign. 1 bzw. 2 geeigneten, Meßwandlers vom Vibrations-Typ;
- Fign. 4, 5, 6: Projektionen einer Rohranordnung des Meßwandlers gemäß Fig. 3 in verschiedenen Seitenansichten.

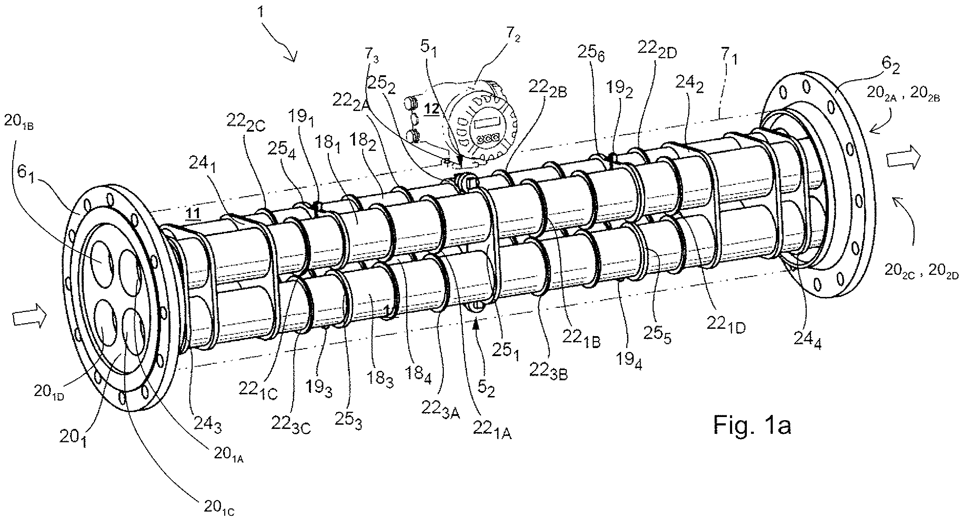

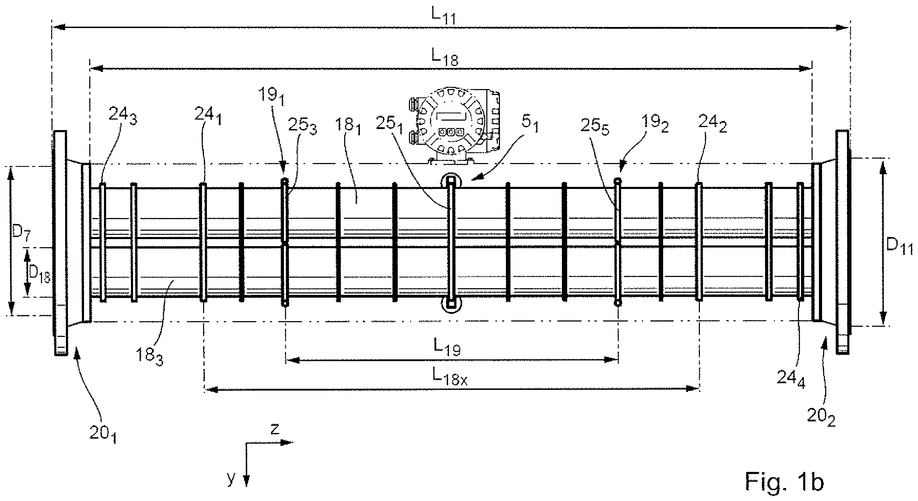

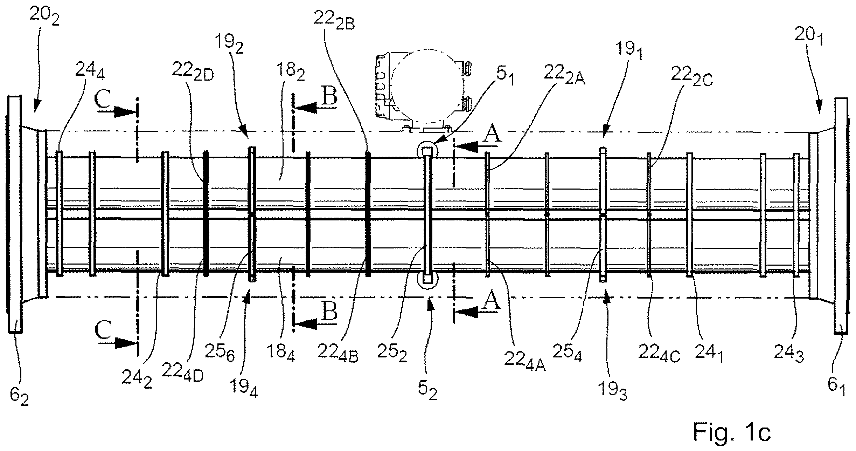

In den Fig. 1a, 1, b, 1c, 2 ist ein, insb. als Coriolis-Massedurchfluß/Viskositäts- und/oder Dichte-/Viskositäts-Meßgerät ausgebildetes, Meßsystem 1 schematisch dargestellt, das dazu dient, eine Viskosität *η* eines in einer - hier aus Übersichtlichkeitsgründen nicht dargestellten - Rohrleitung strömenden Mediums zu erfassen und in einen nämliche Viskosität *η* - oder auch eine davon abgeleitete Meßgröße, wie etwa eine Reynoldszahl Re der Strömung - momentan repräsentierenden Meßwert Xη bzw. X_{RE} abzubilden. Medium kann praktisch jeder strömungsfähige Stoff sein, beispielsweise eine wäßrige oder ölartige Flüssigkeit ein Schlamm, eine Paste oder dergleichen. Alternativ oder in Ergänzung kann das In-Line-Meßgerät 1 ggf. auch dazu verwendet werden eine Dichte ρ und/oder einen Massendurchfluß m des Mediums zu messen. Im besonderen ist das In-Line-Meßgerät dafür vorgesehen, solche Medien, wie z.B. Erdöl oder andere petrochemische Stoffe, zu messen, die in einer Rohrleitung mit einem Kaliber von größer als 100 mm, insb. einem Kaliber von 150 mm oder darüber, strömen. Im besonderen ist das In-Line-Meßgerät ferner dafür vorgesehen strömende Medien der vorgenannten Art zu messen, die mit einer Massendurchflußrate von größer als 1200 t/h, insb. von größer 1500 t/h, strömen gelassen sind. Das - hier exemplarisch mittels eines In-Line-Meßgeräts in Kompaktbauweise realisierte - Meßsystem umfaßt dafür einen über ein Einlaßende sowie ein Auslaßende an die Prozeßleitung angeschlossenen Meßwandler 11 vom Vibrationstyp, welcher Meßwandler im Betrieb entsprechend vom zu messenden Medium, wie etwa einer niedrigviskosen Flüssigkeit und/oder einer hochviskosen Paste, durchströmt sowie eine mit dem Meßwandler 11, etwa mittels eines mehradrigen Anschlußkabels oder entsprechenden Einzelleitungen, elektrisch verbundene, im Betrieb beispielsweise von extern via Anschlußkabel und/oder mittels interner Energiespeicher mit elektrischer Energie versorgte, Umformer-Elektronik 12 zum Ansteuern des Meßwandlers und zum Auswerten von vom Meßwandler gelieferten Schwingungssignalen.

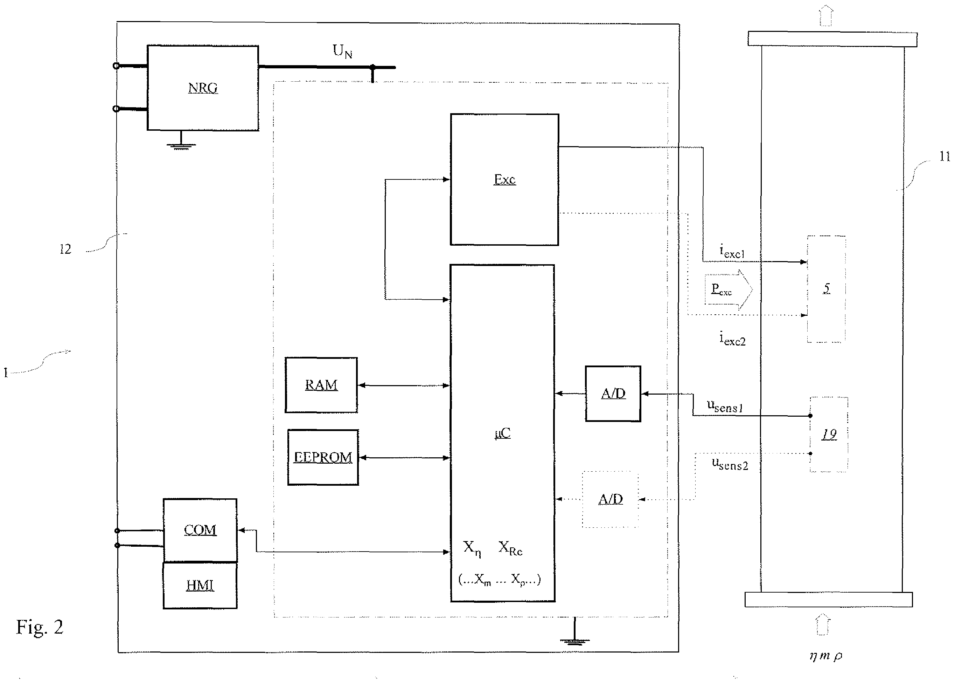

Die Umformer-Elektronik 12 weist, wie in Fig. 2 schematisch nach Art eines Blockschaltbildes dargestellt, eine dem Ansteuern des Meßwandlers dienende Treiber-Schaltung Exc sowie eine Primärsignale des Meßwandlers 11 verarbeitende, beispielsweise mittels eines Mikrocomputers gebildete und/oder im Betrieb mit der Treiber-Schaltung Exc kommunizierende, Meß- und Auswerte-Schaltung µC auf, die im Betrieb die wenigstens eine Meßgröße, wie z.B. die Viskosität und/oder die Reynoldszahl, sowie ggf. weitere Meßgrößen, wie die Dichte und/oder den momentanen oder einen totalisierten Massendurchfluß des strömenden, repräsentierende Meßwerte liefert. Die Treiber-Schaltung Exc und die Auswerte-Schaltung µC sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen U_{N} und/oder dem Anschluß an ein übergeordnetes Meßdatenverarbeitungssystem und/oder einem Feldbus dienenden Kommunikationsschaltungen COM, sind im hier gezeigten Ausführungsbeispiel ferner in einem - hier einzigen-, insb. schlag- und/oder auch explosionsfest und/oder hermetisch dicht ausgebildeten, Elektronikgehäuse 7₂ untergebracht. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise (re-) programmierbare und/oder fernparametrierbare, Umformer-Elektronik 12 ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik 12 beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber Meßwerte zum Datenverarbeitungssystem übertragen kann, ggf. auch - zumindest anteilig oder ausschließlich - mit elektrischer Energie versorgt wird. Für den Fall, daß das Meßsystem für eine Ankopplung an ein Feldbus- oder ein anderes Kommunikationssystem vorgesehen ist, kann die Umformer-Elektronik 12 eine entsprechende Kommunikations-Schnittstelle COM für eine Datenkommunikation gemäß einem der einschlägigen Industriestandards aufweisen.

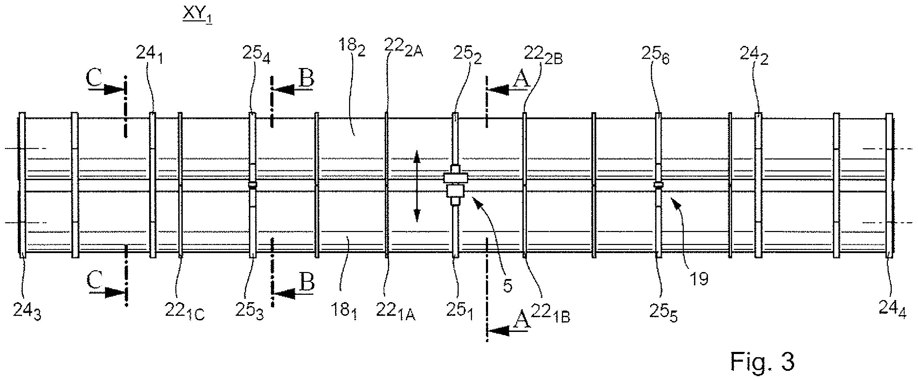

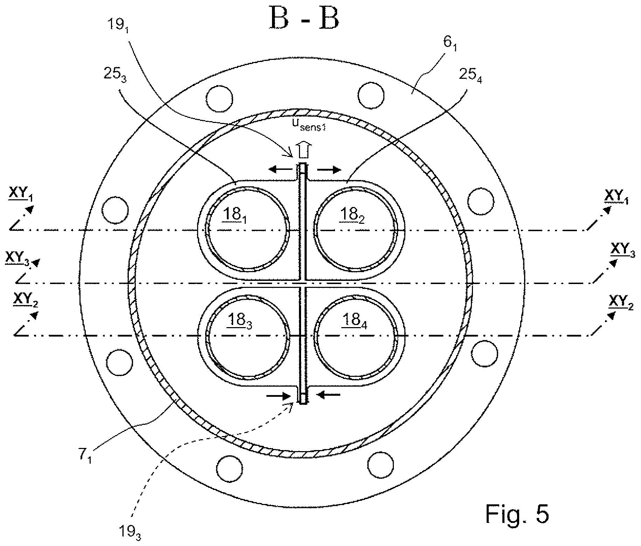

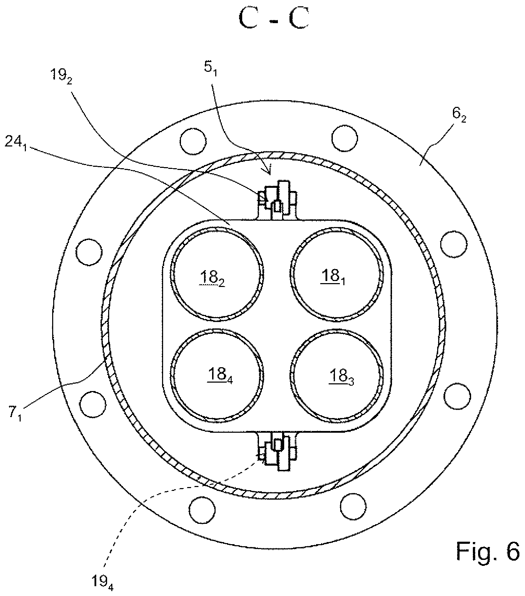

In den Fig. 3, 4, 5, und 6 ist, ergänzend zu Fig. 1a, 1b, 1c bzw. 2, in unterschiedlichen Darstellungen des für die Verwirklichung des erfindungsgemäßen Meßsystems, ggf. auch zur Massedurchfluss- und/oder Dichte-Messung einsetzbaren, geeigneten Meßwandlers 11 gezeigt, welcher Meßwandler 11 im Betrieb in den Verlauf einer von einem zu messenden Medium durchströmten - aus Gründen der Übersichtlichkeit hier nicht dargestellten - Rohrleitung eingesetzt ist. Der Meßwandler 11 dient, wie bereits erwähnt, dazu, in einem hindurchströmenden Medium mechanische Reaktionskräfte, insb. auch von der Viskosität des Mediums abhängige Reibungskräfte, ggf. auch vom Massendurchfluß abhängige Corioliskräfte und/oder von der Dichte des Mediums abhängige Trägheitskräfte, zu erzeugen, die meßbar, insb. sensorisch erfaßbar, auf den Meßwandler zurückwirken, und in damit korrespondierende - hier als Schwingungssignale ausgebildete - Primärsignale zu wandeln. Basierend auf diesen das strömende Medium beschreibenden Reaktionskräften bzw. den davon abgeleiteten Primärsignalen des Meßwandlers können mittels in der Umformer-Elektronik entsprechend implementierten Auswerte-Verfahren z.B. die Viskosität *η* des Mediums, der Massendurchfluß, die Dichte und/oder davon abgeleitete Meßgrößen wie etwa die Reynoldszahl Re gemessen werden.

Der Meßwandler 11 weist - wie aus der Zusammenschau der Fig. ohne weiters ersichtlich - ein u.a. auch als Traggestell dienendes - hier im wesentlichen rohrförmiges, außen kreiszylindrisches - Aufnehmer-Gehäuse 7₁ auf, in dem weitere, dem Erfassen der wenigstens einen Meßgröße dienende Komponenten des Meßwandlers 11 vor äußeren Umwelteinflüssen geschützt untergebracht sind. Im hier gezeigten Ausführungsbeispiel ist zumindest ein Mittelsegment des Aufnehmer-Gehäuses 7₁ mittels eines geraden, insb. kreiszylindrischen, Rohres gebildet, so daß zur Fertigung des Aufnehmer-Gehäuses beispielsweise auch kostengünstige, geschweißte oder gegossenen Standardrohre, beispielsweise aus Stahlguß oder geschmiedetem Stahl, verwendet werden können. Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist im hier gezeigten Ausführungsbeispiel genau zwei jeweils voneinander beabstandeten, beispielsweise kreiszylindrische oder kegelförmige bzw. jeweils als Innenkonus ausgebildete, Strömungsöffnungen 20_{1A}, 20_{1B} bzw. 20_{2A}, 20_{2B} auf. Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßwandlers 11 an ein dem Zuführen von Medium zum Meßwandler dienendes Rohrsegment der Rohrleitung bzw. an ein dem Abführen von Medium vom Meßwandler dienendes Rohrsegment der erwähnten Rohrleitung versehen. Zum leckagefreien, insb. fluiddichten, Verbinden des Meßwandlers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßwandlers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßwandler 11 vorgesehenen nominelle Nennweite D₁₁ sowie den dafür ggf. einschlägigen Industrienormen dimensioniert, die einem Kaliber der Rohrleitung, in deren Verlauf der Meßwandler einzusetzen ist, entspricht. Infolge der für den Meßwandler schlußendlich angestrebten eher großen Nennweite von 100 mm oder darüber beträgt dessen Einbaulänge L₁₁ gemäß einer Ausgestaltung der Erfindung mehr als 800mm. Ferner ist aber vorgesehen, die Einbaulänge des Meßwandlers 11 möglichst klein, insb. kleiner als 3000mm zu halten. Die Flansche 6₁, 6₂ können, wie auch aus Fig. 1a, 1b bzw. 1c ohne weiteres ersichtlich und wie bei derartigen Meßwandler durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßwandlers, insb. von weniger als 3000 mm, zu schaffen. Für einen möglichst kompakten Meßwandler mit einem auch bei angestrebt hohen Massendurchflußraten von über 1200 t/h sind nach einer anderen Ausgestaltung der Erfindung die Einbaulänge und die nominelle Nennweite des Meßwandlers aufeinander abgestimmt so bemessen, daß ein Nennweite-zu Einbaulänge-Verhältnis D₁₁/L₁₁ des Meßwandlers, definiert durch ein Verhältnis der nominellen Nennweite D₁₁ des Meßwandlers zur Einbaulänge L₁₁ des Meßwandlers kleiner als 0.3, insb. kleiner als 0.2 und/oder größer als 0.1, ist. In einer weiteren Ausgestaltung des Meßwandlers umfaßt das Aufnehmer-Gehäuse ein im wesentlichen rohrförmiges Mittelsegment. Ferner ist vorgesehen, das Aufnehmer-Gehäuse so zu dimensionieren, daß ein durch ein Verhältnis des größten Gehäuse-Innendurchmessers zur nominellen Nennweite des Meßwandlers definiertes Gehäuse-Innendurchmesser-zu-Nennweite-Verhältnis des Meßwandlers, zwar größer als 0.9, jedoch kleiner als 1.5, möglichst aber kleiner als 1.2 ist.

Bei dem hier gezeigten Ausführungsbeispiel schließen sich ein- bzw. auslaßseitig an das Mittelsegment ferner ebenfalls rohrförmige Endsegmente des Aufnehmergehäuses an. Für den im Ausführungsbeispiel gezeigten Fall, daß das Mittelsegment und die beiden Endsegmente wie auch die mit dem jeweiligen Flansch verbundenen Strömungsteiler im Vor- bzw. Auslaufbereich jeweils den gleichen Innendurchmesser aufweisen, kann das Aufnehmer-Gehäuse in vorteilhafter Weise auch mittels eines einstückigen, beispielsweise gegossenen oder geschmiedeten, Rohres gebildet werden, an dessen Enden die Flansche angeformt oder angeschweißt sind, und bei dem die Strömungsteiler mittels, insb. von den Flanschen etwas beabstandet, an die Innenwand orbital und/oder mittels Laser angeschweißten, die Strömungsöffnungen aufweisenden Platten gebildet sind. Insbesondere für den Fall, daß das erwähnte Gehäuse-Innenendurchmesser-zu-Nennweite-Verhältnis des Meßwandlers gleich eins gewählt ist, kann für Fertigung des Aufnehmer-Gehäuses beispielsweise ein der anzuschließenden Rohrleitung hinsichtlich Kaliber, Wandstärke und Material entsprechendes und insoweit auch hinsichtlich des erlaubten Betriebsdrucks entsprechend angepaßtes Rohr mit zur gewählten Meßrohrlänge entsprechend passender Länge verwendet werden. Zur Vereinfachung des Transports des Meßwandlers bzw. des gesamten damit gebildeten In-line-Meßgeräts können ferner, wie beispielsweise auch in der eingangs erwähnten US-B 07350421 vorgeschlagen, einlaßseitig und auslaßseitig am außen am Aufnehmer-Gehäuse fixierte eine Transport-Öse vorgesehen sein.

Zum Führen des zumindest zeitweise durch Rohrleitung und Meßwandler strömenden Mediums umfaßt der erfindungsgemäße Meßwandler ferner wenigstens - im hier gezeigten Ausführungsbeispiel genau - vier im Aufnehmer-Gehäuse 10 schwingfähig gehalterte zueinander parallele gerade Meßrohre 18₁, 18₂, die im Betrieb jeweils mit der Rohrleitung kommunizieren und zumindest zeitweise in wenigstens einem für Ermittlung der physikalischen Meßgröße geeigneten Schwingungsmode, dem sogenannten Antriebs- oder auch Nutz-Mode, aktiv angeregt und vibrieren gelassen werden. Von den wenigstens vier - hier im wesentlichen kreiszylindrischen, und zueinander sowie zum oben erwähnten Mittelrohrsegment des Aufnehmergehäuses jeweils parallelen - Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ sowie ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂.

Die Meßrohre 18₁, 18₂, 18₃, 18₄ sind somit unter Bildung einer Rohranordnung mit zumindest vier strömungstechnisch parallel geschalteten Strömungspfaden an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Beim erfindungsgemäßen Meßsystem ist nämliche Rohranordnung zudem so ausgebildet, daß sie sowhel eine erste gedachte Längsschnittebene, in der sowohl eine Meßrohr-Längsachse des ersten Meßrohrs, die dessen erstes und zweites Meßrohrende imaginär verbindet, als auch eine Meßrohr-Längsachse des zweiten Meßrohrs, die dessen erstes und zweites Meßrohrende imaginär verbindet und parallel zur Meßrohr-Längsachse des ersten Meßrohrs ist, verlaufen, als auch eine von der ersten gedachte Längsschnittebene beabstandete und dazu parallele zweite gedachte Längsschnittebene, in der sowohl eine Meßrohr-Längsachse des dritten Meßrohrs, die dessen erstes und zweites Meßrohrende imaginär verbindet, als auch eine Meßrohr-Längsachse des vierten Meßrohrs, die dessen erstes und zweites Meßrohrende imaginär verbindet und parallel zur Meßrohr-Längsachse des ersten Meßrohrs ist, verlaufen sowie eine zwischen der ersten Längsschnittebene XZ₁ und zweiten Längsschnittebene XZ₂, jeweils von der ersten gedachte Längsschnittebene und von der zweiten gedachte Längsschnittebene beabstandete und zur ersten und zweiten Längsschnittebene jeweils parallele dritte gedachte Längsschnittebene XZ₃ aufweist.

Im besonderen ist ferner vorgesehen, daß die Meßrohre 18₁, 18₂, 18₃, 18₄ wie bei derartigen Meßwandlern durchaus üblich, lediglich mittels nämlicher Strömungsteiler 20₁, 20₂ im Aufnehmer-Gehäuse 7₁ schwingfähig gehaltert sind, also - abgesehen von der elektrischen Verbindungsleitungen - ansonsten keine weitere nennenswerte mechanische Verbindung zum Aufnehmer-Gehäuse mit aufweist. Darüberhinaus weist das erste Meßrohr gemäß einer weiteren Ausgestaltung der Erfindung ein Kaliber auf, das gleich ein einem Kaliber des zweiten Meßrohrs ist., beispielsweise auch derart, alle vier Meßrohre von gleichem Kaliber sind.

Die Meßrohre 18₁, 18₂, 18₃, 18₄ bzw. die damit gebildete Rohranordnung des Meßwandlers 11 sind, wie nicht zuletzt auch aus der Zusammenschau der Fign. 1, 3, 4 und 5 ohne weiteres ersichtlich und wie bei derartigen Meßwandlern auch üblich, vom Aufnehmer-Gehäuse 7₁ dabei praktisch vollständig umhüllt. Das Aufnehmer-Gehäuse 7₁ dient insoweit also nicht nur als Tragegestell oder Halterung der Meßrohre 18₁, 18₂, 18₃, 18₄ sondern darüber hinaus auch dazu, diese, wie auch weitere innerhalb des Aufnehmer-Gehäuse 7₁ plazierte Komponenten des Meßwandlers, vor äußeren Umwelteinflüssen, wie z.B. Staub oder Spritzwasser, zu schützen. Überdies kann das Aufnehmer-Gehäuse 7₁ ferner auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik im Betrieb intern erzeugten Betriebsparametern erfaßt und signalisiert werden können. Als Material für das Aufnehmer-Gehäuse 7₁ können demnach im besondern Stähle, wie etwa Baustahl bzw. rostfreier Stahl, oder auch andere geeignete bzw. üblicherweise hierfür geeignete hochfeste Werkstoffe verwendet werden.

Als Material für die Rohrwände der - hier gleich großen - Meßrohre wiederum eignet sich im besonderen Titan, Zirkonium oder Tantal. Darüber hinaus kann als Material für die Meßrohre 18₁, 18₂, 18₃, 18₄, aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Für die meisten Anwendungen der industriellen Meßtechnik, insb. auch in der petrochemischen Industrie, würden daher auch Meßrohre aus rostfreiem Stahl, beispielsweise auch Duplexstahl oder Superduplexstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßwandlers 11 im Betrieb von Vorteil sein kann. Nach einer Ausgestaltung der Erfindung sind die Meßrohre 18₁, 18₂, 18₃, 18₄ in vorteilhafter Weise ferner so ausgebildet und so im Meßwandler 11 eingebaut, daß zumindest die minimalen Torsionsschwingungs-Resonanzfrequenzen fₜ₁₈₁, f_{t 182}, f_{t 183}, f_{t 184} der Meßrohre 18₁, 18₂, 18₃, 18₄ jeweils im wesentlichen gleich sind. Desweiteren kann es von Vorteil sein, die Meßrohre 18₁, 18₂, 18₃, 18₄ ferner so auszubilden und so im Meßwandler 11 einzubauen, daß zumindest auch die minimalen Biegeschwingungs-Resonanzfrequenzen f_{b181}, f_{b182}, f_{b183}, f_{b184} der Meßrohre 18₁, 18₂, 18₃, 18₄ jeweils zueinander im wesentlichen gleich sind. Alternativ oder in Ergänzung dazu ist die Rohranordnung gemäß einer weiteren Ausgestaltung der Erfindung ferner so ausgebildet ist, daß wenigstens eine Eigen- oder Resonanzfrequenz von natürlichen Biegeschwingungen jedes der Meßrohr, beispielsweise solchen in einem einen einzigen Schwingungsbauch aufweisenden Biegeschwingungsgrundmode, gleich einer Eigenfrequenz von natürlichen Torsionsschwingungen des nämlichen Meßrohrs, beispielsweise solchen in einem einen einzigen Schwingungsbauch aufweisenden Torsionsschwingungsgrundmode, ist.

Wie bereits erwähnt, werden beim Meßwandler 11 die für die Messung, insb. die Messung von Viskosität und/oder Reynoldszahl des strömenden Mediums, erforderlichen Reaktionskräfte im jeweils zu messenden Medium durch das Schwingenlassen der Meßrohre 18₁, 18₂, 18₃, 18₄ im sogenannten Nutz- oder Antriebsmode bewirkt. Beim erfindungsgemäßen Meßsystem ist als Nutzmode ein solcher Schwingungsmode gewählt bei dem jedes der Meßrohre 18₁, 18₂, 18₃, 18₄ zumindest anteilig Torsionsschwingungen um eine dessen jeweilige Meßrohrenden imaginär verbindende jeweils zugehörige gedachte Meßrohrlängsachse ausführt, beispielsweise mit einer jeweiligen natürlichen, dem jeweiligen Meßrohr immanente Torsionsschwingungs-Resonanzfrequenz.

Zum Anregen von mechanischen Schwingungen der Rohranordnung, mithin von Torsions- oder Torsions-/Biegeschwingungen der Meßrohre 18₁, 18₂, 18₃, 18₄, umfaßt der Meßwandler ferner eine mittels wenigstens eines - beispielsweise differentiell - auf zumindest das erste und zweite Meßrohr 18₁, 18₂, ggf. zudem auch simultan auf das dritte und vierte Meßrohr, einwirkenden elektro-mechanischen, beispielsweise elektro-dynamischen, ersten Schwingungserregers und mittels wenigstens eines - beispielsweise differentiell - auf zumindest das dritte und vierte Meßrohr 18₃, 18₄, ggf. zudem auch simultan auf das erste und zweite Meßrohr, einwirkenden elektro-mechanischen, beispielsweise elektro-dynamischen, zweiten Schwingungserregers gebildete Erregeranordnung 5, die dazu dient jedes der Meßrohre betriebsgemäß zumindest zeitweise in geeignete mechanische Schwingungen im Nutzmode - nämlich beispielsweise von Torsionsschwingungen mit einer minimalen Torsionsschwingungsresonanzfrequenz der Meßrohre und/oder Torsions-/ Biegeschwingungen - mit jeweils für die Erzeugung und die Erfassung der oben genannten Reaktionskräfte im Medium ausreichend großen Schwingungsamplitude zu versetzen bzw. nämliche Schwingungen aufrechtzuerhalten. Die vorgenannten Torsions-/ Biegeschwingungen können beispielsweise gekoppelte, also frequenzgleiche und in fester Phasenbeziehung zueinander stehende Schwingungen oder aber auch simultan bzw. intermittierend ausgeführte Torsions- und Biegeschwingungen mit unterschiedlicher Torsions- und Biegeschwingungsfrequenz sein. Demnach ist gemäß einer weiteren Ausgestaltung der Erfindung die Erregeranordnung dafür ausgelegt auch sowohl Biegeschwingungen des ersten Meßrohrs um dessen Meßrohr-Längsachse und zu den Biegeschwingungen des ersten Meßrohrs gegengleiche Biegeschwingungen des zweiten Meßrohrs um dessen Meßrohr-Längsachse als auch Biegeschwingungen des dritten Meßrohrs um dessen Meßrohr-Längsachse und zu den Biegeschwingungen des dritten Meßrohrs gegengleiche Biegeschwingungen des vierten Meßrohrs um dessen Meßrohr-Längsachse zu bewirken, mithin aktiv anzuregen, ggf. auch simultan zu den erwähnten Torsionsschwingungen jedes der Meßrohre 18₁, 18₂, 18₃, 18₄.

Der erste Schwingungserreger der Erregeranordnung dient hierbei dazu, eine von der Umformer-Elektronik aus mittels eines der Erregeranordnung zugeführten ersten elektrischen Treibersignals i_{exc1} in die Erregeranordnung eingespeiste, nicht zuletzt auch von einer Spannungshöhe und einer Stromstärke des ersten Treibersignals i_{exc1} abhängige, elektrische Erregerleistung P_{exc} entsprechend umzusetzen, nämlich in korrespondierende periodische, ggf. auch harmonische, Erregerkräfte F_{exc1} zu konvertieren, die möglichst gleichzeitig und gleichmäßig, jedoch gegensinnig auf das erste und zweite Meßrohr 18₁, 18₂, ggf. zudem auch auf das dritte und vierte Meßrohr, einwirken. Darüberhinaus dient der, beispielsweise elektro-dynamische bzw. zum ersten Schwingungserreger baugleiche, zweite Schwingungserreger nicht zuletzt dazu, in die Erregeranordnung, beispielsweise auch mittels des ersten elektrischen Treibersignals i_{exc1} eingespeiste elektrischer Erregerleistung in die simultanen Torsionsschwingungen der vier Meßrohre bewirkende mechanische Erregerkräfte F_{exc2} auf zu konvertieren.

Beim erfindungsgemäßen Meßsystem ist die mittels wenigstens zweier - hier oberhalb bzw. unterhalb der erwähnten dritten gedachten Längsschnittebene der Rohranordnung plazierten, beispielsweise im wesentlichen baugleicher, Schwingungserreger - gebildete Erregeranordnung im besonderen so ausgebildet, daß sie die eingespeiste elektrische Erregerleistung, wie bereits angedeutet, zumindest zeitweise und/oder zumindest anteilig sowohl in Torsionsschwingungen des ersten Meßrohrs 18₁ und dazu gegengleiche Torsionsschwingungen des zweiten Meßrohrs 18₂ als auch in Torsionsschwingungen des dritten Meßrohrs 18₁ und zu den Torsionsschwingungen des dritten Meßrohrs 18₃ gegengleiche Torsionsschwingungen des vierten Meßrohrs 18₄ wandelt (Anrege- oder Nutzmode).

Gemäß einer Ausgestaltung der Erfindung ist hierbei ferner vorgesehen, von der Umformer-Elektronik in die Erregeranordnung eingespeiste elektrische Erregerleistung derart in entsprechende Meßrohrschwingungen zu wandeln, daß simultan sowohl das erste und zweite Meßrohr zueinander gegengleichen Torsionsschwingungen in einem einen einzigen Schwingungsbauch aufweisenden Torsionsschwingungsgrundmode als auch das dritte und vierte Meßrohr zueinander gegengleichen Torsionsschwingungen in einem einen einzigen Schwingungsbauch aufweisenden Torsionsschwingungsgrundmode ausführen, zumindest aber simultan sowohl ein mittiges Rohrsegment des ersten Meßrohrs Drehschwingungen um eine zu einem Querschnitt nämlichen Rohrsegments senkrechte gedachte Torsionsschwingungsachse und ein mittiges Rohrsegment des zweiten Meßrohrs Drehschwingungen um eine zu einem Querschnitt nämlichen Rohrsegments senkrechte gedachte Torsionsschwingungsachse als auch ein mittiges Rohrsegment des dritten Meßrohrs Drehschwingungen um eine zu einem Querschnitt nämlichen Rohrsegments senkrechte gedachte Torsionsschwingungsachse und ein mittiges Rohrsegment des vierten Meßrohrs Drehschwingungen um eine zu einem Querschnitt nämlichen Rohrsegments senkrechte gedachte Torsionsschwingungsachse ausführen, und/oder daß jedes der Meßrohre Torsionsschwingungen in einem einen einzigen Schwingungsbauch aufweisenden Torsionsschwingungsgrundmode ausführt.

Ferner ist gemäß einer Ausgestaltung der Erfindung vorgesehen, den ersten Schwingungserreger als differentiell auf das erste und zweite Meßrohr einwirkenden Schwingungserreger auszubilden, nämlich daß die Erregeranordnung Schwingungen der Meßrohre, mithin gegengleiche Torsionsschwingungen des ersten und zweiten Meßrohrs oder gegengleiche Biege-/ Torsionsschwingungen des ersten und zweiten Meßrohrs, dadurch bewirkt, daß eine mittels des ersten Schwingungserregers 5₁ generierte, auf das erste Meßrohr wirkende Erregerkraft zu einer mittels des ersten Schwingungserregers zeitgleich generierten, auf das zweite Meßrohr wirkenden Erregerkraft entgegengerichtet, insb. gegengleich, ist. Ferner können die Erregeranordnung und das wenigstens eine Treibersignal i_{exc1} hierbei in vorteilhafter Weise derart ausgebildet und so aufeinander abgestimmt sein, daß damit das erste Meßrohr 18₁ und das zweite Meßrohr 18₂ im Betrieb zumindest zeitweise - beispielsweise auch simultan mit den Torsionsschwingungen - zu gegenphasigen Biegeschwingungen um die jeweilige gedachte Meßrohr-Längsachse angeregt werden. In Ergänzung dazu ist der erste Schwingungserreger ferner als ein Schwingungserreger vom elektrodynamischen Typ ausgebildete. Demnach weist der Schwingungserreger 5₁ bei dieser Ausgestaltung einen am ersten Meßrohr 18₁ gehalterten Permanentmagneten und eine von dessen Magnetfeld durchfluteten, am zweiten Meßrohr 18₂ gehalterte Zylinderspule auf, insb. ist der Schwingungserreger 5₁ nach Art einer Tauchspulenanordnung ausgebildet, bei der die Zylinderspule koaxial zum Permanentmagneten angeordnet und dieser als innerhalb nämlicher Zylinderspule bewegter Tauchanker ausgebildet ist. Ferner ist hierbei vorgesehen, daß das erste Treibersignal i_{exc1} dem ersten Schwingungserreger 5₁ zugeführt bzw. in nämlichem Schwingungserreger 5₁ entsprechend umzusetzende elektrische Erregerleistung darin eingespeist ist, indem die Zylinderspule des Schwingungserregers 5₁ von einem von einer mittels des Treibersignals bereitgestellten veränderlichen ersten Erregerspannung getriebenen ersten Erregerstrom durchflossen ist.

Gemäß einer weiteren Ausgestaltung der Erfindung ist der erste Schwingungserreger 5₁ ferner so ausgebildet und an der Rohranordnung angebracht, daß die damit erzeugten - hier im wesentlichen translatorische - Erregerkräfte F_{exc1} entlang einer von der erwähnten dritten gedachten Längsschnittebene - hier auch von der ersten und der zweiten gedachten Längsschnittebene - beabstandeten und, abgesehen von einer Wirkprinzip bedingten geringfügigen Krümmung und Bauteiletoleranz bedingtem geringfügigem Versatz, zumindest näherungsweise parallel dazu, beispielsweise auch im wesentlichen quer zur Meßrohr-Längsachse des ersten Meßrohrs und zur Meßrohr-Längsachse des zweiten Meßrohrs, verlaufenden gedachten Wirkungslinie in Rohranordnung eingeleitet und im Ergebnis dessen in jedem der Meßrohre entsprechende Torsionsmomente Mₜ₁₈₁, Mₜ₁₈₂ um die jeweilige Meßrohr-Längsachse erzeugt werde können. Im besonderen ist der erste Schwingungserreger 5₁ dabei so ausgebildet und im Meßwandler angeordnet, daß die Wirkungslinie, mit der die vom ersten Schwingungserreger erzeugten Erregerkräfte in Rohranordnung eingeleitet sind, einen senkrechten Abstand zur dritten gedachte Längsschnittebene der Rohranordnung aufweist, der größer als dreiviertel des Kalibers des ersten Meßrohrs, insb. größer als 100% des Kalibers des ersten Meßrohrs, und/oder kleiner als 200% des Kalibers des ersten Meßrohrs, beispielsweise auch kleiner als 150% des Kalibers des ersten Meßrohrs, ist. Im Ergebnis dessen ist der erste Schwingungserreger, wie aus der Zusammenschau der Fig. 1a, 1b, 1c, 3 und 4 ohne weiteres ersichtlich, also auf einer vom zweiten Schwingungserreger 5₂ abgewandten - hier oberen - Seite der dritten gedachten Längsschnittebene XZ₃ der Rohranordnung im Meßwandler plaziert, und zwar im hier gezeigten Ausführungsbeispiel auch auf einer vom zweiten Schwingungserreger 5₁ abgewandten - hier oberen - Seite der ersten gedachten Längsschnittebene XZ₁ der Rohranordnung.

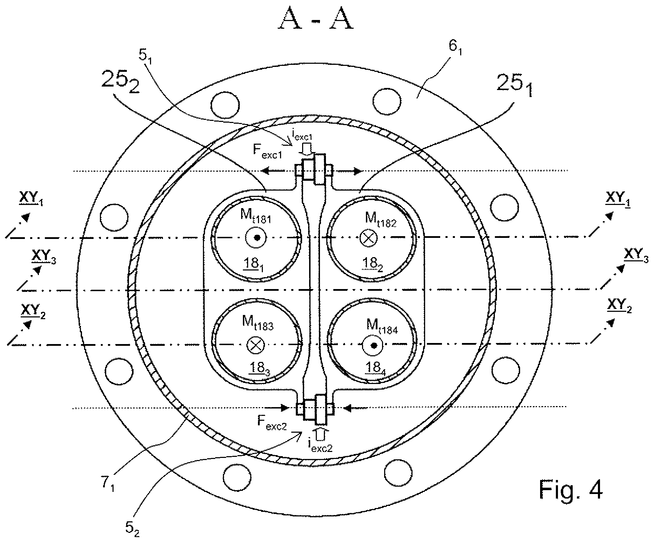

Nach einer anderen Ausgestaltung der Erfindung ist der zweite Schwingungserreger, nicht zuletzt auch zwecks Erhöhung der Robustheit bzw. Stabilität, mit der die Schwingungen im Nutzmode tatsächlich angeregt sind und/oder zwecks der - simultanen oder alternativen - Erregung von Torsions- und Biegeschwingungen bei jedem der Meßrohre, in vorteilhafter Weise ferner so ausgebildet und an der Rohranordnung angebracht sein, daß die damit erzeugten Erregerkräfte F_{exc2} entlang einer von der erwähnten gedachten dritten Längsschnittebene XZ₃ beabstandeten und zumindest näherungsweise parallel dazu, beispielsweise auch im wesentlichen quer zur Meßrohr-Längsachse des dritten Meßrohrs und zur Meßrohr-Längsachse des vierten Meßrohrs, verlaufenden gedachten Wirkungslinie in Rohranordnung eingeleitet und im Ergebnis dessen im dritten und vierten Meßrohr entsprechende Torsionsmomente Mₜ₁₈₃, Mₜ₁₈₄ um die jeweilige Meßrohr-Längsachse erzeugt sind. Wie aus der Zusammenschau der Fig. 1a, 1b, 1c, 3 und 4 ohne weiteres ersichtlich, ist der zweite Schwingungserreger 5₂ hierfür auf einer vom ersten Schwingungserreger 5₁ abgewandten - hier unteren - Seite der dritten gedachten Längsschnittebene XZ₃ der Rohranordnung im Meßwandler plaziert, hier zudem auch auf einer vom ersten Schwingungserreger 5₁ abgewandten - hier unteren - Seite der zweiten gedachten Längsschnittebene XZ₂ der Rohranordnung. Im besonderen sind der erste Schwingungserreger 5₁ und der zweite Schwingungserreger 5₂ gemäß einer weiteren Ausgestaltung ferner so ausgebildet und im Meßwandler angeordnet, daß, wie aus der Zusammenschau der Fign. 1 und 4 ohne weiters ersichtlich, die Wirkungslinie, mit der die vom jeweiligen Schwingungserregern erzeugten Erregerkräfte jeweils in Rohranordnung eingeleitet sind, jeweils einen senkrechten Abstand zur gedachte dritten Längsschnittebene XZ₃ der Rohranordnung aufweist, der größer als dreiviertel des Kalibers des ersten Meßrohrs, insb. größer als 100% des Kalibers des ersten Meßrohrs, und/oder kleiner als 200% des Kalibers des ersten Meßrohrs ist, insb. auch etwa in der Größenordnung von 150% nämlichen Kalibers liegt. Im hier gezeigten Ausführungsbeispiel sind die beiden Schwingungserreger 5₁, 5₂ zudem so im Meßwandler plaziert, daß der oberhalb der ersten gedachten Längsschnittebene XZ₁ der Rohranordnung angeordnete erste Schwingungserreger und der unterhalb der zweiten gedachten Längsschnittebene XZ₂ angeordnete zweite Schwingungserreger jeweils in gleichem Abstand zur dritten gedachten Längsschnittebene XZ₃, mithin auch äquidistant zu einem Massenschwerpunkt der Rohranordnung, positioniert sind. Zum Erzeugung unterschiedlich großer Torsionsmomente - beispielsweise auch zwecks Anregung von gekoppelten Torsions-/ Biegeschwingungen - können die beiden Schwingungserreger aber durchaus auch mit unterschiedlichem Abstand zum Massenschwerpunkt der Rohranordnung bzw. zur dritten gedachten Längsschnittebene XZ₃ plaziert sein.

Nicht zuletzt auch zwecks der Realisierung des vorgenannten, insb. auch der Wandlung von seitens des ersten bzw. zweiten Schwingungserregers erzeugten im wesentlichen translatorischen Erregerkräften in entsprechende Torsionsmomenten dienenden, Abstandes des jeweiligen Schwingungserregers jeweils von den Meßrohren, wie auch zwecks Übertragung der seitens des ersten Schwingungserregers erzeugten Erregerkräften auch auf das dritte und vierte Meßrohr bzw. der seitens des zweiten Schwingungserregers erzeugten Erregerkräften auch auf das erste und zweite Meßrohr, umfaßt der Meßwandler gemäß einer weiteren Ausgestaltung der Erfindung ferner ein sowohl am ersten Meßrohr als auch am dritten Meßrohr, ansonsten aber an keinem weiteren der Meßrohre fixiertes, beispielsweise im wesentlichen plattenförmiges, erstes Kopplerelement 25₁ erster Art zum Haltern von Komponenten des ersten Schwingungserregers, beispielsweise einer Zylinderspule oder einem Permanentmagneten, und zum Einleiten einer mittels des ersten Schwingungserregers generierten Erregerkraft in das erste Meßrohr und/oder zum Wandeln einer mittels des ersten Schwingungserregers generierten Erregerkraft in ein auf das erste Meßrohr wirkendes Torsionsmoment Mₜ₁₈₁ und ein auf das dritte Meßrohr wirkendes Torsionsmoment Mₜ₁₈₃, sowie ein sowohl am zweiten Meßrohr als auch am dritten Meßrohr, ansonsten aber an keinem weiteren der Meßrohre fixiertes, beispielsweise im wesentlichen plattenförmiges und/oder zum ersten Kopplerelement 25₁ erster Art baugleiches, zweites Kopplerelement 25₁ erster Art zum Haltern von Komponenten des ersten Schwingungserregers, beispielsweise also einer Zylinderspule bzw. einem Permanentmagneten, und zum Einleiten einer mittels des ersten Schwingungserregers generierten Erregerkraft in das zweite Meßrohr und/oder zum Wandeln einer mittels des ersten Schwingungserregers generierten Erregerkraft in ein auf das zweite Meßrohr wirkendes Torsionsmoment Mₜ₁₈₂ und ein auf das vierte Meßrohr wirkendes Torsionsmoment Mₜ₁₈₄. Wie aus der Zusammenschau der Fig. 1a, 1b, 1c, 3 und 4 ohne weiteres ersichtlich, sind das erste und zweite Kopplerelement 25₁, 25₂ erster Art möglichst einander gegenüberliegend, jedoch in einer relative Schwingungsbewegungen der Meßrohre ermöglichenden Weise voneinander beabstandet im Meßwandler 11 plaziert. Desweiteren sind im hier gezeigten Ausführungsbeispiel das erste und zweite Kopplerelement erster Art jeweils - mithin auch der davon gehalterte Schwingungserreger - im Bereich von etwa der halben freien Schwinglänge des jeweiligen Meßrohrs angeordnet. Mittels der beiden den wenigstens einen Schwingungserreger halternden Kopplerelemente 25₁, 25₂ erster Art kann so auf sehr effektive, gleichwohl sehr einfache Weise sichergestellt werden, daß die mittels des Schwingungserregers 5₁ generierte Erregerkraft zueinander in fester Phasenbeziehung stehende, frequenzgleich Torsions- und Biegeschwingungen der Meßrohre bewirkt kann.

Ferner ist nach einer weiteren Ausgestaltung der Erfindung, nicht zuletzt auch für den erwähnten Fall, daß der erste Schwingungserreger 5₁ vom elektrodynamischen Typ ist, ein als eine Komponente des Schwingungserregers dienender Permanentmagnet mittels des am ersten Meßrohr fixierten - hier auch als ein auf das erste Meßrohr wirkenden Torsionsmomenten bewirkenden Hebelarm dienenden - Kopplerelements erster Art am ersten Meßrohr gehaltert, etwa an einem vom ersten Meßrohr abgelegenen, distalen ersten Ende des ersten Kopplerelements 25₁ erster Art. Desweiteren ist auch eine vom Magnetfeld nämlichen Permanentmagneten durchflutete, als eine weitere Komponente des Schwingungserregers dienende Zylinderspule mittels des am zweiten und vierten Meßrohr fixierten - hier auch als ein auf das zweite bzw. vierte Meßrohr wirkenden Torsionsmomente bewirkenden Hebelarm dienenden - Kopplerelements erster Art an der Rohranordnung gehaltert, etwa an einem vom zweiten Meßrohr abgelegenen, distalen ersten Ende des zweiten Kopplerelements 25₂ erster Art.

Nach einer weiteren Ausgestaltung der Erfindung ist das wenigstens eine Treibersignal i_{exc1} ferner so ausgebildete, daß es zumindest zeitweise, also zumindest über einen für die Ermittlung zumindest eines Viskositäts-Meßwerts ausreichenden Zeitraum, periodisch und/oder mit wenigstens einer mit einer einer Eigenfrequenz eines natürlichen Schwingungsmodes der Rohranordnung, mithin der Torsionsschwingungs-Resonanzfrequenz des für die Messung gewählten Nutzmodes, entsprechenden Signalfrequenz veränderlich ist. Darüberhinaus sind gemäß einer weiteren Ausgestaltung der Erfindungauch die mittels des zweiten Schwingungserregers erzeugten - hier zumindest über einen für die Ermittlung eines Viskositäts-Meßwerts ausreichend langen Zeitraum periodischen - Erregerkräfte mit wenigstens einer mit einer einer Eigenfrequenz eines natürlichen Schwingungsmodes der Rohranordnung entsprechenden Signalfrequenz veränderlich.

Das wenigstens eine Treibersignal und insoweit die damit erzeugten Erregerkräfte F_{exc1} können hierbei in dem Fachmann an und für sich bekannter Weise z.B. mittels einer in der bereits erwähnten Meß- und Betriebselektronik vorgesehenen Strom- und/ oder Spannungs-Regelschaltung, hinsichtlich ihrer Amplitude und, z.B. mittels einer ebenfalls in Umformer-Elektronik vorgesehenen Phasen-Regelschleife (PLL), hinsichtlich ihrer Frequenz eingestellt werden, vgl. hierzu beispielsweise auch die US-A 48 01 897 oder die US-B 63 11 136, so daß also das Treibersignals eine veränderliche, nicht zuletzt auch der tatsächlich erforderlichen Erregerleistung entsprechend angepaßte, maximale Spannungshöhe und/oder eine veränderlichen maximalen Stromstärke aufweist. Dabei kann das erste Treibersignal i_{exc1} auch so ausgebildet sein, daß es eine Vielzahl von Signalkomponenten mit voneinander verschiedener Signalfrequenz aufweist, und daß wenigstens eine der Signalkomponenten, etwa eine hinsichtlich einer Signalleistung dominierende Signalkomponente, des ersten Treibersignals i_{exc1} eine einer Eigenfrequenz eines natürlichen Schwingungsmodes der Rohranordnung entsprechende Signalfrequenz aufweist, beispielsweise also jener Eigenfrequenz des gewählten Nutzmodes, mithin der des natürlichen Torsionsschwingungsmodes der Rohranordnung, in dem alle vier Meßrohre Torsionsschwingungen ausführen bzw. wenigstens zwei Meßrohre gegengleiche Torsionsschwingungen ausführen.

Nach einer Weiterbildung der Erfindung ist die Umformer-Elektronik ferner dafür ausgelegt, elektrische Erregerleistung auch mittels eines, beispielsweise mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten zweiten elektrischen Treibersignals i_{exc2} in die Erregeranordnung einzuspeisen, so daß die Erregeranordnung im Ergebnis dessen auch mittels des zweiten Treibersignals eingespeiste, nunmehr auch von einer Spannungshöhe und einer Stromstärke auch des zweiten Treibersignals abhängige, elektrische Erregerleistung zumindest zeitweise in die erwähnten Torsionsschwingungen ersten Meßrohrs und die dazu gegengleichen Torsionsschwingungen des zweiten Meßrohrs sowie die Torsionsschwingungen des dritten Meßrohrs und die dazu gegengleichen Torsionsschwingungen des vierten Meßrohrs wandelt. Das zweite Treibersignal kann hierbei ebenfalls eine Vielzahl von Signalkomponenten mit voneinander verschiedener Signalfrequenz aufweisen, von denen wenigstens eine Signalkomponente - etwa eine hinsichtlich einer Signalleistung dominierende Signalkomponente - eine einer Eigenfrequenz eines natürlichen Schwingungsmodes der Rohranordnung entsprechende Signalfrequenz aufweist, insb. eine einer Eigenfrequenz eines natürlichen Torsionsschwingungsmodes der Rohranordnung, in dem die Meßrohre jeweils Torsionsschwingungen mit einem einzigen Schwingungsbauch ausführen, entsprechende. Nach einer weiteren Ausgestaltung der Erfindung ist das, insb. simultan zum ersten Treibersignal erzeugte, zweite elektrische Treibersignal i_{exc2} zum ersten Treibersignal hinsichtlich wenigstens einer Signalfrequenz gleich, insb. derart, daß eine hinsichtlich der Stromstärke dominierende Signalkomponente des ersten wie auch des zweiten Treibersignals frequenzgleich sind. In Ergänzung dazu ist ferner vorgesehen, das zweite elektrische Treibersignal zumindest zeitweise zum ersten Treibersignal, beispielsweise um einen Phasenwinkel, der in einem Bereich von 90° bis 180° liegt oder auch genau 180° beträgt, phasenverschoben in die Erregeranordnung einzuspeisen oder zumindest die beiden Treibersignale zumindest zeitweise hinsichtlich ihrer Phasenlage so gegeneinander auszurichten, daß die hinsichtlich der Stromstärke dominierende Signalkomponente des ersten Treibersignals, beispielsweise um einen Phasenwinkel, der in einem Bereich von 90° bis 180° liegt oder auch genau 180° beträgt, phasenverschoben gegenüber der hinsichtlich der maximalen Stromstärke dominierende Signalkomponente des zweiten Treibersignals bzw. phasenverschoben gegenüber dessen hinsichtlich der Signalleistung dominierende Signalkomponente ist. Darüberhinaus kann es im übrigen durchaus von Vorteil sein, auch das zweite elektrische Treibersignal hinsichtlich dessen maximaler Spannungshöhe und/oder dessen maximaler Stromstärke veränderlich, ggf. auch im Betrieb einstellbar auszubilden. Alternativ oder in Ergänzung zur Verwendung gegeneinander phasenverschobener Treibersignale ist gemäß einer weiteren Ausgestaltung der Erfindung vorgesehen, das zweite elektrische Treibersignal zumindest zeitweise mit einer im Vergleich zum ersten Treibersignal geringeren maximale Stromstärke in die Erregeranordnung einzuspeisen, zumindest aber die beiden Treibersignale so aufeinander abzustimmen, daß die hinsichtlich der Stromstärke dominierende Signalkomponente des ersten Treibersignals zumindest zeitweise eine Signalleistung aufweist, die, beispielsweise um mehr als 30%, größer ist, als die Signalleistung der hinsichtlich der Stromstärke dominierende Signalkomponente des zweiten Treibersignals, so daß im Ergebnis die mittels des ersten Schwingungserregers erzeugte Erregerkraft F_{exc1} zumindest zeitweise eine Intensität aufweist, die von einer Intensität der mittels des zweiten Schwingungserregers erzeugten Erregerkraft F_{exc2} verschieden ist, und/oder daß das mittels des ersten Schwingungserregers im ersten und zweiten Meßrohr jeweils erzeugte Torsionsmoment zumindest zeitweise einen Betrag aufweist, der von einem Betrag eines mittels des zweiten Schwingungserregers gleichzeitig im dritten bzw. vierten Meßrohr erzeugten Torsionsmoments jeweils verschieden ist.

Nach einer weiteren Ausgestaltung der Erfindung sind Rohr- und die darauf einwirkende Erregeranordnung so ausgebildet und das wenigstens eine darin eingespeiste Treibersignal i_{exc1} zumindest zeitweise so auf Rohr- und Erregeranordnung abgestimmt, daß jedes der Meßrohre, angeregt von der Erregeranordnung, im Betrieb zumindest zeitweise Biegeschwingungen, beispielsweise Biegeschwingungen in einem einen einzigen Schwingungsbauch aufweisenden Biegeschwingungsgrundmode, ausführt, ggf. auch simultan mit den aktiv angeregten Torsionsschwingungen. Die Biegeschwingungen können dabei beispielsweise mit dazu jeweils gleichfrequenten Torsionsschwingungen, etwa gegengleichen Torsionsschwingungen in einem einen einzigen Schwingungsbauch aufweisenden Torsionsschwingungsgrundmode, gekoppelt sein. Gemäß einer weiteren Ausgestaltung der Erfindung sind die Meßrohre mittels der Erregeranordnung 5 im Betrieb zumindest anteilig zu Biegeschwingungen angeregt, die eine Biegeschwingungsfrequenz aufweisen, die in etwa gleich einer momentanen mechanischen Resonanzfrequenz der Meßrohre bzw. der damit gebildeten Rohranordnung ist, oder die zumindest in der Nähe einer solchen Eigen- oder Resonanzfrequenz liegt. Die momentanen mechanischen Biegeschwingungsresonanzfrequenzen sind bekanntlich in besonderem Maße von Größe, Form und Material der Meßrohre, nicht zuletzt aber auch von einer momentanen Dichte des durch die Meßrohre hindurchströmenden Mediums abhängig und können insoweit im Betrieb des Meßwandlers innerhalb eines durchaus einige Hertz breiten Nutz-Frequenzbandes veränderlich sein. Bei Anregung der Meßrohre auf Biegeschwingungsresonanzfrequenz kann einerseits anhand der momentan angeregten Schwingungsfrequenz zusätzlich auch eine mittlere Dichte des durch die Meßrohre momentane strömenden Mediums leicht ermittelt werden. Anderseits kann so auch die für die Aufrechterhaltung der angeregten Biegeschwingungen momentan erforderliche elektrische Leistung minimiert werden.

Im besonderen werden die Meßrohre 18₁, 18₂, 18₃, 18₄ angetrieben von der Erregeranordnung 5, ferner zumindest zeitweise mit im wesentlichen gleicher Schwingungsfrequenz, insb. auf einer gemeinsamen natürlichen mechanischen Eigenfrequenz der Rohranordnung, schwingen gelassen. Im besonderen eignet sich als hierbei ein jedem der Meßrohre naturgemäß ebenfalls innewohnender Biegeschwingungsgrundmode, der bei minimaler Biegeschwingungs-Resonanzfrequenz genau einen Biege-Schwingungsbauch aufweist. Beispielsweise können die Meßrohre im Betrieb von der daran gehalterten elektro-mechanischen Erregeranordnung 5 zu Biegeschwingungen, insb. auf einer momentanen mechanischen Eigenfrequenz der mittels der Meßrohre gebildeten Rohranordnung, angeregt werden, bei denen sie - zumindest überwiegend - in einer jeweiligen Schwingungsebene lateral ausgelenkt und, wie aus der Zusammenschau der Fign. 1, 3, 4 und 5 ohne weiteres ersichtlich, zueinander im wesentlichen gegenphasig schwingen gelassen werden. Dies im besondern derart, daß von jedem der Meßrohre im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende gedachte Meßrohr-Längsachse ausgebildet sind, wobei die Meßrohr-Längsachsen beim erfindungsgemäßen Meßsystem mit zueinander parallelen Meßrohren gleichermaßen zueinander parallel verlaufen, wie die Meßrohre, und im übrigen auch im wesentlichen parallel zu einer die beiden Strömungsteiler imaginär verbindenden und durch einen Massenschwerpunkt der Rohranordnung verlaufenden gedachten Längsachse des gesamten Meßwandlers sind. Anders gesagt, können die Meßrohre, wie bei Meßwandlern vom Vibrationstyp durchaus üblich, jeweils zumindest abschnittsweise in einem Biegeschwingungsmode nach der Art einer beidseitig eingespannten Saite schwingen gelassen werden. Infolge von durch die zu Biegeschwingungen angeregten Meßrohre hindurchströmendem Medium werden darin zudem auch vom Massendurchfluß abhängige Corioliskräfte induziert, die wiederum zusätzliche, höheren Schwingungsmoden der Meßrohre - dem sogenannten Coriolismode - entsprechende, zudem auch sensorisch erfaßbare Verformungen der Meßrohre bewirken. In vorteilhafter Weise können das Schwingungsverhalten des mittels der vier Meßrohre 18₁, 18₂, 18₃, 18₄ gebildeten Rohranordnung - zusammen mit der Erreger- und der Sensoranordnung - wie auch die die Erregeranordnung steuernden Treibersignale hierbei ferner so aufeinander abgestimmt sein, daß, wie bereits angedeutet, zumindest die aktiv angeregten Schwingungen der Meßrohre 18₁, 18₂, 18₃, 18₄ so ausgebildet sind, daß das erste und das zweite Meßrohr 18₁, 18₂ sowohl zueinander im wesentlichen gegenphasige Torsionsschwingungen, also gegengleiche Torsionsschwingungen mit einer gegenseitigen Phasenverschiebung von etwa 180°, als auch zueinander im wesentlichen gegenphasige Biegeschwingungen ausführen und daß das dritte und das vierte Meßrohr 18₁, 18₂ sowohl zueinander im wesentlichen gegenphasige Torsionsschwingungen, also gegengleiche Torsionsschwingungen mit einer gegenseitigen Phasenverschiebung von etwa 180°, als auch zueinander im wesentlichen gegenphasige Biegeschwingungen ausführen.

Für den erwähnten Fall, daß der Meßwandler Kopplerelemente 25₁, 25₂ erster Art aufweist, kann daran neben dem ersten Schwingungserreger 5₁ auch der zweite Schwingungserreger 5₂ entsprechend gehaltert sein, beispielsweise auch in der Weise, daß, wie aus den Fig. 1a, 1b, 1c bzw. 4 ohne weiteres ersichtlich, ein minimaler Abstand zwischen dem ersten und zweiten Schwingungserreger 5₁, 5₂ insgesamt mehr als 2.5-mal, möglichst aber höchstens 4-mal so groß ist, wie ein Rohr-Außendurchmessers der Meßrohre 18₁, 18₂, 18₃, 18₄ zumindest aber des ersten Meßrohrs 18₁. Hierdurch ist insgesamt ein optimale Ausnutzung des im Innenraum des Aufnehmer-Gehäuses 7₁ angeboten Platzes wie auch eine hohe Effektivität der Schwingungserreger 5₁, 5₂ erreichbar. Nicht zuletzt auch für den erwähnten Fall, daß der sowohl der erste als auch der zweite Schwingungserreger vom elektrodynamischen Typ ist, ist nach einer weiteren Ausgestaltung der Erfindung, ein als eine Komponente des zweiten Schwingungserregers dienender Permanentmagnet mittels des am ersten und dritten Meßrohr fixierten ersten Kopplerelements erster Art gehaltert, und ist ein eine vom Magnetfeld nämlichen Permanentmagneten durchflutete, als eine weitere Komponente des Schwingungserregers dienende Zylinderspule mittels des am zweiten und vierten Meßrohr fixierten zweiten Kopplerelements erster Art am zweiten Meßrohr gehaltert. In vorteilhafter Weise sind das erste und zweite Kopplerelement 25₁, 25₂ erster Art hierbei ferner so im Meßwandler plaziert, daß sowohl ein Massenschwerpunkt des ersten Kopplerelements 25₁ erster Art als auch ein Massenschwerpunkt des zweiten Kopplerelements 25₂ erster Art innerhalb einer gedachten Querschnittebene der Rohranordnung liegen, in der sowohl die Wirkungslinie der vom ersten Schwingungserreger erzeugten Erregerkräfte, als auch die Wirkungslinie der vom zweiten Schwingungserreger erzeugten Erregerkräfte verlaufen. Im Ergebnis ist also hierbei jeder der, insb. baugleichen, Schwingungserreger 5₁; 5₂ jeweils gleichermaßen an den zwei einander gegenüberliegenden Kopplerelementen 25₁, 25₂ erster Art gehaltert, so daß also der Meßwandler durchaus den in den eingangs erwähnten WO-A 96/08697 oder US-A 2010/0050783 gezeigten ähnelt, allerdings u.a. mit dem gravierenden Unterschied, daß beim Meßwandler des erfindungsgemäßen Meßsystems u.a. die mittels des ersten Schwingungserregers erzeugten Erregerkräfte F_{exc1} zu den mittels des zweiten Schwingungserregers erzeugten Erregerkräfte F_{exc2} zumindest anteilig und/oder zumindest zeitweise entgegengesetzt und/oder mit unterschiedlicher Intensität auf die Rohranordnung wirken und im Ergebnis dessen Torsionsschwingungen der Meßrohre aktiv angeregt sind. Ferner ist bei Verwendung des zweiten Schwingungserreger nach einer weiteren Ausgestaltung der Erfindung vorgesehen, daß das zweite Treibersignal i_{exc2} dem zweiten Schwingungserreger zugeführt bzw. darin entsprechend umzusetzende elektrische Erregerleistung eingespeist ist, indem die Zylinderspule des zweiten Schwingungserregers von einem von einer mittels des zweiten Treibersignals bereitgestellten veränderlichen zweiten Erregerspannung getriebenen zweiten Erregerstrom durchflossen ist.

Wie aus den Fig. 1a, 1b, 1c, 2, 3 und 5 ersichtlich und bei Meßwandlern der in Rede stehenden Art üblich, ist im Meßwandler 11 ferner eine mittels wenigstens eines auf, beispielsweise einlaß- oder auslaßseitige, Vibrationen, nicht zuletzt auch auf die mittels der Erregeranordnung 5 angeregten gegengleichen Torsions-Schwingungen oder Torsions-/Biegeschwingungen, zumindest der Meßrohre 18₁, 18₂ reagierenden, beispielsweise elektro-dynamischen, ersten Schwingungssensors 19₁ gebildete Sensoranordnung 19 zum, beispielsweise differentiellen, Erfassen von mechanischen Schwingungen, nicht zuletzt auch von Torsionsschwingungen oder Torsions-/ Biegeschwingungen, der Meßrohre, und zum Erzeugen wenigstens eines mechanische Schwingungen, nicht zuletzt Torsionsschwingungen, ggf. auch Biegeschwingungen, der Meßrohre entsprechend repräsentierenden Schwingungsmeßsignals uₛₑₙₛ₁ vorgesehen, das zumindest anteilig Torsionsschwingungen des ersten Meßrohrs 18₁, nicht zuletzt auch die angeregten Torsionsschwingungen desselben relativ zu gegengleichen Torsionsschwingungen des zweiten Meßrohrs 18₂, repräsentiert, und das hinsichtlich wenigstens eines Signalparameters, beispielsweise einer Frequenz, einer Signalamplitude, mithin einer Signalspannung, und/oder einer Phasenlage relativ zum wenigstens einen Treibersignal i_{exc1} von der von der zu erfassenden Meßgröße, wie etwa der Viskosität des Mediums, der Dichte und der Massendurchflußrate, mit beeinflußt ist.

Gemäß einer weiteren Ausgestaltung der Erfindung ist die Sensoranordnung mittels eines, beispielsweise elektrodynamischen, Torsionsschwingungen oder Torsions-/ Biegeschwingungen des ersten Meßrohrs 18₁ relativ zum zweiten Meßrohr 18₂ differentiell erfassenden ersten Schwingungssensors 19₁ gebildet sowie eines, beispielsweise elektrodynamischen, Torsionsschwingungen oder Torsions-/ Biegeschwingungen des ersten Meßrohrs 18₁ relativ zum zweiten Meßrohr 18₂ differentiell erfassenden zweiten Schwingungssensors 19₂ gebildet, welche beiden Schwingungssensoren jeweils auf Bewegungen der Meßrohre 18₁, 18₂, insb. deren torsionsschwingungsbedingten Verdrehungen bzw. Verformungen, ggf. aber auch auf laterale Auslenkungen der Meßrohre, reagierend, das erste Schwingungsmeßsignal Uₛₑₙₛ₁ bzw. ein zweites Schwingungsmeßsignal Uₛₑₙₛ₂ liefern. Dies beispielsweise auch derart, daß die wenigstens zwei der von der Sensoranordnung 19 gelieferten Schwingungsmeßsignale Uₛₑₙₛ₁, Uₛₑₙₛ₂ eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Der erste Schwingungssensor 19₁ kann beispielsweise einlaßseitig der Rohranordnung und der zweite Schwingungssensor 19₂ auslaßseitig der Rohranordnung angeordnet sein, etwa derart, daß die beiden, beispielsweise einander baugleichen, Schwingungssensoren 19₁, 19₂ - wie bei Meßwandlern der in Rede stehenden Art durchaus üblich - im wesentlichen äquidistant zum wenigstens einen Schwingungserreger 5₁, also jeweils gleichweit entfernt von nämlichem Schwingungserreger 5₁, im Meßwandler 11 sind. Zur Gewährleistung einer möglichst hohen Empfindlichkeit des Meßwandlers, nicht zuletzt auch auf den mittels Biegeschwingungen der Meßrohre ggf. erfaßten Massendurchfluß, sind nach einer weiteren Ausgestaltung der Erfindung die Meßrohre die Schwingungssensoren hierbei so im Meßwandler angeordnet, daß eine einem minimalen Abstand zwischen dem ersten Schwingungssensor 19₁ und dem zweite Schwingungssensor 19₂ entsprechende Meßlänge, L₁₉, des Meßwandlers mehr als 500 mm, insb. mehr als 600 mm, beträgt.

Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind und/oder mittels als Hebelarm dienenden Kopplerelementen erster Art von der gedachten ersten bzw. zweiten gedachten Längsschnitteben der Rohranordnung entfernt an den Meßrohren gehaltert sind. Dementsprechend weist der Meßwandler, insb. für den erwähnten Fall, daß der wenigstens eine Schwingungserreger mittels zweier Kopplerelemente 25₁, 25₂ erster Art an den wenigstens zwei Meßrohren gehaltert ist, ferner ein, insb. lediglich, am ersten Meßrohr fixiertes, beispielsweise plattenförmiges und/oder ansonsten an keinem weiteren der Meßrohre fixiertes, drittes Kopplerelement 25₃ erster Art, zum Haltern von Komponenten des ersten Schwingungssensors, etwa einer Zylinderspule zum Erzeugen einer der Bildung des ersten Schwingungssignals dienenden elektrischen Spannung oder einem Permanentmagneten, und zum Übertragen einer vom ersten Meßrohr ausgeführten Schwingungsbewegung auf den Schwingungssensor, nicht zuletzt auch zum Wandeln einer vom ersten Meßrohr ausgeführten Torsionsschwingungsbewegung in eine davon abhängige Translationsbewegung, ein am zweiten Meßrohr fixiertes, beispielsweise plattenförmiges und/oder zum dritten Kopplerelement 25₃ erster Art baugleiches und/oder ansonsten an keinem weiteren der Meßrohre fixiertes, viertes Kopplerelement 25₄ erster Art, zum Haltern von Komponenten des ersten Schwingungssensors, etwa einer Zylinderspule bzw. einem Permanentmagneten, und zum Übertragen einer vom zweiten Meßrohr ausgeführten Schwingungsbewegung auf den Schwingungssensor bzw. zum Wandeln einer vom ersten Meßrohr ausgeführten Torsionsschwingungsbewegung in eine davon abhängige Translationsbewegung, ein am ersten Meßrohr fixiertes, beispielsweise plattenförmiges und/oder ansonsten an keinem weiteren der Meßrohre fixiertes, fünftes Kopplerelement 25₅ erster Art, zum Haltern von Komponenten des zweiten Schwingungsensors, beispielsweise einer Zylinderspule zum Erzeugen einer der Bildung des zweiten Schwingungssignals dienenden elektrischen Spannung oder einem Permanentmagneten, und zum Übertragen einer vom ersten Meßrohr ausgeführten Schwingungsbewegung auf den Schwingungssensor bzw. zum Wandeln einer vom ersten Meßrohr ausgeführten Torsionsschwingungsbewegung in eine davon abhängige Translationsbewegung, sowie ein am zweiten Meßrohr fixiertes, beispielsweise plattenförmiges und/oder zum fünften Kopplerelement 25₅ erster Art baugleiches und/oder ansonsten an keinem weiteren der Meßrohre fixiertes, sechstes Kopplerelement 25₆ erster Art, zum Haltern von Komponenten des zweiten Schwingungssensors, beispielsweise einer Zylinderspule bzw. einem Permanentmagneten, und zum Übertragen einer vom zweiten Meßrohr ausgeführten Schwingungsbewegung auf den Schwingungssensor bzw. zum Wandeln einer vom ersten Meßrohr ausgeführten Torsionsschwingungsbewegung in eine davon abhängige Translationsbewegung.

Gemäß einer Weiterbildung der Erfindung ist die Sensoranordnung 19 zudem auch mittels eines, insb. elektrodynamischen und/oder Schwingungen des ersten Meßrohrs 18₃ relativ zum zweiten Meßrohr 18₄ differentiell erfassenden, einlaßseitigen dritten Schwingungssensors 19₃ sowie eines, insb. elektrodynamischen und/oder Schwingungen des ersten Meßrohrs 18₃ relativ zum zweiten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃, im Falle elektrodynamischer Schwingungssensoren deren jeweiligen Zylinderspulen, elektrisch seriell verschaltet sein, beispielsweise derart, daß ein gemeinsames Schwingungsmeßsignal einlaßseitige Schwingungen des ersten Meßrohrs 18₁ relativ zum zweiten Meßrohr 18₂ repräsentiert. Alternativ oder in Ergänzung können auch der zweite und vierte Schwingungssensor 19₂, 19₄, im Falle elektrodynamischer Schwingungssensoren deren jeweiligen Zylinderspulen, derart elektrisch seriell verschaltet sein, daß ein gemeinsames Schwingungsmeßsignal beider Schwingungssensoren 19₂, 19₄ auslaßseitige Schwingungen des ersten Meßrohrs 18₁ relativ zum zweiten Meßrohr 18₂ repräsentiert. Ferner ist die Sensoranordnung hierbei so ausgebildet, daß jeder der, beispielsweise auch einander baugleichen, Schwingungssensoren 19₁; 19₂; 19₃; 19₄ jeweils an zwei einander gegenüberliegenden Kopplerelementen 25₃, 25₄; 25₅, 25₆ erster Art gehaltert ist.

Für den vorgenannten Fall, daß die, ggf. baugleichen, Schwingungssensoren der Sensoranordnung 19 Schwingungen der Meßrohre differentiell und elektrodynamisch erfassen sollen, ist ferner jeder der Schwingungssensoren jeweils mittels eines am an einem der Meßrohre - etwa mittels eines der erwähnten Kopplerelemente erster Art - gehalterten Permanentmagneten und einer von dessen Magnetfeld durchfluteten, am jeweils anderen Meßrohr - etwa mittels eines der erwähnten Kopplerelemente erste Art - gehalterten Zylinderspule gebildet. Im Falle von vier Schwingungssensoren 19₁; 19₂; 19₃; 19₄ können diese z.B. in vorteilhafter Weise so im Meßwandler angeordnet sein, daß, wie aus der Zusammenschau der Fig. 1a, 1b, 1c, 4, und 6 ohne weiteres ersichtlich, ein minimaler Abstand zwischen dem ersten und dritten Schwingungssensor 19₁, 19₃ bzw. dem zweiten und vierten Schwingungssensor 19₂, 19₄ jeweils größer ist als das Doppelte des Rohr-Außendurchmesser des ersten Meßrohrs.

Es sei an dieser Stelle zudem noch darauf hingewiesen, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, - alternativ oder in Ergänzung - auch andere dem Fachmann bekannte, wie z.B. opto-elektronische, Schwingungssensoren zur Bildung der Sensoranordnung verwendet werden können. Desweiteren können, wie bei Meßwandlern der in Rede stehenden Art durchaus üblich, zusätzlich zu den Schwingungssensoren weitere, insb. Hilfs- bzw. Störgrößen erfassende, Sensoren im Meßwandler vorgesehen sein, wie z.B. Beschleunigungssensoren, Drucksensoren und/oder Temperatursensoren, mittels denen beispielsweise die Funktionstüchtigkeit des Meßwandlers und/oder Änderungen der Empfindlichkeit des Meßsaufnehmers auf die primär zu erfassenden Meßgrößen, insb. die Viskosität, die Dichte und ggf. auch die Massendurchflußrate, infolge von Querempfindlichkeiten bzw. äußeren Störungen überwacht und ggf. entsprechend kompensiert werden können.

Die Erregeranordnung 5 und die Sensoranordnung 19 sind ferner, wie bei derartigen Meßwandlern üblich, nicht zuletzt auch zwecks Übertragung des wenigstens einen Treibersignals i_{exc1} bzw. des wenigstens einen Schwingungsmeßsignals uₛₑₙₛ₁, in geeigneter Weise mit der in der Umformer-Elektronik entsprechend vorgesehenen - nicht zuletzt auch miteinander im Betrieb auch Daten kommunizierenden - Treiberschaltung Exc bzw. Meß- und Auswertschaltung µCgekoppelt, beispielsweise mittels entsprechender Kabelverbindungen. Die Treiberschaltung Exc dient, wie bereits erwähnt, im besonderen einerseits der Erzeugung des die Erregeranordnung 5 letztlich treibenden, beispielsweise hinsichtlich eines Erregerstromes und/oder einer Erregerspannung geregeltes, Treibersignal i_{exc1}. Andererseits empfängt die Meß- und Auswerteschaltung µC das wenigstens eine Schwingungsmeßsignal uₛₑₙₛ₁ der Sensoranordnung 19 und generiert daraus gewünschte Meßwerte, mithin die die zu erfassende Viskosität *η* und/oder die Reynoldszahl Re des strömenden Mediums repräsentierenden (X_{η}; X_{Re}), oder auch solche Meßwerte, die eine Massedurchflußrate, einen totalisierten Massendurchfluß und/oder eine Dichte ρ des zu messenden Mediums repräsentieren. Die so erzeugten Meßwerte können ggf. vor Ort, beispielsweise mittels des erwähnten Anzeige- und Bedienelement HMI, visualisiert und/oder auch an ein dem Meßsystem übergeordnetes Datenverarbeitungssystem inform von - ggf. in entsprechende Telegramme geeignet gekapselten - digitalen Meßdaten gesendet und daselbst entsprechend weiterverarbeitet werden. In einer weiteren Ausgestaltung des erfindungsgemäßen Meßsystems ist die Umformer-Elektronik im besonderen dafür ausgelegt, anhand von in der Erregeranordnung umgesetzter, insb. von einer Spannungshöhe und einer Stromstärke des ersten Treibersignals i_{exc1} abhängiger - insoweit selbstverständlich auch der Umformer-Elektronik "bekannter" -, elektrischer Erregerleistung, mithin jenes Anteils nämlicher Erregerleistung, der zumindest anteilig in Torsionsschwingungen der wenigstens zwei Meßrohre oder zumindest anteilig in Torsions-/ Biegeschwingungen der wenigstens zwei Meßrohre umgesetzt ist, einen die Viskosität des strömenden Mediums repräsentierenden Meßwert und/oder einen die Reynoldszahl des strömenden Mediums repräsentierenden Meßwert zu generieren. Zur weiteren Verbesserung der Genauigkeit mit der die Viskosität bzw. die Reynoldszahl mittels des Meßsystems gemessen wird, ist in Ergänzung dazu ferner vorgesehen, daß die Umformer-Elektronik den die Viskosität des strömenden Mediums repräsentierenden Meßwert und/oder einen die Reynoldszahl des strömenden Mediums repräsentierenden Meßwert mittels des ersten Schwingungssignals, insb. anhand einer Signalspannung und/oder einer Signalfrequenz des ersten Schwingungssignals, generiert. Für den Fall, daß die Erregeranordnung, wie erwähnt, mittels zweier zeitgleich eingespeister, ggf. auch voneinander hinsichtlich Signalamplitude und/oder Phasenlage verschiedener, Treibersignale i_{exc1}, i_{exc2} angesteuert ist bzw. die Sensoranordnung zwei oder mehr Schwingungen der Meßrohre repräsentierende Schwingungssignale uₛₑₙₛ₁, uₛₑₙₛ₂ liefert, können selbstverständlich die insoweit zusätzlich erhältlichen Informationen über das aktuelle Schwingungsverhalten der Rohranordnung, mithin des nämliches Schwingungsverhalten maßgeblich mitbeeinflussenden Mediums, entsprechend mit in die Ermittlung der Viskosität bzw. der Reynoldszahl bzw. die weiteren zu ermittelnden Meßgrößen einfließen gelassen werden.

Für den erwähnten Fall, daß die Sensoranordnung 19 vier Schwingungssensoren aufweist, kann es für die angestrebt Meßgenauigkeit ausreichend sein, einzelne Schwingungssensoren, z.B. paarweise, zusammenzuschalten, um so die Anzahl der der Umformer-Elektronik zugeführten Schwingungsmeßsignale und damit einhergehend den für deren Verarbeitung notwendigen Schaltungsumfang entsprechend zu reduzieren. Gleichermaßen können auch die ggf. vorhandenen zwei Schwingungserreger entsprechend zusammengefaßt, beispielsweise durch eine Serienschaltung beider Zylinderspulen, und mittels eines einzigen Schwingungssignale entsprechend angesteuert werden. Somit kann auch für die die Erregeranordnung treibende Betriebsschaltung ohne weiteres dem Fachmann bekannte, insb. auf einkanalige, also genau ein Treibersignal für die Erregeranordnung liefernde, Treibererschaltungen zurückgegriffen werden. Falls erforderlich, können aber auch die von den zwei oder mehr Schwingungssensoren jeweils gelieferten Schwingungsmeßsignale aber auch einzeln in jeweils separaten Meßkanälen vorverarbeitet und entsprechend digitalisiert werden; gleichermaßen können, falls erforderlich, auch die ggf. vorhandenen zwei oder mehr Schwingungserreger mittels separat erzeugter bzw. ausgegebener Treibersignalen separat angesteuert werden.

Das elektrische Anschließen des Meßwandlers an die Umformer-Elektronik kann mittels entsprechender Anschlußleitungen erfolgen, die aus dem Elektronik-Gehäuse 7₂, beispielsweise via Kabeldurchführung, heraus geführt und zumindest abschnittsweise innerhalb des Aufnehmergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872. Die, beispielsweise auch modular aufgebaute, Umformer-Elektronik 12 selbst kann, wie bereits erwähnt, beispielsweise in einem - ein- oder beispielsweise auch mehrteiligem - separaten Elektronik-Gehäuse 7₂ untergebracht sein, das vom Meßwandler entfernt angeordnet oder, wie in Fig. 1a, 1b bzw. 1c gezeigt, unter Bildung eines einzigen Kompaktgeräts direkt am Meßwandler 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstück 7₃ angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßwandler 11, mithin den darin plazierten Schwingungserregern und -sensoren, und der erwähnten Umformer-Elektronik 12 angeordnet sein.

Wie bereits mehrfach erwähnt ist der Meßwandler 11 und insoweit auch das erfindungsgemäße Meßsystem nicht zuletzt auch für Messungen auch hoher Massendurchflüsse von mehr als 1200 t/h in einer Rohrleitung von großem Kaliber von 100 mm oder mehr vorgesehen. Dem Rechnung tragend ist nach einer weiteren Ausgestaltung der Erfindung die nominellen Nennweite des Meßwandlers 11, die wie bereits erwähnt einem Kaliber der Rohrleitung, in deren Verlauf der Meßwandler 11 einzusetzen ist, entspricht, so gewählt, daß sie mindestens 100 mm beträgt, insb. aber größer als 120mm ist. Ferner ist nach einer weiteren Ausgestaltung des Meßwandlers vorgesehen, daß jedes der Meßrohre 18₁, 18₂ jeweils ein einem jeweiligen Rohr-Innendurchmesser entsprechendes Kaliber D₁₈ aufweist, das mehr als 60 mm beträgt. Im besonderen sind die Meßrohre 18₁, 18₂ ferner so ausgebildet, das jedes ein Kaliber D₁₈ von mehr als 50 mm, insb. mehr als 80 mm, aufweist. Alternativ oder in Ergänzung dazu sind die Meßrohre 18₁, 18₂ nach einer anderen Ausgestaltung der Erfindung ferner so bemessen, daß sie jeweils eine Meßrohrlänge L₁₈ von wenigstens 800 mm aufweisen. Die Meßrohrlänge L₁₈ entspricht im hier gezeigten Ausführungsbeispiel mit gleichlangen Meßrohren 18₁, 18₂ jeweils einem minimalen Abstand zwischen der ersten Strömungsöffnung 20_{1A} des ersten Strömungsteilers 20₁ und der ersten Strömungsöffnung 20_{2A} des zweiten Strömungsteilers 20₂. Im besonderen sind die Meßrohre 18₁, 18₂, dabei so ausgelegt, daß deren Meßrohrlänge L₁₈ jeweils größer als 1000 mm ist. Dementsprechend ergibt sich zumindest für den erwähnten Fall, daß die Meßrohre 18₁, 18₂, aus Stahl bestehen, bei den üblicherweise verwendeten Wandstärken von über 0.6 mm eine Masse von jeweils wenigstens 10 kg, insb. mehr als 20 kg, aufweist. Ferner ist aber angestrebt, die Leermasse jedes der Meßrohre 18₁, 18₂, kleiner als 40 kg zu halten.

In Anbetracht dessen, daß, wie bereits erwähnt, jedes der Meßrohre 18₁, 18₂, bei erfindungsgemäßen Meßwandler durchaus weit über 10 kg wiegen und dabei, wie aus den obigen Maßangaben ohne weiteres ersichtlich, ein Fassungsvermögen von durchaus 5 l oder mehr haben kann, kann die die Meßrohre 18₁, 18₂ umfassende Rohranordnung zumindest bei hindurchströmendem Medium mit hoher Dichte eine Gesamt-Masse von weit über 40 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂ gebildeten Rohranordnung ohne weiteres aber auch größer als 50 kg oder zumindest mit hindurchströmendem Medium, z.B. Öl oder Wasser, mehr als 60 kg betragen. Infolgedessen beträgt eine Leermasse M₁₁ des Meßwandlers insgesamt auch weit mehr als 80 kg, bei nominellen Nennweiten D₁₁ von wesentlich größer als 100 mm sogar mehr als 100 kg. Im Ergebnis kann beim erfindungsgemäßen Meßwandler ein Massenverhältnis M₁₁/M₁₈ einer Leermasse M₁₁ des gesamten Meßwandlers zu einer Leermasse M₁₈ des ersten Meßrohrs durchaus größer als 5, insb. größer als 10, sein.

Um bei den erwähnten hohen Leermassen M₁₁ des Meßwandlers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßwandlers abgestimmt auf dessen Leermasse M₁₁ so bemessen, daß ein Masse-zu-Nennweite-Verhältnis M₁₁/D₁₁ des Meßwandlers 11, definiert durch ein Verhältnis der Leermasse M₁₁ des Meßwandlers 11 zur nominellen Nennweite D₁₁ des Meßwandlers 11 kleiner als 1 kg/mm, insb. möglichst aber kleiner als 0.8 kg/mm ist. Um eine ausreichend hohe Stabilität des Meßwandlers 11 zu gewährleisten, ist das Masse-zu-Nennweite-Verhältnis M₁₁/D₁₁ des Meßwandlers 11 zumindest im Falle des Verwendens der oben erwähnten herkömmlichen Materialien jedoch möglichst größer als 0.3 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 20 zu halten. Zur Schaffung eines dennoch möglichst kompakten Meßwandlers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßwandlers 11, so bemessen, daß ein Kaliber-zu-Einbaulänge-Verhältnis D₁₈/L₁₁ des Meßwandlers, definiert durch ein Verhältnis des Kalibers D₁₈ zumindest des ersten Meßrohrs zur Einbaulänge L₁₁ des Meßwandlers 11, mehr als 0.02, insb. mehr als 0.05 und/oder weniger als 0.1, beträgt. Alternativ oder in Ergänzung sind die Meßrohre 18₁, 18₂, abgestimmt auf die oben erwähnte Einbaulänge L₁₁ des Meßwandlers, so bemessen, daß ein Meßrohrlänge-zu-Einbaulänge-Verhältnis L₁₈/L₁₁ des Meßwandlers, definiert durch ein Verhältnis der Meßrohrlänge L₁₈ zumindest des ersten Meßrohrs zur Einbaulänge L₁₁ des Meßwandlers, mehr als 0.5, insb. mehr als 0.6 und/oder weniger als 0.95, beträgt, und/oder daß ein Schwinglänge-zu-Meßrohrlänge-Verhältnis, L₁₈ₓ/L₁₈, des Meßaufnehmers, definiert durch ein Verhältnis der freien Schwinglänge, L₁₈ₓ, des ersten Meßrohrs zur Meßrohrlänge, L₁₈, des ersten Meßrohrs, mehr als 0.55, insb. mehr als 0.6, und/oder weniger als 0.95, insb. weniger als 0.9, beträgt.

Falls erforderlich, können allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die Meßrohre 18₁, 18₂ ein- und auslaßseitig jeweils mittels als sogenannte Knotenplatten dienenden Kopplerelemente 24₁, 24₂ - im folgenden Kopplerelemente zweiter Art - miteinander mechanisch verbunden sind. Darüber hinaus können mittels solcher Kopplerelemente zweiter Art, sei es durch deren Dimensionierung und/oder deren Positionierung auf den Meßrohren mechanische Eigenfrequenzen der Meßrohre und somit auch mechanische Eigenfrequenzen des mittels der Rohranordnung sowie daran angebrachten weiteren Komponenten des Meßwandlers, wie etwa der Schwingungssensoren und Schwingungserreger, gebildete Innenteils und insoweit auch dessen Schwingungsverhalten insgesamt gezielt beeinflußt werden. Die als Knotenplatten dienenden Kopplerelemente zweiter Art können beispielsweise dünne, insb. aus demselben Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁ bzw. 18₂ aufgeklemmt und ggf. hernach noch mit dem jeweiligen Meßrohr, beispielsweise durch Hartverlöten oder Schweißen, stoffschlüssig verbunden werden können. Es kann ferner im Sinne einer noch einfacheren und noch genaueren Einstellung des Schwingungsverhaltens des Meßwandlers durchaus von Vorteil sein, wenn der Meßwandler, wie beispielsweise in der US-A 2006/0150750 vorgeschlagen, darüberhinaus noch weitere, dem Bilden von ein- bzw. auslaßseitigen Schwingungsknoten für Vibrationen, insb. Biegeschwingungen, des ersten Meßrohrs und für dazu gegenphasige Vibrationen, insb. Biegeschwingungen, des zweiten Meßrohrs dienende Kopplerelemente der vorgenannten Art aufweist, beispielsweise also insgesamt 4, 6 oder 8 solcher Kopplerelemente zweiter Art.

Zur Schaffung eines möglichst kompakten Meßwandlers von ausreichend hoher Schwingungsgüte und hoher Empfindlichkeit bei möglichst geringem Druckabfall sind nach einer weiteren Ausgestaltung der Erfindung die Meßrohre 18₁, 18₂, abgestimmt auf die erwähnte freie Schwinglänge, so bemessen, daß ein Kaliber-zu- Schwinglänge-Verhältnis D₁₈/L₁₈ₓ des Meßwandlers, definiert durch ein Verhältnis des Kalibers D₁₈ des ersten Meßrohrs zur freien Schwinglänge L₁₈ₓ des ersten Meßrohrs, mehr als 0.07, insb. mehr als 0.09 und/oder weniger als 0.15, beträgt. Alternativ oder in Ergänzung hierzu sind nach einer weiteren Ausgestaltung der Erfindung die Meßrohre 18₁, 18₂ abgestimmt auf die oben erwähnte Einbaulänge L₁₁ des Meßwandler, so bemessen, daß ein Schwinglänge-zu-Einbaulänge-Verhältnis L₁₈ₓ/L₁₁ des Meßwandlers, definiert durch ein Verhältnis der freien Schwinglänge L₁₈ₓ des ersten Meßrohrs zur Einbaulänge L₁₁ des Meßwandlers, mehr als 0.55, insb. mehr als 0.6 und/oder weniger als 0.9, beträgt. Nach einer weiteren Ausgestaltung der Erfindung sind die Schwingungssensoren, abgestimmt auf die freie Schwinglänge, so im Meßwandler angeordnet, daß ein Meßlänge-zu-Schwinglänge-Verhältnis des Meßwandlers, definiert durch ein Verhältnis der erwähnten Meßlänge des Meßwandlers zur freien Schwinglänge des ersten Meßrohrs, mehr als 0.6, insb. mehr als 0.65 und/oder weniger als 0.95, beträgt. Nach einer weiteren Ausgestaltung der Erfindung sind die Schwingungssensoren, abgestimmt auf die Einbaulänge des Meßwandlers, so im Meßwandler angeordnet, daß ein Meßlänge-zu-Einbaulänge-Verhältnis des Meßwandlers, welches durch ein Verhältnis der Meßlänge zur Einbaulänge des Meßwandlers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßwandler plaziert, daß ein Kaliber-zu-Meßlänge-Verhältnis D₁₈/L₁₉, des Meßwandlers, welches durch ein Verhältnis des Kalibers D₁₈ des ersten Meßrohrs zur Meßlänge L₁₉ des Meßwandlers definiert ist, mehr als 0.05, insb. mehr als 0.09, beträgt. Gemäß einer weiteren Ausgestaltung der Erfindung ist ferner die oben erwähnte Meßlänge L₁₉ kleiner als 1200 mm gehalten.

Durch die Verwendung von vier parallel durchströmten Meßrohren statt wie bisher einem einzigen geraden Meßrohr zum Erfassen von Meßgrößen bzw. von der Meßgerätdiagnose dienenden Betriebsparametern, wie etwa der Viskosität, der Reynoldszahl oder einer Schwingungsdämpfung, die maßgeblich von - im besonderen durch Torsionsschwingungen erzeugbaren - inneren Reibungskräften im Medium abgeleitet werden können, ist es somit auch möglich, Meßwandler der beschriebenen Art auch bei großen Massendurchflußraten bzw. mit großen nominellen Nennweiten von weit über 100 mm einerseits mit einer hohen Meßgenauigkeit bei einem akzeptablem Druckabfall, insb. von etwa 1bar oder weniger, kostengünstig herzustellen, und andererseits die Einbaumaße wie auch die Leermasse solcher Meßwandler soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßwandler der in Rede stehenden Art auch bei großer nomineller Nennweite so ausgeführt und so dimensioniert werden, daß ein durch ein Verhältnis der erwähnten Leermasse des Meßwandlers zu einer Gesamtmasse der mittels der Meßrohre gebildeten der Rohranordnung sowie aller daran gehalterten weiteren, das Schwingungsverhalten der Rohranordnung beeinflussenden Komponenten des Meßwandlers definiertes Massenverhältnis des Meßwandlers ohne weiteres kleiner als 3, insb. kleiner als 2.5, gehalten werden kann.

## Patentansprüche

1. Meßsystem für ein in einer Rohrleitung strömendes Medium, insb. eine wäßrige Flüssigkeit, einem Schlamm, einer Paste oder einem anderen strömungsfähigen Stoff, welches, insb. als Kompakt-Meßgerät und/oder als Coriolis-Massendurchfluß-/Viskosität-Meßgerät ausgebildete, Meßsystem umfaßt:
-- einen im Betrieb vom Medium durchströmten Meßwandler vom Vibrationstyp zum Erzeugen von von einer Viskosität des strömenden Mediums und/oder von einer Reynoldszahl des strömenden Mediums abhängigen Schwingungssignalen, wobei der Meßwandler
-- ein, insb. im wesentlichen rohrförmiges und/oder außen kreiszylindrisches, Aufnehmer-Gehäuse (7₁), von dem ein einlaßseitiges erstes Gehäuseende mittels eines genau vier jeweils voneinander beabstandeten, insb. kreiszylindrische, kegelförmige oder konusförmige, Strömungsöffnungen (20_{1A}, 20_{1B}, 20_{1C}, 20_{1D}) aufweisenden einlaßseitigen ersten Strömungsteiler (20₁) und ein auslaßseitiges zweites Gehäuseende mittels eines genau vier jeweils voneinander beabstandeten, insb. kreiszylindrische, kegelförmige oder konusförmige, Strömungsöffnungen (20_{2A}, 20_{2B}, 20_{2C}, 20_{2D}) aufweisenden auslaßseitigen zweiten Strömungsteilers (20₂) gebildet sind;
- genau vier unter Bildung strömungstechnisch parallel geschalteter Strömungspfade an die, insb. baugleichen, Strömungsteiler (20₁, 20₂) angeschlossene, insb. lediglich mittels nämlicher Strömungsteiler (20₁, 20₂) im Aufnehmer-Gehäuse schwingfähig gehalterte und/oder baugleiche und/oder zueinander zumindest paarweise parallelen, gerade Meßrohre (18₁, 18₂, 18₃, 18₄) zum Führen von strömendem Medium, von denen
-- ein, insb. kreiszylindrisches, erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
-- ein, insb. kreiszylindrisches, zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
-- ein, insb. kreiszylindrisches, drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
-- ein, insb. kreiszylindrisches, viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet; und
-- eine, insb. mittels elektro-dynamischer Schwingungserreger (5₁, 5₂) gebildete, elektro-mechanische Erregeranordnung (4) zum Anregen und Aufrechterhalten von mechanischen Schwingungen, insb. von Torsionsschwingungen oder Torsions-/ Biegeschwingungen, der vier Meßrohre (18₁, 18₂, 18₃, 18₄) aufweist; sowie
- eine mit dem Meßwandler elektrisch gekoppelte Umformer-Elektronik zum Ansteuern des Meßwandlers und zum Auswerten von vom Meßwandler gelieferten Schwingungssignalen,
- wobei die Umformer-Elektronik mittels eines, insb. mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten ersten elektrischen Treibersignals, insb. mit einer veränderlichen maximalen Spannungshöhe und/oder einer veränderlichen maximalen Stromstärke, elektrische Erregerleistung in die Erregeranordnung einspeist; und
- wobei die Erregeranordnung die, insb. von einer Spannungshöhe und einer Stromstärke des ersten Treibersignals abhängige, elektrische Erregerleistung zumindest zeitweise zumindest anteilig sowohl in Torsionsschwingungen des ersten Meßrohrs (18₁) und zu den Torsionsschwingungen des ersten Meßrohrs (18₁) gegengleiche Torsionsschwingungen des zweiten Meßrohrs (18₂) als auch in Torsionsschwingungen des dritten Meßrohrs (18₁) und zu den Torsionsschwingungen des dritten Meßrohrs (18₃) gegengleiche Torsionsschwingungen des vierten Meßrohrs (18₄) wandelt, insb. derart, daß simultan sowohl ein mittiges Rohrsegment des ersten Meßrohrs Drehschwingungen um eine zu einem Querschnitt nämlichen Rohrsegments senkrechte gedachte Torsionsschwingungsachse und ein mittiges Rohrsegment des zweiten Meßrohrs Drehschwingungen um eine zu einem Querschnitt nämlichen Rohrsegments senkrechte gedachte Torsionsschwingungsachse als auch ein mittiges Rohrsegment des dritten Meßrohrs Drehschwingungen um eine zu einem Querschnitt nämlichen Rohrsegments senkrechte gedachte Torsionsschwingungsachse und ein mittiges Rohrsegment des vierten Meßrohrs Drehschwingungen um eine zu einem Querschnitt nämlichen Rohrsegments senkrechte gedachte Torsionsschwingungsachse ausführen, und/oder daß simultan jedes der Meßrohre Torsionsschwingungen in einem einen einzigen Schwingungsbauch aufweisenden Torsionsschwingungsgrundmode ausführt.

2. Meßsystem nach einem der vorherigen Ansprüche, wobei die Erregeranordnung wenigstens einen, insb. differentiell, auf das erste und zweite Meßrohr wirkenden, insb. elektrodynamischen, ersten Schwingungserreger zum Konvertieren von in die Erregeranordnung eingespeister elektrischer Erregerleistung in, insb. mit wenigstens einer mit einer einer Eigenfrequenz eines natürlichen Schwingungsmodes der Rohranordnung entsprechenden Signalfrequenz veränderliche und/oder periodische, die Torsionsschwingungen des ersten Meßrohrs (18₁) und die zu den Torsionsschwingungen des ersten Meßrohrs (18₁) gegengleichen Torsionsschwingungen des zweiten Meßrohrs (18₂) bewirkende mechanische Erregerkräfte aufweist.

3. Meßsystem nach Anspruch 2,
--wobei der erste Schwingungserreger (19₁) einen, insb. mittels eines zumindest am ersten Meßrohr fixierten und als Hebelarm dienenden Kopplerelements zum Bewirken von auf das erste Meßrohr wirkenden Torsionsmomenten, zumindest am ersten Meßrohr (18₁) gehalterten Permanentmagneten und eine von dessen Magnetfeld durchfluteten, zumindest am zweiten Meßrohr (18₂), insb. mittels eines zumindest am zweiten Meßrohr fixierten und als Hebelarm dienenden Kopplerelements zum Bewirken von auf das zweite Meßrohr wirkenden Torsionsmomenten, gehalterte Zylinderspule aufweist; und/oder
- wobei das erste Treibersignal dem ersten Schwingungserreger (19₁) zugeführt ist, insb. derart, daß dessen Zylinderspule von einem von einer mittels des ersten Treibersignals bereitgestellten veränderlichen ersten Erregerspannung getriebenen ersten Erregerstrom durchflossen ist.

4. Meßsystem nach einem der Ansprüche 2 bis 3,
- wobei die Rohranordnung eine erste gedachte Längsschnittebene (XZ₁) aufweist, in der sowohl eine Meßrohr-Längsachse des ersten Meßrohrs, die dessen erstes und zweites Meßrohrende imaginär verbindet, als auch eine Meßrohr-Längsachse des zweiten Meßrohrs, die dessen erstes und zweites Meßrohrende imaginär verbindet und parallel zur Meßrohr-Längsachse des ersten Meßrohrs ist, verlaufen,
- wobei die Rohranordnung eine von der ersten gedachte Längsschnittebene (XZ₁) beabstandete und dazu parallele zweite gedachte Längsschnittebene (XZ₂) aufweist, in der sowohl eine Meßrohr-Längsachse des dritten Meßrohrs, die dessen erstes und zweites Meßrohrende imaginär verbindet, als auch eine Meßrohr-Längsachse des vierten Meßrohrs, die dessen erstes und zweites Meßrohrende imaginär verbindet und parallel zur Meßrohr-Längsachse des ersten Meßrohrs ist, verlaufen.

5. Meßsystem nach dem Anspruch 4,
- wobei die Rohranordnung eine zwischen der ersten Längsschnittebene (XZ₁) und zweiten Längsschnittebene (XZ₂) liegende, nämlich jeweils von der ersten gedachten Längsschnittebene (XZ₁) und von der zweiten gedachten Längsschnittebene (XZ₁) beabstandete und zur ersten und zweiten Längsschnittebene (XZ₁, XZ₂) jeweils parallele, dritte gedachte Längsschnittebene (XZ₃) aufweist, und
- wobei der erste Schwingungserreger (5₁, 5₂) eine darin umgesetzte, insb. mittels des ersten Treibersignals eingespeiste, elektrische Erregerleistung in dem Anregen von Schwingungen der Meßrohre, insb. von gegengleichen Torsionsschwingungen des ersten und zweiten Meßrohrs oder von gegengleichen Biege-/ Torsionsschwingungen, dienende, insb. periodische, Erregerkräfte konvertiert, die entlang einer von der dritten gedachten Längsschnittebene (XZ₂), insb. auch von der ersten gedachten Längsschnittebene (XZ₁), beabstandeten und zumindest näherungsweise parallel dazu, insb. auch im wesentlichen quer zur Meßrohr-Längsachse des ersten Meßrohrs und zur Meßrohr-Längsachse des zweiten Meßrohrs, verlaufenden Wirkungslinie in Rohranordnung eingeleitet sind, insb. derart, daß eine mittels des ersten Schwingungserregers generierte, auf das erste Meßrohr wirkende Erregerkraft zu einer mittels des ersten Schwingungserregers zeitgleich generierten, auf das zweite Meßrohr wirkenden Erregerkraft entgegengerichtet, insb. gegengleich, ist.

6. Meßsystem nach einem der vorherigen Ansprüche, wobei die Erregeranordnung, insb. simultan zu den Torsionsschwingungen der Meßrohre, sowohl Biegeschwingungen des ersten Meßrohrs (18₁, 18₂) um dessen Meßrohr-Längsachse und zu den Biegeschwingungen des ersten Meßrohrs (18₁, 18₂) gegengleiche Biegeschwingungen des zweiten Meßrohrs (18₁, 18₂) um dessen Meßrohr-Längsachse als auch Biegeschwingungen des dritten Meßrohrs (18₁, 18₂) um dessen Meßrohr-Längsachse und zu den Biegeschwingungen des dritten Meßrohrs (18₁, 18₂) gegengleiche Biegeschwingungen des vierten Meßrohrs (18₁, 18₂) um dessen Meßrohr-Längsachse bewirkt.

7. Meßsystem nach Anspruch 6,
- wobei die Rohranordnung so ausgebildet ist, daß wenigstens eine Eigenfrequenz von natürlichen Biegeschwingungen des ersten Meßrohrs, insb. solchen in einem einen einzigen Schwingungsbauch aufweisenden Biegeschwingungsgrundmode, gleich einer Eigenfrequenz von natürlichen Torsionsschwingungen des ersten Meßrohrs, insb. solchen in einem einen einzigen Schwingungsbauch aufweisenden Torsionsschwingungsgrundmode, und daß wenigstens eine Eigenfrequenz von natürlichen Biegeschwingungen des zweiten Meßrohrs, insb. solchen in einem einen einzigen Schwingungsbauch aufweisenden Biegeschwingungsgrundmode, gleich einer Eigenfrequenz von natürlichen Torsionsschwingungen des zweiten Meßrohrs, insb. solchen in einem einen einzigen Schwingungsbauch aufweisenden Torsionsschwingungsgrundmode, sind, und
- wobei jedes der vier Meßrohre, angeregt von der Erregeranordnung, Biegeschwingungen, insb. Biegeschwingungen in einem einen einzigen Schwingungsbauch aufweisenden Biegeschwingungsgrundmode, ausführt, gekoppelt mit dazu jeweils gleichfrequenten Torsionsschwingungen, insb. Torsionsschwingungen in einem einen einzigen Schwingungsbauch aufweisenden Torsionsschwingungsgrundmode.

8. Meßsystem nach einem der vorherigen Ansprüche, wobei das erste Meßrohr ein Kaliber aufweist, das gleich ein einem Kaliber des zweiten Meßrohrs, insb. auch gleich einem Kaliber des dritten Meßrohrs sowie gleich einem Kaliber des vierten Meßrohrs ist.

9. Meßsystem nach dem vorherigen Anspruch in Verbindung mit Anspruch 5, wobei der erste Schwingungserreger (5₁, 5₂) so ausgebildet und im Meßwandler angeordnet ist, daß die Wirkungslinie, mit der die vom ersten Schwingungserreger (5₁, 5₂) erzeugten Erregerkräfte in Rohranordnung eingeleitet sind, einen senkrechten Abstand zur dritten gedachte Längsschnittebene der Rohranordnung aufweist, der größer als ein Viertel des Kalibers des ersten Meßrohrs, insb. größer als 35% des Kalibers des ersten Meßrohrs, und/oder kleiner als 200% des Kalibers des ersten Meßrohrs, insb. kleiner als 100% des Kalibers des ersten Meßrohrs, ist.

10. Meßsystem nach einem der vorherigen Ansprüche, wobei das erste Treibersignal eine Vielzahl von Signalkomponenten mit voneinander verschiedener Signalfrequenz aufweist, und wobei wenigstens eine der Signalkomponenten, insb. eine hinsichtlich einer Signalleistung dominierende Signalkomponente, des ersten Treibersignals eine einer Eigenfrequenz eines natürlichen Schwingungsmodes der Rohranordnung, insb. eines natürlichen Torsionsschwingungsmodes der Rohranordnung, in dem jedes der vier Meßrohre Torsionsschwingungen ausführt, entsprechende Signalfrequenz aufweist.

11. Meßsystem nach einem der vorherigen Ansprüche, wobei die Umformer-Elektronik elektrische Erregerleistung auch mittels eines, insb. mit wenigstens einer mit einer einer Eigenfrequenz eines natürlichen Schwingungsmodes der Rohranordnung entsprechenden Signalfrequenz veränderlichen und/oder zumindest zeitweise periodischen, der Erregeranordnung zugeführten, insb. zum ersten Treibersignal hinsichtlich wenigstens einer Signalfrequenz gleichen und/oder zum ersten Treibersignal phasenverschobenen, zweiten elektrischen Treibersignals, insb. mit einer veränderlichen maximalen Spannungshöhe und/oder einer veränderlichen maximalen Stromstärke, in die Erregeranordnung einspeist.

12. Meßsystem nach Anspruch 11,
- wobei die Erregeranordnung mittels des zweiten Treibersignals eingespeiste, insb. von einer Spannungshöhe und einer Stromstärke auch des zweiten Treibersignals abhängige, elektrische Erregerleistung zumindest zeitweise in, insb. zu den Torsionsschwingungen des ersten Meßrohrs (18₁) gegengleiche, Torsionsschwingungen des dritten Meßrohrs (18₁) und zu den Torsionsschwingungen des dritten Meßrohrs (18₁), insb. auch zu den Torsionsschwingungen des zweiten Meßrohrs (18₂), gegengleiche Torsionsschwingungen des vierten Meßrohrs (18₂) wandelt, insb. derart, daß ein mittiges Rohrsegment des dritten Meßrohrs Drehschwingungen um eine zu einem Querschnitt nämlichen Rohrsegments senkrechte gedachte Torsionsschwingungsachse und ein mittiges Rohrsegment des vierten Meßrohrs Drehschwingungen um eine zu einem Querschnitt nämlichen Rohrsegments senkrechte gedachte Torsionsschwingungsachse ausführen und/oder daß jedes der vier Meßrohre Torsionsschwingungen in einem einen einzigen Schwingungsbauch aufweisenden Torsionsschwingungsgrundmode ausführt; und/oder
- wobei das zweite Treibersignal eine Vielzahl von Signalkomponenten mit voneinander verschiedener Signalfrequenz aufweist, und wobei wenigstens eine der Signalkomponenten, insb. eine hinsichtlich einer Signalleistung dominierende Signalkomponente, des zweiten Treibersignals eine einer Eigenfrequenz eines natürlichen Schwingungsmodes der Rohranordnung, insb. eines natürlichen Torsionsschwingungsmodes der Rohranordnung, in dem jedes der vier Meßrohre Torsionsschwingungen ausführt, entsprechende Signalfrequenz aufweist.

13. Meßsystem nach einem der Ansprüche 4 bis 12, wobei die Erregeranordnung weiters einen, insb. differentiell, auf das dritte und vierte Meßrohr wirkenden, insb. elektro-dynamischen und/oder zum ersten Schwingungserreger baugleichen, zweiten Schwingungserreger zum Konvertieren von in die Erregeranordnung eingespeister elektrischer Erregerleistung in, insb. mit wenigstens einer mit einer einer Eigenfrequenz eines natürlichen Schwingungsmodes der Rohranordnung entsprechenden Signalfrequenz veränderliche und/oder periodische, die Torsionsschwingungen des dritten Meßrohrs (18₁) und die zu den Torsionsschwingungen des dritten Meßrohrs (18₁) gegengleichen Torsionsschwingungen des vierten Meßrohrs (18₂) bewirkende mechanische Erregerkräfte aufweist.

14. Meßsystem nach Anspruch 13,
- wobei der zweite Schwingungserreger (19₁) einen zumindest am dritten Meßrohr (18₁), insb. mittels eines zumindest am dritten Meßrohr fixierten und als Hebelarm dienenden Kopplerelements zum Bewirken von auf das dritte Meßrohr wirkenden Torsionsmomenten, gehalterten Permanentmagneten und eine von dessen Magnetfeld durchfluteten, zumindest am vierten Meßrohr (18₂), insb. mittels eines zumindest am vierten Meßrohr fixierten und als Hebelarm dienenden Kopplerelements zum Bewirken von auf das vierte Meßrohr wirkenden Torsionsmomenten, gehalterten Zylinderspule gebildet ist; und/oder
- wobei der zweite Schwingungserreger (52), auf einer vom ersten Schwingungserreger abgewandten Seite der dritten gedachten Längsschnittebene der Rohranordnung im Meßwandler plaziert ist.

15. Meßsystem nach Anspruch 11 in Verbindung mit Anspruch 13 oder einem davon abhängigen Anspruch, wobei das zweite Treibersignal dem zweiten Schwingungserreger (19₂) zugeführt ist, insb. derart, daß dessen Zylinderspule von einem von einer mittels des zweiten Treibersignals bereitgestellten veränderlichen zweiten Erregerspannung getrieben zweiten Erregerstrom durchflossen ist.

16. Meßsystem nach einem der Ansprüche 13 bis 14, jeweils in Verbindung mit Anspruch 4 oder einem davon abhängigen Anspruch, wobei der zweite Schwingungserreger (5₁, 5₂) eine darin umgesetzte, mittels des zweiten Treibersignals eingespeiste elektrische Erregerleistung in dem Anregen von Schwingungen der Meßrohre, insb. von gegengleichen Torsionsschwingungen des dritten und vierten Meßrohrs oder von gegengleichen Biege-/ Torsionsschwingungen des dritten und vierten Meßrohrs, dienende, insb. periodische, Erregerkräfte konvertiert, die entlang einer von der dritten gedachten Längsschnittebene beabstandeten und zumindest näherungsweise parallel dazu, insb. auch im wesentlichen parallel zur Wirkungslinie der mittels des ersten Schwingungserregers generierte Erregerkräfte und/oder im wesentlichen quer zur Meßrohr-Längsachse des dritten Meßrohrs und zur Meßrohr-Längsachse des vierten Meßrohrs, verlaufenden Wirkungslinie in Rohranordnung eingeleitet sind.

17. Meßsystem nach dem vorherigen Anspruch in Verbindung mit Anspruch 4 oder einem davon abhängigen Anspruch, wobei die Rohranordnung eine zur dritten gedachten Längsschnittebene senkrechte gedachte Querschnittebene aufweist, in der sowohl die Wirkungslinie der vom ersten Schwingungserreger erzeugten Erregerkräfte, als auch die Wirkungslinie der vom zweiten Schwingungserreger erzeugten Erregerkräfte verlaufen.

18. Meßsystem nach einem der Ansprüche 16 bis 18, wobei die Erregeranordnung Schwingungen der Meßrohre, insb. gegengleiche Torsionsschwingungen des dritten und vierten Meßohrs oder gegengleiche Biege-/ Torsionsschwingungen des dritten und vierten Meßohrs, dadurch bewirkt, daß eine mittels zweiten Schwingungserregers generierte, auf das dritte Meßrohr wirkende Erregerkraft zu einer mittels des zweiten Schwingungserregers zeitgleich generierten, auf das vierte Meßrohr wirkenden Erregerkraft entgegengerichtet, insb. gegengleich, ist.

19. Meßsystem nach dem vorherigen Anspruch, wobei die Erregeranordnung gegengleiche Torsionsschwingungen, insb. gegengleiche Biege-/ Torsionsschwingungen, der Meßohre dadurch bewirkt,
- daß die mittels ersten Schwingungserregers generierte, auf das erste Meßrohr wirkende Erregerkraft zu der mittels des zweiten Schwingungserregers zeitgleich generierten, auf das dritte Meßrohr wirkenden Erregerkraft entgegengerichtet ist, und
- daß die mittels ersten Schwingungserregers generierte, auf das zweite Meßrohr wirkende Erregerkraft zu der mittels des zweiten Schwingungserregers zeitgleich generierten, auf das vierte Meßrohr wirkende Erregerkraft entgegengerichtet ist.

20. Meßsystem nach einem der vorherigen Ansprüche, wobei die Umformer-Elektronik anhand von in der Erregeranordnung, insb. zumindest anteilig in Torsionsschwingungen der Meßrohre oder zumindest anteilig in Torsions-/ Biegeschwingungen der Meßrohre, umgesetzter, insb. von einer Spannungshöhe und einer Stromstärke des ersten Treibersignals abhängiger, elektrischer Erregerleistung einen die Viskosität des strömenden Mediums repräsentierenden Meßwert und/oder einen die Reynoldszahl des strömenden Mediums repräsentierenden Meßwert generiert.

21. Meßsystem nach einem der vorherigen Ansprüche, wobei der Meßwandler weiters eine, insb. mittels eines ersten Schwingungssensors (5₁) und mittels eines dazu baugleichen zweiten Schwingungssensors (5₂) gebildete, Sensoranordnung (5) zum, insb. differentiellen, Erfassen von mechanischen Schwingungen, insb. von Torsionsschwingungen oder Torsions-/ Biegeschwingungen, der Meßrohre (18₁, 18₂, 18₃, 18₄) und zum Erzeugen wenigstens eines mechanische Schwingungen, insb. Torsionsschwingungen oder Torsions-/ Biegeschwingungen, der Meßrohre repräsentierenden ersten Schwingungssignals aufweist.

22. Meßsystem nach Anspruch 20 und 21,
- wobei das von der Sensoranordnung gelieferte erste Schwingungssignal zumindest anteilig Torsionsschwingungen des ersten Meßrohrs (18₁), insb. Torsionsschwingungen des ersten Meßrohrs (18₁) relativ zu gegengleichen Torsionsschwingungen des zweiten Meßrohrs (18₁), repräsentiert; und/oder
- wobei die Umformer-Elektronik den die Viskosität des strömenden Mediums repräsentierenden Meßwert und/oder einen die Reynoldszahl des strömenden Mediums repräsentierenden Meßwert mittels des ersten Schwingungssignals, insb. anhand einer Signalspannung und/oder einer Signalfrequenz des ersten Schwingungssignals, generiert.

23. (Geändert) Meßsystem nach einem der Ansprüche 21 bis 22, wobei die Sensoranordnung aufweist:
- einen, insb. elektrodynamischen und/oder einlaßseitig im Meßwandler plazierten, ersten Schwingungsensor (5₁) zum, insb. differentiellen, Erfassen von, insb. einlaßseitigen, mechanischen Schwingungen, insb. von Torsionsschwingungen oder Torsions-/ Biegeschwingungen, der Meßrohre (18₁, 18₂, 18₃, 18₄) und zum Erzeugen des ersten Schwingungssignals;
- einen, insb. elektro-dynamischen und/oder zum ersten Schwingungssensor baugleichen und/oder gleichweit wie der erste Schwingungssensor vom ersten Schwingungserreger entfernten und/oder auf einer vom ersten Schwingungssensor abgewandten Seite der dritten gedachten Längsschnittebene der Rohranordnung im Meßwandler plazierten und/oder auslaßseitig im Meßwandler plazierten, zweiten Schwingungssensor (5₂) zum, insb. differentiellen, Erfassen von, insb. auslaßseitigen, mechanischen Schwingungen, insb. von Torsionsschwingungen oder Torsions-/Biegeschwingungen, der Meßrohre (18₁, 18₂, 18₃, 18₄) und zum Erzeugen wenigstens eines mechanische Schwingungen, insb. Torsionsschwingungen oder Torsions-Biegeschwingungen, der Meßrohre repräsentierenden zweiten Schwingungssignals;
- eine,insb. elektro-dynamischen und/oder zum ersten Schwingungssensor baugleichen und/oder auf einer vom ersten Schwingungssensor abgewandten Seite der dritten gedachten Längsschnittebene der Rohranordnung im Meßwandler plazierten, dritten Schwingungssensor (5₂) zum, insb. differentiellen, Erfassen von mechanischen Schwingungen, insb. von Torsionsschwingungen oder Torsions-/Biegeschwingungen, der Meßrohre (18₁, 18₂, 18₃, 18₄) ; sowie
- einen, insb. elektro-dynamischen und/oder zum ersten Schwingungssensor baugleichen und/oder auf einer vom ersten Schwingungssensor abgewandten Seite der dritten gedachten Längsschnittebene der Rohranordnung im Meßwandler plazierten, vierten Schwingungssensor (5₂) zum, insb. differentiellen, Erfassen von mechanischen Schwingungen, insb. von Torsionsschwingungen oder Torsions-/Biegeschwingungen, der Meßrohre (18₁, 18₂, 18₃, 18₄).

24. Meßsystem nach Anspruch 20 in Verbindung mit Anspruch 23,
- wobei die Umformer-Elektronik den die Viskosität des strömenden Mediums repräsentierenden Meßwert und/oder einen die Reynoldszahl des strömenden Mediums repräsentierenden Meßwert mittels des zweiten Schwingungssignals, insb. anhand einer Signalspannung und/oder einer Signalfrequenz des zweiten Schwingungssignals, generiert; und/oder
- wobei die Umformer-Elektronik den die Viskosität des strömenden Mediums repräsentierenden Meßwert und/oder einen die Reynoldszahl des strömenden Mediums repräsentierenden Meßwert mittels des dritten Schwingungssignals, insb. anhand einer Signalspannung und/oder einer Signalfrequenz des dritten Schwingungssignals, sowie mittels des vierten Schwingungssignals, insb. anhand einer Signalspannung und/oder einer Signalfrequenz des vierten Schwingungssignals, generiert.

25. Meßsystem nach einem der Ansprüche 2 bis 24, weiters umfassend:
- ein sowohl am ersten Meßrohr als auch am dritten Meßrohr, ansonsten aber an keinem weiteren der Meßrohre fixiertes, insb. plattenförmiges, erstes Kopplerelement (25₁) erster Art zum Haltern von Komponenten des ersten Schwingungserregers, insb. einer Zylinderspule oder einem Permanentmagneten, und zum Einleiten einer mittels des ersten Schwingungserregers generierten Erregerkraft in das erste Meßrohr und/oder zum Wandeln einer mittels des ersten Schwingungserregers generierten Erregerkraft in ein auf das erste Meßrohr wirkendes Torsionsmoment und ein auf das dritte Meßrohr wirkendes Torsionsmoment, sowie
- ein sowohl am zweiten Meßrohr als auch am dritten Meßrohr, ansonsten aber an keinem weiteren der Meßrohre fixiertes, insb. plattenförmiges und/oder zum ersten Kopplerelement (25₁) erster Art baugleiches und/oder diesem gegenüberliegendes, zweites Kopplerelement (25₁) erster Art zum Haltern von Komponenten des ersten Schwingungserregers, insb. einer Zylinderspule oder einem Permanentmagneten, und zum Einleiten einer mittels des ersten Schwingungserregers generierten Erregerkraft in das zweite Meßrohr und/oder zum Wandeln einer mittels des ersten Schwingungserregers generierten Erregerkraft in ein auf das zweite Meßrohr wirkendes Torsionsmoment und ein auf das vierte Meßrohr wirkendes Torsionsmoment.

26. Meßsystem nach Anspruch 25 in Verbindung mit einem der Ansprüche 13 oder einem davon abhängigen Anspruch, wobei sowohl der erste Schwingungserreger (5₁) als auch der zweite Schwingungserreger (5₂) jeweils am ersten und zweiten Kopplerelement (25₁, 25₂) erster Art gehaltert sind, insb. in der Weise, daß ein minimaler Abstand zwischen dem ersten und zweiten Schwingungserreger (5₂₁, 5₂) mehr als doppelt so groß ist, wie ein Rohr-Außendurchmessers des ersten Meßrohrs (18₁).

27. Meßsystem nach einem der Ansprüche 25 bis 27, jeweils in Verbindung mit Anspruch 3 oder einem davon abhängigen Anspruch, wobei der Permanentmagnet des ersten Schwingungserregers (19₁) am ersten Kopplerelement (25₁) erster Art, insb. an einem vom ersten Meßrohr abgelegenen, distalen ersten Ende des ersten Kopplerelements (25₁) erster Art, und die Zylinderspule des ersten Schwingungserregers (5₁) am zweiten Kopplerelement (25₂) erster Art, insb. an einem vom zweiten Meßrohr abgelegenen, distalen ersten Ende des zweiten Kopplerelements (25₂) erster Art, fixiert sind, insb. derart, daß das erste Kopplerelement (25₁) erster Art als ein Hebelarm wirkt, der eine vom ersten Schwingungserreger generierte Erregerkraft zumindest anteilig in ein die Torsionsschwingungen des ersten Meßrohrs bewirkendes Torsionsmoment wandelt, und daß das zweite Kopplerelement (25₂) erster Art als ein Hebelarm wirkt, der eine vom ersten Schwingungserreger generierte Erregerkraft zumindest anteilig in ein die Torsionsschwingungen des zweiten Meßrohrs bewirkendes Torsionsmoment wandelt.

28. Meßsystem nach Anspruch 25 oder einem davon abhängigen Anspruch, jeweils in Verbindung mit Anspruch **17** oder einem davon abhängigen Anspruch, wobei das erste und zweite Kopplerelement (25₁, 25₂) erster Art so im Meßwandler plaziert sind, daß sowohl ein Massenschwerpunkt des ersten Kopplerelements (25₁, 25₂) erster Art als auch ein Massenschwerpunkt des zweiten Kopplerelements (25₁, 25₂) erster Art innerhalb der Querschnittebene liegen, in der sowohl die Wirkungslinie der vom ersten Schwingungserreger erzeugten Erregerkräfte, als auch die Wirkungslinie der vom zweiten Schwingungserreger erzeugten Erregerkräfte verlaufen.

29. Meßsystem nach einem der vorherigen Ansprüche, wobei der Meßwandler außer den vier Meßrohren kein weiteres, dem Führen von strömendem Medium dienendes und im Betrieb vibrieren gelassenes Meßrohr aufweist.

30. Verwenden eines Meßsystems gemäß einem der vorherigen Ansprüche zum Messen eines Massendurchflusses und/oder einer Dichte und/oder einer Viskosität und/oder einer Reynoldszahl eines in einer Prozeßleitung strömenden Mediums.

## Claims

1. Measuring system for a medium flowing through a pipe, particularly an aqueous liquid, a sludge, a paste or another substance which can flow, wherein said measuring system, particularly designed as a compact measuring device and/or as a Coriolis mass flowmeter/viscosity meter, comprises:
-- a vibronic-type transducer, through which medium flows during operation, for the generation of vibronic signals depending on a viscosity of the flowing medium and/or on a Reynolds number of the flowing medium
-- a sensor housing (7₁), particularly essentially tubular and/or circular cylindrical on the exterior, wherein a first housing end of said housing on the inlet side is formed by a first inlet-side flow divider (20₁) with exactly four flow openings (20_{1A}, 20_{1B}, 20_{1C}, 20_{1D}) spaced at a distance from one another, particularly circular cylindrical or conical flow openings, and a second housing end on the outlet side is formed by a second outlet-side flow divider (20₂) with exactly four flow openings (20_{2A}, 20_{2B}, 20_{2C}, 20_{2D}) spaced at a distance from one another, particularly circular cylindrical or conical flow openings;
- precisely four straight measuring tubes (18₁, 18₂, 18₃, 18₄), which, in terms of flow, form flow paths which are switched in parallel and are connected to the flow dividers (20₁, 20₂), which are particularly identical in design, said tubes being particularly fixed in the sensor housing solely by means of said flow dividers (20₁, 20₂) in a manner that is capable of oscillation and/or identical in design and/or parallel to one another at least in pairs, wherein of said tubes
-- a first measuring tube (18₁), particularly circular cylindrical, enters into a first flow opening (20_{1A}) of the first flow divider (20₁) with an inlet-side first measuring tube end and enters into a first flow opening (20_{2A}) of the second flow divider (20₂) with an outlet-side second measuring tube end,
-- a second measuring tube (18₂), particularly circular cylindrical, enters into a second flow opening (20_{1B}) of the first flow divider (20₁) with an inlet-side first measuring tube end and enters into a second flow opening (20_{2B}) of the second flow divider (20₂) with an outlet-side second measuring tube end,
-- a third measuring tube (18₃), particularly circular cylindrical, enters into a third flow opening (20_{1C}) of the first flow divider (20₁) with an inlet-side first measuring tube end and enters into a third flow opening (20_{2C}) of the second flow divider (20₂) with an outlet-side second measuring tube end, and
-- a fourth measuring tube (18₄), particularly circular cylindrical, enters into a fourth flow opening (20_{1D}) of the first flow divider (20₁) with an inlet-side first measuring tube end and enters into a fourth flow opening (20_{2D}) of the second flow divider (20₂) with an outlet-side second measuring tube end; and
- an electromechanical exciter arrangement (4), particularly formed by electrodynamic vibration exciters (5₁, 5₂), which is designed to excite and maintain mechanical vibrations, particularly torsional vibrations or torsional/flexural vibrations, of the four measuring tubes (18₁, 18₂, 18₃, 18₄); as well as
- a transmitter electronics module that is electrically coupled with the transducer and is designed to control the transducer and evaluate vibration signals provided by the transducer,
-wherein the transmitter electronics module feeds electrical exciter power into the exciter arrangement using a first electrical driver signal, supplied to the exciter arrangement, wherein said signal is being variable and/or temporarily periodic, particularly with at least a signal frequency corresponding to a natural frequency of a natural vibration mode of the tube arrangement, particularly with a variable maximum voltage level and/or a variable maximum current strength; and
- wherein the exciter arrangement converts the electrical exciter power, which particularly depends on a level of voltage and a current strength of the first driver signal, at least temporarily and at least partially both into torsional vibrations of the first measuring tube (18₁) and into torsional vibrations of the second measuring tube (18₂) that are mirror-inverted in relation to the torsional vibrations of the first measuring tube (18₁), particularly in such a way that, simultaneously, a central tube segment of the first measuring tube produces rotational vibrations around an imaginary axis of torsional vibration that is perpendicular to a cross-section of said tube segment, and a central tube segment of the second measuring tube produces rotational vibrations around an imaginary axis of torsional vibration that is perpendicular to a cross-section of said tube segment, and a central tube segment of the third measuring tube produces rotational vibrations around an imaginary axis of torsional vibration that is perpendicular to a cross-section of said tube segment, and a central tube segment of the fourth measuring tube produces rotational vibrations around an imaginary axis of torsional vibration that is perpendicular to a cross-section of said tube segment, and/or in such a way that each of the measuring tubes simultaneously produces torsional vibrations in a basic torsional vibration mode that features one single antinode.

2. Measuring system as claimed in one of the previous claims, wherein the exciter arrangement has at least a first vibration exciter, particularly electrodynamic, acting particularly in a differential manner on the first and the second measuring tube, said exciter being designed to convert electrical exciter power fed into the exciter arrangement into mechanical exciter forces, particularly variable and/or periodic forces, causing the torsional vibrations of the first measuring tube (18₁) and the torsional vibrations of the second measuring tube (18₂) which are mirror-inverted in relation to the torsional vibrations of the first measuring tube (18₁), particularly with at least a signal frequency corresponding to a natural frequency of a natural vibration mode of the tube arrangement.

3. Measuring system as claimed in Claim 2,
- wherein the first vibration exciter (19₁) has a permanent magnet at least supported on the first measuring tube (18₁) particularly by means of a coupler element at least fixed on the first measuring tube and acting as a lever, said coupler element being designed to produce torsional moments acting on the first measuring tube, and a solenoid through which the magnetic field of the permanent magnet passes, supported at least on the second measuring tube (18₂), particularly by means of a coupler element at least fixed on the second measuring tube and acting as a lever, said coupler element being designed to produce torsional moments acting on the second measuring tube; and/or
- wherein the first driver signal is supplied to the first vibration exciter (19₁), particularly in such a way that a first exciter current flows through its solenoid, said current being driven by a first variable exciter voltage, which is provided by the first driver signal.

4. Measuring system as claimed in one of the Claims 2 to 3,
- wherein the tube arrangement has a first imaginary longitudinal section plane (XZ₁) on which both the longitudinal axis of the first measuring tube extends, said axis connecting the first and second measuring tube end in an imaginary manner, and on which the longitudinal axis of the second measuring tube extends, said axis connecting the first and second measuring tube end in an imaginary manner and being parallel to the longitudinal axis of the first measuring tube,
- wherein the tube arrangement has a second imaginary longitudinal section plane (XZ₂) at a distance from the first imaginary longitudinal section plane (XZ₁) and parallel to it, wherein a measuring tube longitudinal axis of the third measuring tube extends on said plane, said axis connecting the first and second measuring tube end in an imaginary manner, and wherein a measuring tube longitudinal axis of the fourth measuring tube extends on said plane, said axis connecting the first and second measuring tube end in an imaginary manner and being parallel to the longitudinal axis of the first measuring tube.

5. Measuring system as claimed in Claim 4,
- wherein the tube arrangement has a third imaginary longitudinal section plane **(XZ₃)** which is located between the first longitudinal section plane (XZ₁) and the second longitudinal section plane (XZ₂), particularly spaced at a distance from, and parallel to, the first and the second imaginary longitudinal section plane (XZ₁, XZ₂), and
- wherein the first vibration exciter (5₁, 5₂) converts an electrical exciter power, supplied particularly by means of the first driver signal, said power being converted in the exciter into exciter forces, particularly periodic forces, which serve to excite vibrations of the measuring tubes, particularly mirror-inverted torsional vibrations of the first and second measuring tube or mirror-inverted flexural/torsional vibrations, said forces being introduced in the tube arrangement along a line of action spaced at a distance from the third imaginary longitudinal section plane (XZ₂), particularly also spaced at a distance from the first imaginary longitudinal section plane (XZ₁) and at least approximately parallel to said plane, particularly also essentially perpendicular to the longitudinal axis of the first measuring tube and to the longitudinal axis of the second measuring tube, particularly in such a way that an exciter force generated using the first vibration exciter and acting on the first measuring tube is opposite, particularly mirror-inverted, in relation to an exciter force generated using the first vibration exciter and acting on the second measuring tube.

6. Measuring system as claimed in one of the previous claims, wherein the exciter arrangement causes - particularly simultaneously with the torsional vibrations of the measuring tubes - both flexural vibrations of the first measuring tube (18₁, 18₂) around the measuring tube's longitudinal axis and flexural vibrations of the second measuring tube (18₁, 18₂) around the measuring tube's longitudinal axis, said vibrations being mirror-inverted in relation to the flexural vibrations of the first measuring tube (18₁, 18₂), and flexural vibrations of the third measuring tube **(18₁, 18₂)** around the measuring tube's longitudinal axis and flexural vibrations of the fourth measuring tube **(18₁, 18₂)** around the measuring tube's longitudinal axis, said vibrations being mirror-inverted in relation to the third measuring tube **(18₁, 18₂).**

7. Measuring system as claimed in Claim 6,
- wherein the tube arrangement is designed in such a way that at least a natural frequency of the natural flexural vibrations of the first measuring tube, particularly such vibrations in a basic flexural vibration mode that features one single antinode, is equal to a natural frequency of natural torsional vibrations of the first measuring tube, particularly such vibrations in a basic torsional vibration mode that features one single antinode, and in such a way that at least a natural frequency of the natural flexural vibrations of the second measuring tube, particularly such vibrations in a basic flexural vibration mode that features one single antinode, is equal to a natural frequency of natural torsional vibrations of the second measuring tube, particularly such vibrations in a basic torsional vibration mode that features one single antinode, and
- wherein each of the four measuring tubes, excited by the exciter arrangement, produces flexural vibrations, particularly in a basic flexural vibration mode that features one single antinode, respectively coupled with torsional vibrations of the same frequency, particularly torsional vibrations in a basic torsional vibration mode that features one single antinode.

8. Measuring system as claimed in one of the previous claims, wherein the first measuring tube has a caliber that is equal to a caliber of the second measuring tube, particularly also equal to a caliber of the third measuring tube and also equal to a caliber of the fourth measuring tube.

9. Measuring system as claimed in the previous claim in connection with Claim 5, wherein the first vibration exciter (5₁, 5₂) is designed and arranged in the transducer in such a way that the line of action with which the exciter forces generated by the first vibration exciter (5₁, 5₂) are introduced in the tube arrangement have a perpendicular distance to the third imaginary longitudinal section plane of the tube arrangement, which is greater than a quarter of the caliber of the first measuring tube, particularly greater than 35 % of the caliber of the first measuring tube and/or less than 200 % of the caliber of the first measuring tube, particularly less than 100 % of the caliber of the first measuring tube.

10. Measuring system as claimed in one of the previous claims, wherein the first driver signal has a multitude of signal components with signal frequencies that differ from one another, and wherein at least one of the signal components of the first driver signal - particularly a signal component that dominates in terms of a signal power - has a signal frequency corresponding to a natural frequency of a natural vibration mode of the tube arrangement, particularly a natural torsional vibration mode of the tube arrangement in which each of the four measuring tubes produces torsional vibrations.

11. Measuring system as claimed in one of the previous claims, wherein the transmitter electronics module feeds electrical exciter power into the exciter arrangement also using
a second electrical driver signal, supplied to the exciter arrangement, wherein said signal is variable and/or at least temporarily periodic, particularly with at least a signal frequency corresponding to a natural frequency of a natural vibration mode of the tube arrangement, particularly equal to the first driver signal with regard to at least a signal frequency, and/or phase-shifted in relation to the first driver signal, particularly with a variable maximum voltage level and/or a variable maximum current strength.

12. Measuring system as claimed in Claim 11,
- wherein the exciter arrangement at least temporarily converts the electrical excitation power, which depends particularly on a voltage level and a current strength also of the second driver signal and is supplied by the second driver signal, into torsional vibrations of the third measuring tube **(18₁),** particularly mirror-inverted in relation to the torsional vibrations of the first measuring tube (18₁) and into torsional vibrations of the fourth measuring tube (**18₂**), which are particularly also mirror-inverted in relation to the torsional vibrations of the third measuring tube (**18₁**), particularly also in relation to the torsional vibrations of the second measuring tube (18₂), particularly in such a way that
a central tube segment of the third measuring tube produces rotational vibrations around an imaginary axis of torsional vibration that is perpendicular to a cross-section of said tube segment, and a central tube segment of the fourth measuring tube produces rotational vibrations around an imaginary axis of torsional vibration that is perpendicular to a cross-section of said tube segment, and/or in such a way that each of the four measuring tubes produces torsional vibrations in a basic torsional vibration mode that features one single antinode; and/or
- wherein the second driver signal has a multitude of signal components with signal frequencies that differ from one another, and wherein at least one of the signal components of the second driver signal - particularly a signal component that dominates in terms of a signal power - has a signal frequency corresponding to a natural frequency of a natural vibration mode of the tube arrangement, particularly a natural torsional vibration mode of the tube arrangement in which each of the four measuring tubes produces torsional vibrations.

13. Measuring system as claimed in one of the Claims 4 to 12, wherein the exciter arrangement further comprises a second vibration exciter, particularly electrodynamic and/or identical in design to the first vibration exciter, acting particularly in a differential manner on the third and fourth measuring tube, said exciter being designed to convert electrical exciter power which is fed into the exciter arrangement into mechanical exciter forces, said forces being variable and/or periodic and causing the vibrations of the third measuring tube **(18₁)** and the torsional vibrations of the fourth measuring tube **(18₂)** that are mirror-inverted in relation to the torsional vibrations of the third measuring tube (**18₁**), particularly with at least a signal frequency that corresponds to a natural frequency of a natural vibration mode of the tube arrangement.

14. Measuring system as claimed in Claim 13,
- wherein the second vibration exciter (19₁) has a permanent magnet at least supported on the third measuring tube (18₁) particularly by means of a coupler element at least fixed on the third measuring tube and acting as a lever, said coupler element being designed to produce torsional moments acting on the third measuring tube, and a solenoid through which the magnetic field of the permanent magnet passes, supported at least on the fourth measuring tube (**18₂**), particularly by means of a coupler element at least fixed on the fourth measuring tube and acting as a lever, said coupler element being designed to produce torsional moments acting on the fourth measuring tube; and/or
- wherein the second vibration exciter **(52)** is placed in the transducer on a side of the third imaginary longitudinal section plane of the tube arrangement that faces away from the first vibration exciter.

15. Measuring system as claimed in Claim 11 in connection with Claim 13 or a claim dependent thereon, wherein the second driver signal is supplied to the second vibration exciter (19₂), particularly in such a way that a second exciter current, which is driven by a variable second exciter voltage that is provided by the second driver signal, flows through the solenoid of said exciter.

16. Measuring system as claimed in one of the Claims 13 to 14 each in connection with Claim 4 or a claim dependent thereon, wherein the second vibration exciter (5₁,5₂)
converts an electrical exciter power, supplied by means of the second driver signal, said power being converted in the exciter into exciter forces, particularly periodic forces, which serve to excite vibrations of the measuring tubes, particularly mirror-inverted torsional vibrations of the third and fourth measuring tube or mirror-inverted flexural/torsional vibrations of the third and fourth measuring tube, said forces being introduced in the tube arrangement along a line of action spaced at a distance from the third imaginary longitudinal section plane and at least approximately parallel to said plane, particularly also essentially parallel to the line of action of the exciter forces generated using the first vibration exciter and/or being essentially perpendicular to the measuring tube longitudinal axis of the third measuring tube and to the measuring tube longitudinal axis of the fourth measuring tube.

17. Measuring system as claimed in the previous claims in connection with Claim 4 or a claim dependent thereon, wherein the tube arrangement has an imaginary cross-sectional plane - which is perpendicular to the third imaginary longitudinal section plane - wherein the line of action of the exciter forces generated by the first vibration exciter extends on said plane and the line of action of the exciter forces generated by the second vibration exciter extends on said plane.

18. Measuring system as claimed in one of the Claims 16 to 18, wherein the exciter arrangement causes vibrations of the measuring tubes, particularly mirror-inverted torsional vibrations of the third and fourth measuring tube or mirror-inverted flexural/torsional vibrations of the third and fourth measuring tube, in that an exciter force generated by the second vibration exciter and acting on the third measuring tube is opposite to, particularly mirror-inverted in relation to, an exciter force simultaneously generated by the second vibration exciter and acting on the fourth measuring tube.

19. Measuring system as claimed in the previous claim, wherein the exciter arrangement causes mirror-inverted torsional vibrations, particularly mirror-inverted flexural/torsional vibrations, of the measuring tubes, in that
- the exciter force generated using the first vibration exciter and acting on the first measuring tube is opposite to the exciter force simultaneously generated using the second vibration exciter and acting on the third measuring tube
- the exciter force generated using the first vibration exciter and acting on the second measuring tube is opposite to the exciter force simultaneously generated using the second vibration exciter and acting on the fourth measuring tube.

20. Measuring system as claimed in one of the previous claims, wherein the transmitter electronics module generates a measured value representing the viscosity of the flowing medium and/or the Reynolds number of the flowing medium using an electrical exciter power, which is converted in the exciter arrangement, particularly at least partially converted into torsional vibrations of the measuring tubes or at least partially into torsional/flexural vibrations of the measuring tubes and in particular being dependent on a voltage level and a current strength of the first driver signal.

21. Measuring system as claimed in one of the previous claims, wherein the transducer further comprises a sensor arrangement (5) particularly formed by a first vibration sensor (5₁) and a second vibration sensor (5₂) which is identical in design to the first sensor, said sensor arrangement being designed to measure, particularly in a differential manner, mechanical vibrations, particularly torsional vibrations or torsional/flexural vibrations, of the measuring tubes (18₁, 18₂, 18₃, 18₄) and to generate at least a first vibration signal representing mechanical vibrations, particularly torsional vibrations or torsional/flexural vibrations, of the measuring tubes.

22. Measuring system as claimed in Claim 20 and 21,
- wherein the first vibration signal delivered by the sensor arrangement at least partially represents torsional vibrations of the first measuring tube (18₁), particularly torsional vibrations of the first measuring tube (18₁) in relation to mirror-inverted torsional vibrations of the second measuring tube (18₁); and/or
- wherein the transmitter electronics module generates the measured value representing the viscosity of the flowing medium and/or a measured value representing the Reynolds number of the flowing medium using the first vibration signal, particularly using a signal voltage and/or signal frequency of the first vibration signal.

23. (Modified) measuring system as claimed in one of the Claims 21 to 22, wherein the sensor arrangement comprises:
- a first vibration sensor (5₁), particularly electrodynamic and/or placed in the transducer on the inlet side, said sensor being designed to measure, particularly in a differential manner, mechanical vibrations, particularly on the inlet side, particularly torsional vibrations or torsional/flexural vibrations, of the measuring tubes (18₁, 18₂, 18₃, 18₄) and to generate the first vibration signal;
- a second vibration sensor (5₂), particularly electrodynamic and/or identical in design to the first vibration sensor and/or being at the same distance as the first vibration sensor from the first vibration exciter and/or placed in the transducer on a side of the third imaginary longitudinal section plane of the tube arrangement facing away from the first vibration sensor and/or a second vibration sensor (5₂) placed in the transducer on the outlet side, particularly being designed to measure, particularly in a differential manner, mechanical vibrations, particularly on the outlet side, particularly torsional vibrations or torsional/flexural vibrations, of the measuring tubes (18₁, 18₂, 18₃, 18₄) and for the generation of at least a second vibration signal representing mechanical vibrations, particularly torsional vibrations or torsional/flexural vibrations, of the measuring tubes;
- a third vibration sensor **(5₂),** particularly electrodynamic and/or identical in design to the first vibration sensor and/or placed in the transducer on a side facing away from the first vibration sensor of the third imaginary longitudinal section plane of the tube arrangement, said sensor particularly being designed to measure, particularly in a differential manner, mechanical vibrations, particularly torsional vibrations or torsional/flexural vibrations, of the measuring tubes (18₁, 18₂, 18₃, 18₄); and
- a fourth vibration sensor **(5₂),** particularly electrodynamic and/or identical in design to the first vibration sensor and/or placed in the transducer on a side facing away from the first vibration sensor of the third imaginary longitudinal section plane of the tube arrangement, said sensor particularly being designed to measure, particularly in a differential manner, mechanical vibrations, particularly torsional vibrations or torsional/flexural vibrations, of the measuring tubes (18₁, 18₂, 18₃, 18₄).

24. Measuring system as claimed in Claim 20 in connection with Claim 23,
- wherein the transmitter electronics module generates the measured value representing the viscosity of the flowing medium and/or a measured value representing the Reynolds number of the flowing medium using the second vibration signal, particularly using a signal voltage and/or a signal frequency of the second vibration signal; and/or
- wherein the transmitter electronics module generates the measured value representing the viscosity of the flowing medium and/or a measured value representing the Reynolds number of the flowing medium using the third vibration signal, particularly using a signal voltage and/or a signal frequency of the third vibration signal, and using the fourth vibration signal, particularly using a signal voltage and/or a signal frequency of the fourth vibration signal.

25. Measuring system as claimed in one of the Claims 2 to 24, further comprising:
- a first coupler element (25₁) of the first type, particularly in the form of a plate, fixed on both the first measuring tube and on the third measuring tube, but otherwise on none of the other measuring tubes, said element being designed to support components of the first vibration exciter, particularly a solenoid or a permanent magnet, and to introduce an exciter force, generated using the first vibration exciter, into the first measuring tube and/or to convert an exciter force, generated using the first vibration exciter, into a torsional moment acting on the first measuring tube and a torsional moment acting on the third measuring tube, as well as
- a second coupler element (25₂) of the first type, particularly in the form of a plate and/or identical in design to the first coupler element (25₁) of the first type and/or situated opposite the first coupler element, said element being designed to support components of the first vibration exciter, particularly a solenoid or a permanent magnet, and to introduce an exciter force, generated using the first vibration exciter, into the second measuring tube and/or to convert an exciter force, generated using the first vibration exciter, into a torsional moment acting on the second measuring tube and a torsional moment acting on the fourth measuring tube.

26. Measuring system as claimed in Claim 25 in connection with Claim 13 or a claim dependent thereon, wherein both the first vibration exciter (5₁) and the second vibration exciter (5₂) are supported, respectively, on the first and the second coupler element (25₁, 25₂) of the first type, particularly in such a way that a minimum distance between the first and second vibration exciter (5₁, 5₂) is more than double an outer diameter of the first measuring tube (18₁).

27. Measuring system as claimed in one of the Claims 25 to 27, each in connection with Claim 3 or a claim dependent thereon, wherein the permanent magnet of the first vibration exciter (19₁) is fixed on the first coupler element (25₁) of the first type, particularly on a distal first end of the first coupler element (25₁) of the first type, which is at a distance from the first measuring tube, and the solenoid of the first vibration exciter (5₁) is fixed on the second coupler element (25₂) of the first type, particularly on a distal first end of the second coupler element (25₂) of the first type, which is at a distance from the second measuring tube, particularly in such a way that the first coupler element (25₁) of the first type acts as a lever that converts an exciter force generated by the first vibration exciter at least partially into a torsional moment that produces the torsional vibrations of the first measuring tube, and in that the second coupler element (25₂) of the first type acts as a lever that converts an exciter force generated by the first vibration exciter at least partially into a torsional moment that produces the torsional vibrations of the second measuring tube.

28. Measuring system as claimed in Claim 25 or a claim dependent thereon, each in connection with Claim 17 or a claim dependent thereon, wherein the first and the second coupler element (25₁, 25₂) of the first type are located in the transducer in such a way that both a center of mass of the first coupler element (25₁, 25₂) of the first type and a center of mass of the second coupler element (25₁, 25₂) of the first type are located within the cross-sectional plane on which the line of action of the exciter forces generated by the first vibration exciter extends and on which the line of action of the exciter forces generated by the second vibration exciter extends.

29. Measuring system as claimed in one of the previous claims, wherein, apart from the four measuring tubes, the transducer does not have any other measuring tube that serves to conduct flowing medium and vibrates during operation.

30. Use of a measuring system as claimed in one of the previous claims for the measurement of a mass flow and/or a density and/or a viscosity and/or a Reynolds number of a medium flowing through a process pipe.

## Revendications

1. Système de mesure destiné à un produit s'écoulant dans une conduite, notamment un liquide aqueux, une boue, une pâte ou une autre substance apte à s'écouler, lequel système de mesure, notamment conçu en tant qu'appareil de mesure compact et/ou en tant que débitmètre massique Coriolis ou viscosimètre, comprend :
-- un transducteur du type à vibrations, parcouru par le produit en fonctionnement, destiné à générer des signaux de vibrations dépendant d'une viscosité du produit en écoulement et/ou d'un nombre de Reynolds du produit en écoulement
-- un boîtier de capteur (7₁), notamment pour l'essentiel tubulaire et/ou cylindrique circulaire en son extérieur, à partir duquel sont formées une première extrémité de boîtier côté entrée au moyen d'un premier de diviseur débit (20₁) côté entrée, comportant exactement quatre ouvertures d'écoulement (20_{1A}, 20_{1B}, 20_{1C}, 20_{1D}) espacées les unes par rapport aux autres, notamment cylindriques circulaires ou coniques, et une deuxième extrémité de boîtier côté sortie au moyen d'un deuxième de diviseur débit (20₂) côté sortie, comportant exactement quatre ouvertures d'écoulement (20_{2A}, 20_{2B}, 20_{2C}, 20_{2D}) espacées les unes par rapport aux autres, notamment cylindriques circulaires ou coniques ;
- exactement quatre tubes de mesure (18₁, 18₂, 18₃, 18₄) droits, formant des chemins d'écoulement couplés en parallèle et raccordés aux diviseurs de débit (20₁, 20₂), notamment de conception identique, lesquels tubes sont notamment fixés de façon apte à vibrer dans le boîtier de capteur et/ou de conception identique et/ou au moins parallèles par paires les uns par rapport aux autres, lesquels tubes sont destinés à guider le produit en écoulement, parmi lesquels
-- un premier tube de mesure (18₁), notamment cylindrique circulaire, débouche avec une première extrémité de tube de mesure côté entrée dans une première ouverture d'écoulement (20_{1A}) du premier diviseur de débit (20₁) et avec une deuxième extrémité de tube de mesure côté sortie dans une première ouverture d'écoulement (20_{2A}) du deuxième diviseur de débit (20₂),
-- un deuxième tube de mesure (18₂), notamment cylindrique circulaire, débouche avec une deuxième extrémité de tube de mesure côté entrée dans une deuxième ouverture d'écoulement (20_{1B}) du premier diviseur de débit (20₁) et avec une deuxième extrémité de tube de mesure côté sortie dans une deuxième ouverture d'écoulement (20_{2B}) du deuxième diviseur de débit (20₂),
-- un troisième tube de mesure (18₃), notamment cylindrique circulaire, débouche avec une première extrémité de tube de mesure côté entrée dans une troisième ouverture d'écoulement (20_{1C}) du premier diviseur de débit (20₁) et avec une deuxième extrémité de tube de mesure côté sortie dans une troisième ouverture d'écoulement (20_{2C}) du deuxième diviseur de débit (20₂),
-- un quatrième tube de mesure (18₄), notamment cylindrique circulaire, débouche avec une première extrémité de tube de mesure côté entrée dans une quatrième ouverture d'écoulement (20_{1D}) du premier diviseur de débit (20₁) et avec une deuxième extrémité de tube de mesure côté sortie dans une quatrième ouverture d'écoulement (20_{2D}) du deuxième diviseur de débit (20₂) ; et
- un circuit d'excitation (4) électromécanique, notamment constitué d'excitateurs de vibrations (5₁, 5₂), lequel circuit est destiné à générer et à maintenir les vibrations mécaniques, notamment les vibrations de torsion ou les vibrations de torsion / flexion, des quatre tubes de mesure (18₁, 18₂, 18₃, 18₄) ; ainsi que
- une électronique de transmetteur couplée électriquement avec le transducteur, laquelle électronique est destinée à commander le transducteur et à exploiter les signaux de vibration fournis par le transducteur,
- l'électronique de transmetteur fournissant au circuit d'excitation une puissance d'excitation électrique au moyen d'un premier signal d'attaque électrique, acheminé au circuit d'excitation, lequel signal est variable et/ou temporairement périodique, notamment avec au moins une fréquence de signal correspondant à une fréquence propre d'un mode de vibration naturel de l'agencement de tubes, notamment avec une valeur de tension maximale variable et/ou une valeur d'intensité maximale variable ; et
- le circuit d'excitation convertissant la puissance d'excitation électrique, notamment dépendant d'une valeur de tension et d'une valeur d'intensité du premier signal d'attaque, au moins temporairement et au moins partiellement à la fois en vibrations de torsion du premier tube des mesure (18₁) et en des vibrations de torsion du deuxième tube de mesure (18₂) diamétralement opposées aux vibrations de torsion du premier tube de mesure (18₁), notamment de telle sorte qu'un segment de tube médian du premier tube de mesure exécute des vibrations de rotation autour d'un axe de vibration de torsion imaginaire perpendiculaire à une section du même segment de tube, et un segment de tube médian du deuxième tube de mesure exécute des vibrations de rotation autour d'un axe de vibration de torsion imaginaire perpendiculaire à une section du même segment de tube, tout comme un segment de tube médian du troisième tube de mesure exécute des vibrations de rotation autour d'un axe de vibration de torsion imaginaire perpendiculaire à une section du même segment de tube et un segment de tube médian du quatrième tube de mesure exécute des vibrations de rotation autour d'un axe de vibration de torsion imaginaire perpendiculaire à une section du même segment de tube, et/ou de telle sorte que chacun des tubes de mesure exécute simultanément des vibrations de torsion dans un mode de base de vibration de torsion présentant un unique ventre de vibration.

2. Système de mesure selon l'une des revendications précédentes, pour lequel le circuit d'excitation comporte au moins un premier excitateur de vibrations, notamment électrodynamique, agissant notamment de façon différentielle sur le premier et sur le deuxième tube de mesure, lequel excitateur est destiné à convertir la puissance d'excitation électrique fournie au circuit d'excitation en des forces d'excitation mécaniques, variables et/ou périodiques, générant les vibrations de torsion du premier tube de mesure (18₁) et les vibrations de torsion du deuxième tube de mesure (18₂) diamétralement opposées aux vibrations de torsion du premier tube de mesure (18₁), notamment avec au moins une fréquence de signal correspondant à une fréquence propre d'un mode de vibration naturel de l'agencement de tubes.

3. Système de mesure selon la revendication 2,
- pour lequel le premier excitateur de vibrations (19₁) comporte un aimant permanent au moins maintenu sur le premier tube de mesure (18₁) notamment au moyen d'un élément de couplage au moins fixé sur le premier tube de mesure et servant de bras de levier, lequel élément de couplage est destiné à générer des moments de torsion agissant sur le premier tube de mesure, et une bobine cylindrique balayée par le champ de l'aimant permanent, maintenue au moins sur le deuxième tube de mesure (18₂), notamment au moyen d'un élément de couplage au moins fixé sur le deuxième tube de mesure et servant de bras de levier, lequel élément de couplage est destiné à générer des moments de torsion agissant sur le deuxième tube de mesure ; et/ou
- pour lequel le premier signal d'attaque est acheminé au premier excitateur de vibrations (19₁), notamment de telle sorte que sa bobine cylindrique est parcourue par un premier courant d'excitation généré par une première tension d'excitation variable, mise à disposition au moyen du premier signal d'attaque.

4. Système de mesure selon l'une des revendications 2 à 3,
- pour lequel l'agencement de tubes présente un premier plan en coupe longitudinale imaginaire (XZ₁), dans lequel passent à la fois un axe longitudinal du premier tube de mesure, qui relie de façon imaginaire sa première et sa deuxième extrémité de tube de mesure, et un axe longitudinal du deuxième tube de mesure, qui relie de façon imaginaire sa première et sa deuxième extrémité de tube de mesure et qui est parallèle à l'axe longitudinal du premier tube de mesure,
- pour lequel l'agencement de tubes présente un deuxième plan en coupe longitudinale imaginaire (XZ₂) espacé du premier plan en coupe longitudinale imaginaire (XZ₁) et parallèle à ce dernier, deuxième plan dans lequel passent à la fois un axe longitudinal du troisième tube de mesure, qui relie de façon imaginaire sa première et sa deuxième extrémité de tube de mesure, et un axe longitudinal du quatrième tube de mesure, qui relie de façon imaginaire sa première et sa deuxième extrémité de tube de mesure et qui est parallèle à l'axe longitudinal du premier tube de mesure.

5. Système de mesure selon la revendication 4,
- pour lequel l'agencement de tubes présente un troisième plan en coupe longitudinale imaginaire (**XZ₃**) situé entre le premier plan en coupe longitudinale (XZ₁) et le deuxième plan en coupe longitudinale (XZ₂), notamment respectivement espacé du premier et du deuxième plan en coupe longitudinale imaginaire (XZ₁, XZ₂) et parallèle à ces derniers, et
- pour lequel le premier excitateur de vibrations (5₁, 5₂) convertit une puissance d'excitation électrique fournie notamment au moyen du premier signal d'attaque, laquelle puissance est convertie dans l'excitateur, en forces d'excitation, notamment périodiques, servant pour l'excitation en vibrations des tubes de mesure, notamment des vibrations de torsion diamétralement opposées du premier et du deuxième tube de mesure ou des vibrations de flexion / torsion diamétralement opposées, lesquelles forces sont produites dans l'agencement de tubes le long d'une ligne d'action espacée du troisième plan en coupe longitudinale imaginaire (**XZ₃**), notamment également espacée du premier plan en coupe longitudinale imaginaire (XZ₁) et au moins approximativement parallèle à celui-ci, notamment également pour l'essentiel perpendiculaire à l'axe longitudinal du premier tube de mesure et à l'axe longitudinal du deuxième tube de mesure, notamment de telle sorte qu'une force d'excitation générée au moyen du premier excitateur de vibrations et agissant sur le premier tube de mesure est opposée, notamment diamétralement opposée, à une force d'excitation générée au moyen du premier excitateur de vibrations et agissant sur le deuxième tube de mesure.

6. Système de mesure selon l'une des revendications précédentes, pour lequel le circuit d'excitation génère, notamment simultanément aux vibrations de torsion des tubes de mesure, à la fois des vibrations de flexion du premier tube de mesure (18₁, 18₂), autour de son axe longitudinal de tube de mesure, et des vibrations de flexion du deuxième tube de mesure (18₁, 18₂), autour de son axe longitudinal de tube de mesure, lesquelles vibrations sont diamétralement opposées aux vibrations de flexion du premier tube de mesure (18₁, 18₂), ainsi que des vibrations de flexion du troisième tube de mesure **(18₁, 18₂),** autour de son axe longitudinal de tube de mesure, et des vibrations de flexion du quatrième tube de mesure **(18₁, 18₂),** autour de son axe longitudinal de tube de mesure, lesquelles vibrations sont diamétralement opposées aux vibrations de flexion du troisième tube de mesure **(18₁, 18₂**).

7. Système de mesure selon la revendication 6,
- pour lequel l'agencement de tubes est conçu de telle sorte qu'au moins une fréquence propre des vibrations de flexion naturelles du premier tube de mesure, notamment de telles vibrations dans un mode de base de vibrations de flexion présentant un unique ventre de vibration, est égale à une fréquence propre de vibrations de torsion naturelles du premier tube de mesure, notamment de telles vibrations dans un mode de base de vibrations de torsion présentant un unique ventre de vibration, et de telle sorte qu'au moins une fréquence propre des vibrations de flexion naturelles du deuxième tube de mesure, notamment de telles vibrations dans un mode de base de vibrations de flexion présentant un unique ventre de vibration, est égale à une fréquence propre de vibrations de torsion naturelles du deuxième tube de mesure, notamment de telles vibrations dans un mode de base de vibrations de torsion présentant un unique ventre de vibration, et
- pour lequel chacun des quatre tubes de mesure, excités par le circuit d'excitation, exécute des vibrations de flexion, notamment des vibrations de flexion dans un mode de vibrations de flexion présentant un unique ventre de vibration, couplés avec des vibrations de torsion respectivement de même fréquence, notamment des vibrations de torsion dans un mode de base de vibrations de torsion présentant un unique ventre de vibrations.

8. Système de mesure selon l'une des revendications précédentes, pour lequel le premier tube de mesure présente un calibre égal à un calibre du deuxième tube de mesure, notamment aussi égal à un calibre du troisième tube de mesure ainsi qu'égal à un calibre du quatrième tube de mesure.

9. Système de mesure selon la revendication précédente en relation avec la revendication 5, pour lequel le premier excitateur de vibrations (5₁, 5₂) est conçu et disposé dans le transducteur de telle sorte que la ligne d'action, avec laquelle les forces d'excitation générées par le premier excitateur de vibrations (5₁, 5₂) sont produites dans l'agencement de tubes, présente une distance perpendiculaire au troisième plan en coupe longitudinale imaginaire de l'agencement de tubes, qui est supérieure à un quart du calibre du premier tube de mesure, notamment supérieure à 35 % du calibre du premier tube de mesure et/ou inférieure à 200 % du calibre du premier tube de mesure, notamment inférieure à 100 % du calibre du premier tube de mesure.

10. Système de mesure selon l'une des revendications précédentes, pour lequel le premier signal d'attaque présente un grand nombre de composantes de signal avec des fréquences de signal différentes les unes des autres, et pour lequel au moins l'une des composantes de signal, notamment une composante de signal dominante en terme de puissance de signal, du premier signal d'attaque présente une fréquence de signal correspondant à une fréquence propre d'un mode de vibration naturel de l'agencement de tubes, notamment d'un mode de vibrations de torsion naturel de l'agencement de tubes, dans lequel chacun des quatre tubes de mesure exécute des vibrations de torsion.

11. Système de mesure selon l'une des revendications précédentes, pour lequel l'électronique de transmetteur fournit au circuit d'excitation une puissance d'excitation électrique également au moyen d'un deuxième signal d'attaque électrique, variable et/ou au moins temporairement périodique, acheminé au circuit d'excitation, notamment avec une fréquence de signal correspondant à une fréquence propre d'un mode de vibration naturel de l'agencement de tubes, notamment avec une fréquence de signal égale à celle du premier signal d'attaque et/ou déphasée par rapport au premier signal d'attaque, notamment avec une valeur de tension maximale variable et/ou une valeur d'intensité maximale variable.

12. Système de mesure selon la revendication 11,
- pour lequel le circuit d'excitation convertit, au moyen du deuxième signal d'attaque, la puissance d'excitation électrique, notamment dépendant d'une valeur de tension et d'une valeur d'intensité également du deuxième signal d'attaque, au moins temporairement en vibrations de torsion du troisième tube de mesure (**18₁**), notamment diamétralement opposées aux vibrations de torsion du premier tube de mesure (18₁), et en vibrations de torsion du quatrième tube de mesure **(18₂)** diamétralement opposées aux vibrations de torsion du troisième tube de mesure (**18₁**), notamment également aux vibrations de flexion du deuxième tube de mesure (18₂), notamment de telle sorte qu'un segment de tube médian du troisième tube de mesure exécute des vibrations de rotation autour d'un axe de vibration de torsion imaginaire perpendiculaire à une section du même segment de tube, et un segment de tube médian du quatrième tube de mesure exécute des vibrations de rotation autour d'un axe de vibration de torsion imaginaire perpendiculaire à une section du même segment de tube, et/ou de telle sorte que chacun des quatre tubes de mesure exécute des vibrations de torsion dans un mode de base de vibration de torsion présentant un unique ventre de vibration ; et/ou
- pour lequel le deuxième signal d'attaque présente un grand nombre de composantes de signal avec des fréquences de signal différentes les unes des autres, et pour lequel au moins l'une des composantes de signal, notamment une composante de signal dominante en terme de puissance de signal, du deuxième signal d'attaque présente une fréquence de signal correspondant à une fréquence propre d'un mode de vibration naturel de l'agencement de tubes, notamment d'un mode de vibrations de torsion naturel de l'agencement de tubes, dans lequel chacun des quatre tubes de mesure exécute des vibrations de torsion.

13. Système de mesure selon l'une des revendications 4 à 12, pour lequel le circuit d'excitation comprend en outre un deuxième excitateur de vibrations, notamment électrodynamique et/ou de conception identique au premier excitateur de vibrations, agissant notamment de façon différentielle sur le troisième et sur le quatrième tube de mesure, lequel excitateur est destiné à convertir la puissance d'excitation électrique fournie au circuit d'excitation en des forces d'excitation mécaniques, variables et/ou périodiques, générant les vibrations du troisième tube de mesure **(18₁)** et les vibrations de torsion du quatrième tube de mesure **(18₂)** diamétralement opposées aux vibrations de torsion du troisième tube de mesure (**18₁**), notamment avec au moins une fréquence de signal correspondant à une fréquence propre d'un mode de vibration naturel de l'agencement de tubes.

14. Système de mesure selon la revendication 13,
- pour lequel le deuxième excitateur de vibrations (19₁) comporte un aimant permanent au moins maintenu sur le troisième tube de mesure (**18₁**), notamment au moyen d'un élément de couplage au moins fixé sur le troisième tube de mesure et servant de bras de levier, lequel élément de couplage est destiné à générer des moments de torsion agissant sur le troisième tube de mesure, et une bobine cylindrique balayée par le champ de l'aimant permanent, maintenue au moins sur le quatrième tube de mesure (**18₂**), notamment au moyen d'un élément de couplage au moins fixé sur le quatrième tube de mesure et servant de bras de levier, lequel élément de couplage est destiné à générer des moments de torsion agissant sur le quatrième tube de mesure ; et/ou
- pour lequel le deuxième excitateur de vibrations **(52)** est placé dans le transducteur, sur un côté opposé au premier excitateur de vibrations, du troisième plan en coupe longitudinale imaginaire de l'agencement de tubes.

15. Système de mesure selon la revendication 11 en relation avec la revendication 13 ou l'une des revendications en dépendant, pour lequel le deuxième signal d'attaque est acheminé au deuxième excitateur de vibrations (19₂), notamment de telle sorte que sa bobine cylindrique est parcourue par un deuxième courant d'excitation généré par une deuxième tension d'excitation variable, mise à disposition au moyen du deuxième signal d'attaque.

16. Système de mesure selon l'une des revendications 13 à 14, respectivement en relation avec la revendication 4 ou l'une des revendications en dépendant, pour lequel le deuxième excitateur de vibrations (5₁, 5₂) convertit une puissance d'excitation électrique fournie au moyen du deuxième signal d'attaque, laquelle puissance est convertie en forces d'excitation, notamment périodiques, servant pour l'excitation en vibrations des tubes de mesure, notamment des vibrations de torsion diamétralement opposées du troisième et du quatrième tube de mesure ou des vibrations de flexion / torsion diamétralement opposées du troisième et du quatrième tube de mesure, lesquelles forces sont produites dans l'agencement de tubes le long d'une ligne d'action espacée du troisième plan en coupe longitudinale imaginaire et au moins approximativement parallèle à celui-ci, notamment également pour l'essentiel parallèle à la ligne d'action des forces d'excitation générée au moyen du premier excitateur de vibrations et/ou pour l'essentiel perpendiculaire à l'axe longitudinal du troisième tube de mesure et à l'axe longitudinal du quatrième tube de mesure.

17. Système de mesure selon la revendication précédente en relation avec la revendication 4 ou l'une des revendications en dépendant, pour lequel l'agencement de tubes présente un plan en coupe transversale imaginaire - perpendiculaire au troisième plan en coupe longitudinale imaginaire - dans lequel passent à la fois la ligne d'action des forces d'excitation générées par le premier excitateur de vibrations et la ligne d'action des forces d'excitation générées par le deuxième excitateur de vibrations.

18. Système de mesure selon l'une des revendications 16 à 18, pour lequel le circuit d'excitation produit des vibrations des tubes de mesure, notamment des vibrations de torsion diamétralement opposées du troisième et du quatrième tube de mesure ou des vibrations de flexion / torsion diamétralement opposées du troisième et du quatrième tube de mesure, en ce qu'une force d'excitation générée au moyen du deuxième excitateur de vibrations et agissant sur le troisième tube de mesure est opposée, notamment diamétralement opposée, à une force d'excitation générée simultanément au moyen du deuxième excitateur de vibrations et agissant sur le quatrième tube de mesure.

19. Système de mesure selon la revendication précédente, pour lequel le circuit d'excitation produit des vibrations de torsion diamétralement opposées, notamment des vibrations de flexion / torsion diamétralement opposées, des tubes de mesure, en ce
- qu'une force d'excitation générée au moyen du premier excitateur de vibrations et agissant sur le premier tube de mesure est opposée à la force d'excitation générée simultanément au moyen du deuxième excitateur de vibrations et agissant sur le troisième tube de mesure
- qu'une force d'excitation générée au moyen du premier excitateur de vibrations et agissant sur le deuxième tube de mesure est opposée à la force d'excitation générée simultanément au moyen du deuxième excitateur de vibrations et agissant sur le quatrième tube de mesure.

20. Système de mesure selon l'une des revendications précédentes, pour lequel l'électronique de transmetteur génère, au moyen d'une puissance d'excitation électrique convertie, dans le circuit d'excitation, notamment au moins partiellement en vibrations de torsion des tubes de mesure ou au moins partiellement en vibrations de torsion / de flexion des tubes de mesure, notamment dépendant d'une valeur de tension et d'une valeur d'intensité du premier signal d'attaque, une valeur mesurée représentant la viscosité du produit en écoulement et/ou une valeur mesurée représentant le nombre de Reynolds du produit en écoulement.

21. Système de mesure selon l'une des revendications précédentes, pour lequel le transducteur comprend en outre un agencement de capteurs (5) constitué d'un premier capteur de vibrations (5₁) et d'un deuxième capteur de vibrations (5₂) de conception identique au premier capteur, lequel agencement de capteurs est destiné à la mesure, notamment différentielle, de vibrations mécaniques, notamment de vibrations de torsion ou de vibrations de torsion / flexion des tubes de mesure (18₁, 18₂, 18₃, 18₄) et à la génération d'au moins un premier signal de vibrations représentant les vibrations mécaniques, notamment les vibrations de torsion ou les vibrations de torsion / flexion des tubes de mesure.

22. Système de mesure selon la revendication 20 et 21,
- pour lequel le premier signal de vibrations délivré par l'agencement de capteurs représente au moins partiellement les vibrations de torsion du premier tube de mesure notamment les vibrations de torsion du premier tube de mesure (18₁) par rapport aux vibrations de torsion diamétralement opposées du deuxième tube de mesure (18₂) ; et/ou
- pour lequel l'électronique de transmetteur génère la valeur mesurée représentant la viscosité du produit en écoulement et/ou une valeur mesurée représentant le nombre de Reynolds du produit en écoulement au moyen du premier signal de vibrations, notamment au moyen d'une tension de signal et/ou d'une fréquence de signal du premier signal de vibrations.

23. (Modifiée) Système de mesure selon l'une des revendications 21 à 22, pour lequel l'agencement de capteurs comprend :
- un premier capteur de vibrations (5₁), notamment électrodynamique et/ou placé coté entrée dans le transducteur, lequel capteur est destiné à la mesure, notamment différentielle, de vibrations mécaniques, notamment côté entrée, notamment de vibrations de torsion ou de vibrations de torsion / flexion des tubes de mesure (18₁, 18₂, 18₃, 18₄) et à la génération du premier signal de vibrations ;
- un deuxième capteur de vibrations (5₂), notamment électrodynamique et/ou de conception identique au premier capteur de vibrations et/ou à même distance qu'entre celle du premier capteur de vibrations et le premier excitateur de vibrations et/ou placé dans le transducteur sur un côté opposé au premier capteur de vibration du troisième plan en coupe longitudinale imaginaire de l'agencement de tubes et/ou placé côté sortie dans le transducteur, lequel capteur est destiné à la mesure, notamment différentielle, de vibrations mécaniques, notamment côté sortie, notamment de vibrations de torsion ou de vibrations de torsion / flexion des tubes de mesure (18₁, 18₂, 18₃, 18₄) et à la génération du deuxième signal de vibrations représentant notamment les vibrations de torsion ou les vibrations de torsion / flexion des tubes de mesure ;
- un troisième capteur de vibrations **(5₂),** notamment électrodynamique et/ou de conception identique au premier capteur de vibrations et/ou placé dans le transducteur sur un côté opposé au premier capteur de vibration du troisième plan en coupe longitudinale de l'agencement de tubes, lequel capteur est destiné à la mesure, notamment différentielle de vibrations mécaniques, notamment de vibrations de torsion ou de vibrations de torsion / flexion des tubes de mesure (18₁, 18₂, 18₃, 18₄) ; ainsi que
- un quatrième capteur de vibrations **(5₂),** notamment électrodynamique et/ou de conception identique au premier capteur de vibrations et/ou placé dans le transducteur sur un côté opposé au premier capteur de vibration du troisième plan en coupe longitudinale de l'agencement de tubes, lequel capteur est destiné à la mesure, notamment différentielle, de vibrations mécaniques, notamment de vibrations de torsion ou de vibrations de torsion / flexion des tubes de mesure (18₁, 18₂, 18₃, 18₄).

24. Système de mesure selon la revendication 20 en relation avec la revendication 23,
- pour lequel l'électronique de transmetteur génère la valeur mesurée représentant la viscosité du produit en écoulement et/ou une valeur mesurée représentant le nombre de Reynolds du produit en écoulement au moyen du deuxième signal de vibrations, notamment au moyen d'une tension de signal et/ou d'une fréquence de signal du deuxième signal de vibrations ; et/ou
- pour lequel l'électronique de transmetteur génère la valeur mesurée représentant la viscosité du produit en écoulement et/ou une valeur mesurée représentant le nombre de Reynolds du produit en écoulement au moyen du troisième signal de vibrations, notamment au moyen d'une tension de signal et/ou d'une fréquence de signal du troisième signal de vibrations, ainsi qu'au moyen du quatrième signal de vibrations, notamment au moyen d'une tension de signal et/ou d'une fréquence de signal du quatrième signal de vibrations.

25. Système de mesure selon l'une des revendications 2 à 24, comprenant en outre :
- un premier élément de couplage (25₁) de premier type, notamment en forme de plaque, fixé à la fois sur le premier tube de mesure et sur le troisième tube de mesure, mais à part çà sur aucun autre tube de mesure, lequel élément est destiné au maintien de composants du premier excitateur de vibrations, notamment d'une bobine cylindrique ou d'un aimant permanent, et pour le déclenchement d'une force d'excitation générée au moyen du premier excitateur de vibrations dans le premier tube de mesure et/ou pour la conversion d'une force d'excitation générée au moyen du premier excitateur de vibrations en un moment de torsion agissant sur le premier tube de mesure et en un moment de torsion agissant sur le troisième tube de mesure, ainsi que
- un deuxième élément de couplage (25₂) de premier type, notamment en forme de plaque et/ou de conception identique au premier élément de couplage (25₁) de premier type et/ou situé à l'opposé de celui-ci, lequel deuxième élément est fixé à la fois sur le deuxième tube de mesure et sur le troisième tube de mesure, mais à part çà sur aucun autre tube de mesure et est destiné au maintien de composants du premier excitateur de vibrations, notamment d'une bobine cylindrique ou d'un aimant permanent, et pour le déclenchement d'une force d'excitation générée au moyen du premier excitateur de vibrations dans le deuxième tube de mesure et/ou pour la conversion d'une force d'excitation générée au moyen du premier excitateur de vibrations en un moment de torsion agissant sur le deuxième tube de mesure et en un moment de torsion agissant sur le quatrième tube de mesure.

26. Système de mesure selon la revendication 25 en relation avec la revendication 13 ou l'une des revendications en dépendant, pour lequel à la fois le premier excitateur de vibrations (5₁) et le deuxième excitateur de vibrations (5₂) sont respectivement maintenus sur le premier et le deuxième élément de couplage (25₁, 25₂) de premier type, notamment de telle sorte qu'une distance minimale entre le premier et le deuxième excitateur de vibrations (5₁, 5₂) est égale à plus du double d'un diamètre extérieur du premier tube de mesure (18₁).

27. Système de mesure selon l'une des revendications 25 à 27, respectivement en relation avec la revendication 3 ou l'une des revendications en dépendant, pour lequel l'aimant permanent du premier excitateur de vibrations (19₁) est fixé sur le premier élément de couplage (25₁) de premier type, notamment sur une première extrémité distale - éloignée du premier tube de mesure - du premier élément de couplage (25₁) de premier type, et la bobine cylindrique du premier excitateur de vibrations (19₁) est fixée sur le deuxième élément de couplage (25₂) de premier type, notamment sur une première extrémité distale - éloignée du deuxième tube de mesure - du deuxième élément de couplage (25₂) de premier type, notamment de telle sorte que le premier élément de couplage (25₁) de premier type agit en tant que bras de levier, qui convertit une force d'excitation générée par le premier excitateur de vibrations au moins partiellement en un moment de torsion produisant les vibrations de torsion du premier tube de mesure, et en ce que le deuxième élément de couplage (25₂) de premier type agit en tant que bras de levier, qui convertit une force d'excitation générée par le premier excitateur de vibrations au moins partiellement en un moment de torsion produisant les vibrations de torsion du deuxième tube de mesure.

28. Système de mesure selon la revendication 25 ou l'une des revendications en dépendant, respectivement en relation avec la revendication 17 ou l'une des revendications en dépendant, pour lequel le premier et le deuxième élément de couplage (25₁, 25₂) de premier type sont placés dans le transducteur de telle sorte qu'à la fois un centre de gravité de masse du premier élément de couplage (25₁, 25₂) de premier type et un centre de gravité de masse du deuxième élément de couplage (25₁, 25₂) de premier type se situent dans le plan en coupe transversale, dans lequel passent à la fois la ligne d'action des forces d'excitation générées par le premier excitateur de vibrations et la ligne d'action des forces d'excitation générées par le deuxième excitateur de vibrations.

29. Système de mesure selon l'une des revendications précédentes, pour lequel le transducteur ne comporte, hormis les quatre tubes de mesure, aucun autre tube de mesure servant à guider le produit en écoulement et entrant en vibrations pendant le fonctionnement.

30. Utilisation d'un système de mesure selon l'une des revendications précédentes, lequel système est destiné à la mesure d'un débit massique et/ou d'une densité et/ou d'une viscosité et/ou d'un nombre de Reynolds d'un produit s'écoulant dans une conduite de process.
